# EUROPEAN PATENT SPECIFICATION

(11) **EP 1 357 792 B1**
(45) Date of publication and mention of the grant of the patent: **27.12.2006**
(21) Application number: 01952580.7
(22) Date of filing: 10.07.2001
(51) Int. Cl.: A01N 43/50, C02F 1/50

(54) **MICROBIOLOGICAL CONTROL IN AQUEOUS SYSTEMS**
MIKROBENBEKÄMPFUNG IN WÄSSRIGEN SYSTEMEN
REGULATION MICROBIOLOGIQUE DANS DES SYSTEMES AQUEUX

(30) Priority: 02.02.2001 US 775516; 06.02.2001 US 778228
(43) Date of publication of application: 05.11.2003
(73) Proprietor: ALBEMARLE CORPORATION, Baton Rouge, LA 70801-1765 (US)
(72) Inventor: HOWARTH, Jonathan, N., Modesto,California 95355 (US); NALEPA, Christopher, J., Baton Rouge, LA 70816 (US); SANDERS, Michael, J., Little Rock, Arkansas 72227 (US)
(74) Representative: UEXKÜLL & STOLBERG
(86) International application number: PCT/US2001/021702
(87) International publication number: WO 2002/062141

(56) References cited:
- WO-A-01/53209
- US-A- 4 537 697
- US-A- 4 767 542
- DATABASE WPI Section Ch, Week 198126 Derwent Publications Ltd., London, GB; Class C03, AN 1981-46909D XP002189527 & JP 56 053602 A (CHIYODA KAGAKU KENKYUSHO KK), 13 May 1981 (1981-05-13)
- DATABASE CA [Online] CHEMICAL ABSTRACTS SERVICE, COLUMBUS, OHIO, US; E.I.GONCHARUK ET AL.: "Toxicological-hygienic evaluation of a new bacteriocidal preparation, dibromodimethylhydantoin (dibromantine) used for water disinfection in swimming pools" retrieved from STN-INTERNATIONAL, accession no. 75-47759 CA XP002189525 & GIG. SANIT., vol. 36, no. 5, 1971, pages 96-99,
- PATENT ABSTRACTS OF JAPAN vol. 006, no. 041 (P-106), 13 March 1982 (1982-03-13) & JP 56 158333 A (TEIJIN CHEM), 7 December 1981 (1981-12-07)
- DATABASE WPI Section Ch, Week 199603 Derwent Publications Ltd., London, GB; Class D15, AN 1996-026614 XP002189528 & JP 07 299468 A (HAKUTO KK), 14 November 1995 (1995-11-14)
- DATABASE WPI Section Ch, Week 198801 Derwent Publications Ltd., London, GB; Class C02, AN 1988-004845 XP002189529 & JP 62 270506 A (KURITA WATER IND LTD), 24 November 1987 (1987-11-24)
- DATABASE WPI Section Ch, Derwent Publications Ltd., London, GB; Class D22, AN 1971-49726S XP002189530 & SU 277 157 A (CHEM OF DOMESTIC PRODUCTS)
- DATABASE BIOSIS [Online] BIOSCIENCES INFORMATION SERVICE, PHILADELPHIA, PA, US; D.E.WILLIAMS ET AL.: "BACTERICIDAL ACTIVITIES OF SELECTED ORGANIC N HALAMINES" retrieved from EPOQUE, accession no. PREV198885002491 XP002189526 & APPLIED AND ENVIRONMENTAL MICROBIOLOGY, vol. 53, no. 9, 1987, pages 2082-2089,

## Description

### BACKGROUND

As is known in the art of water treatment for microbiological control, a deficiency of chlorine, of hypochlorites, and of certain halogenated organic water-treating agents is the formation, during usage, of undesirable disinfection by-products. These by-products are undesirable both from the standpoint of environmental concerns and also from the standpoint of toxicological considerations.

Certain 1,3-dihalo-5,5-diallcylhydantoins have been found to be effective as biocides for aqueous systems such as industrial cooling water, recreational water, and wastewater.

Persons using biocidal agents in the biocidal treatment of water customarily, if not universally, refer to "free chlorine" level as a measure of biocidal control. To achieve "free chlorine" levels in water treatment, solid materials are often preferred because of their high weight percent activity. N,N'-bromochloro-5,5-dimethylhydantion (BCDMH) has been one of the most widely-used solid sources of "free chlorine" for water treatment. One of the features emphasized for BCDMH by suppliers of BCDMH is that in use, the combined chlorine from the biocide regenerates "free chlorine" by reaction with inactive bromide species formed during the water treatment operation. In other words, the chlorine atom in the initial N,N'-bromochloro-5,5-dialkylhydantoin is said to be a precursor for additional "free chlorine" for sanitation purposes.

In use, BCDMH hydrolyzes into HOBr and HOCl both of which register as "free chlorine" species in commonly-used standard test procedures. These methods for determining "free chlorine" levels in treated water, involve use of a reagent known as DPD (*i.e.,* N,N'-diethyldiphenylenediamine) and a buffer, and the results of such analyses are commonly used, if not universally used, as the basis for determining the quantity of a halogen-containing microbiocidal agent to be used for water treatment. Heretofore, consumers of BCDMH have only been concerned with the level of "free chlorine" provided by a given quantity of that biocidal material. What has not been realized by such consumers is the amount of "total chlorine" being utilized in order to achieve the requisite "free chlorine" level. As a consequence, the consumer has not had available a yardstick by which to determine the true economic efficiency of using BCDMH as a biocidal agent in the treatment of water. To achieve optimum economic efficiency, the consumer should have available for use a biocidal agent in which the amount of "free chlorine" released into the water corresponds closely to the "total chlorine" content of the biocidal agent.

In the event a biocidal agent provides a relatively small amount of "free chlorine" in relation to its "total chlorine" content, it has been deemed necessary to utilize a relatively large amount of such agent in order to achieve microbiological control. This in turn means high levels of halogenated materials are released into the environment. If on the other hand, a biocidal agent could provide to the water an amount of "free chlorine" that closely corresponds to the "total chlorine" content of the biocidal agent, effective microbiological control could be realized by use of much smaller dosages and with consequent minimal adverse impact upon the environment.

Another serious problem in connection with water disinfection is biofilm development. Biofilms are bacterial films which tenaciously adhere to surfaces in contact with water such as heat exchanger surfaces, conduit interiors, filters, and other processing equipment. These films are very undesirable because they can harbor dangerous pathogens, and cause damage to the surfaces to which they have become attached. Moreover, the bacteria form a slime layer of extra-cellular polysaccharide which affords protection to the bacteria and in addition constitute an effective barrier against penetration of biocidal agents used in an attempt to combat such bacteria. In situations where the water is prone to development of calcium carbonate scale, the presence of such gelatinous extra-cellular polysaccharides can result in the formation of layers of scale bonded to the substrate surface by the gelatinous polysaccharides. Polysaccharide films and films of scale bonded by means of polysaccharides can greatly interfere with the operation of heat exchangers by virtue of their insulating characteristics, and can markedly interfere with the functioning of filters and the flow of water through pipes and conduits by virtue of the clogging tendencies of such polysaccharide films.

JP 56 053602 A teaches that petaline calcium silicate and/or petaline silica, used as a carrier for the slime removal agent, is necessary. The slime removal agent is an "organic halogen compound," and 1,3-dibromo-5,5-dimethylhydantoin is one of the organic halogen compounds. Chemical Abstracts 75:47759 (abstract of Gig. Sanit., 1971, 36, 96-99) teaches that one needs a certain level of residual bromine (0.7 to 1 mg/L) in the water to maintain sanitary conditions; chlorination every 4-5 days is recommended. The source of the residual bromine is disclosed in the abstract to be 1,3-dibromo-5,5-dimethylhydantoin. JP 56 158333 teaches the dissolution of 1,3-dibromo-5,5-dimethylhydantoin either alone or with other halogen-containing agents in waste photographic developer. JP 07 299468 A teaches that an organic bromine compound must be used in combination with H₂O₂ for an effective sterilizing treatment method; the organic bromine compounds include 1,3-dibromo-5,5-dimethylhydantoin and N,N'-bromochloro-5,5-dimethylhydantoin. JP 62 270506 A teaches that an antibacterial agent, which can include 1,3-dibromo-5,5-dimethylhydantoin, must be used in combination with 4,5-dichloro-2-octylisothiazolin-3-one for acceptable levels of antibacterial activity. WO01/53209 discloses that microbiological control in water systems can be achieved with an amount of 1,3-dibromo-5,5-dimethylhydantoin that is less than the amount of N,N'-bromochloro-5,5-dimethylhydantoin required to achieve the same degree of microbiological control. SU 277157 describes a detergent for dishwater based on sodium tripolyphosphate, sodium silicate, and sodium sulfate to which is added sodium carbonate and 1,3-dibromo-5,5-dimethylhydantoin.

Thus a need exists for a biocidal agent which is highly effective in providing biocidal control, especially eradication, or at least minimization, of biofilms in water systems, and in addition, a biocidal agent which has the capability of providing such biocidal control even though used at very low concentrations in water. In addition, a need exists for a biocidal agent that can provide to the water an amount of "free chlorine" that closely corresponds to the "total chlorine" content of the biocidal agent, whereby effective microbiological control can be realized by use of smaller dosages and with consequent minimal adverse impact upon the environment.

### BRIEF SUMMARY OF THE INVENTION

A first aspect of this invention involves, *inter alia,* the discovery that there is a substantial disparity between the "free chlorine" level and the "total chlorine" level delivered to the water when using BCDMH as a biocidal agent. Thus the consumer of BCDMH as a water treating agent unknowingly has been paying for a relatively ineffective microbiocidal agent. Moreover, such consumer has been contributing unknowingly to the release of undesirable quantities of halogenated materials to the environment.

This invention further involves, *inter alia,* the discovery that the level of "free chlorine" available from 1,3-dibromo-5,5-dimethylhydantoin (DBDMH), when used in water having a pH of at least about 8.0, closely approximates its "total chlorine" content. Consequently the use of one or more water-soluble dialkyldibromohydantoins such as DBDMH as a water treating agent, especially when used in the treatment of industrial cooling water, is highly effective from an economic standpoint and highly desirable from an environmental standpoint. That is to say, the dosage levels of water-soluble dialkyldibromo-hydantoins such as DBDMH needed to provide effective microbiological control with respect to such undesirable organisms and pathogens as bacteria, algae, and biofilms, are relatively low compared to dosage levels of BCDMH required for the same degree of control, especially in industrial cooling water. Moreover, the levels of halogenated materials released to the environment are much smaller when using a water-soluble dialkyldibromohydantoin such as DBDMH as compared to BCDMH.

The first aspect of this invention is described both in Claims 1-81 and 105 to 106 and in the further detailed description presented below.

A second aspect of this invention, *inter alia,* provides two different categories of biocidally-active 1,3-dibromo-5,5-dialkylhydantoin biocidal compositions in readily identifiable forms and that also fulfill the needs and provide the advantages referred to herein.

The second aspect of this invention is described both in Claims 82-104 and in the further detailed description presented below.

Other embodiments, features, and advantages of this invention will be still further apparent from the ensuing description and appended claims.

### BRIEF DESCRIPTION OF THE DRAWING

Fig. 1 is a graphical representation of the results of standard "free chlorine" and "total chlorine" tests performed on simulated cooling water solutions dosed with BCDMH or DBDMH, all as described in detail in Example 1 hereinafter.
Fig. 2 is a graphical representation of the percent of hydrolysis experienced by the respective test samples of BCDMH and of DBDMH in the tests performed in Example 1.

### FURTHER DETAILED DESCRIPTION

### First Aspect of the Invention

This invention provides in one of its embodiments a method ofproviding microbiological control in an aqueous medium such as recreational water, industrial cooling water, process water, or wastewater, and in water having a pH of at least about 8.0 such as cooling water and/or eradication or reduction of biofilm on a surface in contact with such aqueous medium, which method comprises introducing into the aqueous medium a microbiocidally effective amount of a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, wherein (i) the molar quantity of said at least one 1,3-dibromo-5,5-dialkylhydantoin introduced into said aqueous medium is less than the molar quantity of N,N'-bromochloro-5,5-dimethylhydantoin that would be required to effect the same degree of microbiological control in said medium, (ii) the quantity of said at least one 1,3-dibromo-5,5-dialkylhydantoin introduced into said aqueous medium releases an amount of "free chlorine" that is greater than the amount of "free chlorine" that would be released in said medium by an equimolar quantity of N,N'-bromochloro-5,5-dimethylhydantoin, and (iii) the amount of "free chlorine" released by the quantity of said at least one 1,3-dibromo-5,5-dialkylhydantoin introduced into said medium is greater than the amount of "free chlorine" that could be predicted to be released by that quantity of said at least one 1,3-dibromo-5,5-dialkylhydantoin on the basis of the amount of "free chlorine" that would be released in said medium by an equimolar quantity of N,N'-bromochloro-5,5-dimethylhydantoin.

The most preferred DBDAH used in this embodiment is 1,3-dibromo-5,5-dimethylhydantoin (DBDMH).

In another of its embodiments this invention provides a method of effecting microbiocidal activity in water having a pH of at least about 8.0, which method comprises
providing in the water using a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhy-dantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, a microbiocidally effective amount of "free chlorine" that is greater than could be predicted from the amount of "free chlorine" that would be released in said water by an equimolar quantity of N,N'-bromochloro-5,5-dimethylhydantoin, while using a smaller molar quantity of said at least one 1,3-dibromo-5,5-dialkylhydantoin than the molar quantity of N,N'-bromochloro-5,5-dimethylhydantoin that would be required to release in said water the same microbiocidally effective amount of "free chlorine." 1,3-Dibromo-5,5-dimethylhydantoin (DBDMH) is also the most preferred microbiocidal agent employed in this embodiment.

A further embodiment of this invention is a composition having microbiocidal activity, which composition comprises water having a pH of at least about 8.0 to which has been added a microbiocidally effective quantity of a microbiocidal agent which is selected from the group consisting of 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-dibromo-5-ibobutyl-5-methylhydantoin, 1,3-dibromo-5-sec-butyl-5-methylhydantoin, 1,3-dibromo-5-tert-butyl-5-methylhydantoin, and mixtures of any two or more of these, with the exception of dissolving 1,3-dibromo-5,5-dimethyl-hydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, (i) the molar quantity of said at least one 1,3-dibromo-5,5-dialkylhydantoin added being less than the molar quantity of N,N'-bromochloro-5,5-dimethylhydantoin required to effect the same degree of microbiocidal activity in said water, (ii) the quantity of said at least one 1,3-dibromo-5,5-dialkylhydantoin added releasing an amount of "free chlorine" that is greater than the amount of "free chlorine" that would be released in said water by an equimolar quantity of N,N'-bromochloro-5,5-dimethyl-hydantoin, and (iii) the amount of "free chlorine" released by the quantity of said at least one 1,3-dibromo-5,5-dialkylhydantoin added being greater than the amount of "free chlorine" that could be predicted to be released by that quantity of said at least one 1,3-dibromo-5,5-dialkylhydantoin on the basis of the amount of "free chlorine" that would be released in said water by an equimolar quantity of N,N'-bromochloro-5,5-dimethylhydantoin.

Here again, the most preferred DBDAH is 1,3-dibromo-5,5-dimethylhydantoin (DBDMH).

This invention as reflected for example by the above embodiments, involves a number of surprising features. First of all, it is surprising that to achieve a given level of microbiocidal effectiveness in an aqueous medium with a pH of at least about 8.0, a smaller quantity of DBDAH such as DBDMH can be used than BCDMH. Heretofore the art has regarded BCDMH as being a biocidal agent of choice because of the levels of effectiveness achieved by use of that agent. Moreover, it is surprising that in an aqueous medium with a pH of about 8.0 or higher, the amount of"free chlorine" released by a DBDAH such as DBDMH is greater than the amount of "free chlorine" released by an equimolar quantity of BCDMH. At best the expectation would be that there could be no significant difference, and thus that there would be no appreciable difference, in these respective amounts of"free chlorine." Furthermore, not until comparative testing of water samples with a pH of greater than about 8.0 containing, respectively, equimolar quantities of DBDMH or BCDMH for "free chlorine" using Hach Method 8021 (copyright 1997, by Hach Company) and for "total chlorine" using Hach Method 8167 (copyright 1997, by Hach Company), and converting the mg/L Cl₂ "free chlorine" values from the tests to percentages of the mg/L Cl₂ "total chlorine" values from the tests, was the unpredictable superiority of DBDMH in releasing larger amounts of "free chlorine" than the equimolar quantity of BCDMH discovered. Prior to such testing there was no way of predicting the existence this superiority.

As a consequence of the above surprising features of this invention it is now possible to achieve the same microbiocidal effect on or control of bacteria, algae, biofilm, and like microbiological entities as given by BCDMH but using smaller molar amounts of one or more of the above described 1,3-dibromo-5,5-dialkylhydantoins such as DBDMH, and at the same time significantly reducing the amounts of halogenated materials to be released to the environment. Alternatively, greater microbiocidal control of bacteria, algae, biofilm, and like microbiological entities can be achieved using one or more of the above described 1,3-dibromo-5,5-dialkylhydantoins such as DBDMH in the same molar quantity as BCDMH, or even somewhat less molar quantity of one or more such 1,3-dibromo-5,5-dialkylhydantoins than BCDMH.

Another embodiment of this invention is a method for determining a quantity of a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, to be used in microbiocidal treatment of water having a pH of at least about 8.0, said method comprising (i) determining the "free chlorine" concentrations of samples of said water containing respectively N,N'-bromochloro-5,5-dimethylhydantoin and said at least one 1,3-dibromo-5,5-dialkylhydantoin, (ii) determining the "total chlorine" values of samples of said water containing respectively N,N'-bromochloro-5,5-dimethylhydantoin and said at least one 1,3-dibromo-5,5-dialkylhydantoin, and (iii) determining respectively for N,N'-bromochloro-5,5-dimethylhydantoin and said at least one 1,3-dibromo-5,5-dialkylhydantoin the relative extent of hydrolysis to species which register as "free chlorine", thereby enabling the amount of said at least one 1,3-dibromo-5,5-dialkylhydantoin to be used in achieving the target dose of "free chlorine" selected to effect or maintain microbiological control in the water being subjected to treatment.

Such determinations can be accomplished by dividing the value obtained for "free chlorine" by the value obtained for "total chlorine" and multiplying the quotient by 100 to obtain the percentage of hydrolysis to "free chlorine." Use of this method enables the amount of DBDAH to be used in achieving the target dose of "free chlorine." By "target dose" is meant the dose deemed suitable by the water treater to effect microbiocidal control in the water being subjected to treatment. In conducting this embodiment of the invention, any suitable method of determining "free chlorine" and "total chlorine" can be used, but in the event of any conflicting data as between different parties, Hach Method 8021 (copyright 1997) for "free chlorine" and Hach Method 8167 (copyright 1997) for "total chlorine" shall be used. For example, a given water treater may deem a slug dose of, say, 0.2 mg/L of "free chlorine" to be sufficient for maintaining microbiocidal control in a given body of water. Knowing the extent of hydrolysis as determined by use of this invention, and also the total volume of the body of water, the water treater can determine an amount of solid DBDAH to apply in a slug dose to achieve effective microbiocidal control while at the same time without using an undue excess of DBDAH.

In another of its embodiments, this invention provides a method of effecting biocidal activity in water having a pH of at least about 8.0, which method comprises providing in such water using a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, an amount of "free chlorine" that is greater than could be predicted from the amount of "free chlorine" that would be provided in said water by an equimolar amount of N,N'-bromochloro-5,5-dimethylhydantoin, as determinable by comparative testing as follows:
a) determining the amount of species of said at least one 1,3-dibromo-5,5-dialkylhydantoin and of N,N'-bromochloro-5,5-dimethylhydantoin which register respectively as "total chlorine" using Hach Method 8167 (copyright 1997, by Hach Company);
b) determining the amount of species of said at least one 1,3-dibromo-5,5-dialkylhydantoin and of N,N'-bromochloro-5,5-dimethylhydantoin which register respectively as "free chlorine" using Hach Method 8021 (copyright 1997, by Hach Company); and
c) determining respectively for said at least one 1,3-dibromo-5,5-dialkylhydantoin and N,N'-bromochloro-5,5-dimethylhydantoin the relative extent of hydrolysis to species which register as "free chlorine."

The foregoing method can be applied for treating water for microbiological control and/or for biofilm eradication.

Another embodiment is as a composition of matter, water having a pH of at least about 8.0 in which microbiological and/or biofilm activity is minimized if not eliminated by the addition thereto of an amount of "free chlorine" produced in the water by a microbiocidal agent which is selected from the group consisting of 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-dibromo-5-isobutyl-5-methylhydantoin, 1,3-dibromo-5-sec-butyl-5-methylhydantoin, 1,3-dibromo-5-tert-butyl-5-methylhydantoin, and mixtures of any two or more of these, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, wherein the amount of "free chlorine" actually present in the water is greater than could be predicted from the amount of "free chlorine" that would be provided in such water by an equimolar quantity of N,N'-bromochloro-5,5-dimethylhydantoin (BCDMH), as determinable by comparative testing as follows:
a) determining the amount of species of said at least one 1,3-dibromo-5,5-dialkylhydantoin and of BCDMH which register respectively as "total chlorine" using Hach Method 8167 (copyright 1997, by Hach Company); and
b) determining the amount of species of the DBDAH and of BCDMH which register respectively as "free chlorine" using Hach Method 8021 (copyright 1997, by Hach Company); and
c) determining respectively for the DBDAH and BCDMH the relative extent of hydrolysis to species which register as "free chlorine."
The microbiological control and/or for biofilm eradication in the water involves effective biocidal activity against such organisms and pathogens as bacteria, algae, and biofilms.

It should be understood that the terms "free chlorine" and "total chlorine" are terms commonly used by persons in the fields of industrial and recreational water treatment. The values for the levels of "free chlorine" and "total chlorine" in the water are determined by use of appropriate standard test procedures which differentiate between the two. Further, the terms "free chlorine" and "total chlorine" are not restricted to just chlorine species in the water but rather, include certain bromine species in the water as well. Thus in a case where a biocidal agent used in treating the water contains both bromine and chlorine atoms (*e.g.*, BCDMH), the "free chlorine" and "total chlorine" levels determined in the respective appropriate test procedures used would include quantification of the sum of the bromine species and chlorine species present that respond to the respective tests. The sum of these respective levels is reported, however, as "free chlorine" or "total chlorine," depending on the test used. Similarly, if the water treating agent used contains bromine atoms but no chlorine atoms, the "free chlorine" and "total chlorine" levels determined in the respective appropriate standard test procedures used would involve quantification of the level of bromine species present that respond to the respective tests. Thus although the halogen species actually present in such case are bromine-containing species, the levels present as determined in the respective tests would be reported as "free chlorine" and "total chlorine," respectively.

Heretofore it has been universally believed that all bromine species dissolved in the water respond positively in the standard "free chlorine" test procedure. However, one of the features of this invention is the discovery that this universal belief is erroneous when the "free chlorine" test procedure is applied to recreational water, cooling water, process water, and wastewater, that contains bromine species, and especially to cooling water, process water, and wastewater that is has a pH above about 8.0. Under these conditions the dibromo-containing microbiocides used pursuant to this invention can give vastly superior values for "free chlorine" as compared to the corresponding bromochloro microbiocides as evidenced by the results described herein in which comparisons were made between DBDMH and BCDMH.

For example, it has been found that when water having a pH above about 8.0 is treated water with BCDMH to reach a desired "free chlorine" level, the amount of BCDMH being used is far greater than necessary to achieve a given level of microbiocidal effectiveness. This in turn means that the consumer has purchased and is using much more of the microbiocidal agent than necessary. As a consequence, there are involved both an economic penalty due to excessive consumption, and an environmental penalty due to release of excessive quantities of less biocidally-active halogen species to the environment.

Nevertheless, the "free chlorine" level in water treated with a halogen-releasing biocidal agent remains the yardstick by which microbiocidal performance is measured. Species which respond to the standard "free chlorine" test are HOCl and HOBr. Any other form of soluble halogen species do not respond to the standard "free chlorine" test. Such non-responsive species include, for example, chlorine species bound to a nitrogen atom. On the other hand, the standard "total chlorine" test measures both HOBr and HOCl, and any halogen species that do not respond to the standard "free chlorine" test.

The standard tests for determination of "free chlorine" and "total chlorine" are based on classical test procedures devised by Palin in 1974. See A. T. Palin, "Analytical Control of Water Disinfection With Special Reference to Differential DPD Methods For Chlorine, Chlorine Dioxide, Bromine, Iodine and Ozone," *J Inst. Water Eng.,* **1974,** 28, 139. While there are various modernized versions of the Palin procedures, the version of the tests for "free chlorine" and "total chlorine" used and to be used as the standard in connection with this invention, are fully described in *Hach Water Analysis Handbook,* 3rd edition, copyright 1997. The procedure for "free chlorine" is identified in that publication as Method 8021 appearing on page 335, whereas the procedure for "total chlorine" is Method 8167 appearing at page 379. Briefly, the "free chlorine" test involves introducing to the halogenated water a powder comprising DPD indicator powder and a buffer. "Free chlorine" present in the water reacts with the DPD indicator to produce a red to pink coloration. The intensity of the coloration depends upon the concentration of "free chlorine" species present in the sample. This intensity is measured by a colorimeter calibrated to transform the intensity reading into a "free chlorine" value in terms of mg/L Cl₂. Similarly, the "total chlorine" test also involves use of DPD indicator and buffer. In this case, KI is present with the DPD and buffer whereby the halogen species present, including nitrogen-combined halogen, reacts with kI to yield iodine species which turn the DPD indicator to red/pink. The intensity of this coloration depends upon the sum of the "free chlorine" species and all other halogen species present in the sample. Consequently, this coloration is transformed by the colorimeter into a "total chlorine" value expressed as mg/L Cl₂.

A halogen water treating agent which could provide a high level of both "free chlorine" and "total chlorine" and where these levels would be close together would be a very desirable water treating agent. Such an agent would be highly effective as a microbiocidal agent and if of an appropriate chemical structure, could be environmentally friendly and highly cost-effective. Pursuant to this invention these criteria are met by certain water-soluble 1,3-dibromo-5,5-dialkylhydantoins (DBDAH).

In particular, the water-soluble 1,3-dibromo-5,5-dialkylhydantoins utilized in the practice of this invention are those in which one of the alkyl groups in the 5-position is a methyl group and the other alkyl group in the 5-position is an alkyl group having in the range of 1 to 4 carbon atoms. Thus the biocides used in this invention comprise 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-dibromo-5-isobutyl-5-methylhydantoin, 1,3-dibromo-5-sec-butyl-5-methylhydantoin, 1,3-dibromo-5-tert-butyl-5-methylhydantoin, and mixtures of any two or more of them. Of these biocidal agents, 1,3-dibromo-5-isobutyl-5-methylhydantoin, 1,3-dibromo-5-n-propyl-5-methylhydantoin, and 1,3-dibromo-5-ethyl-5-methylhydantoin are, respectively, preferred, more preferred, and even more preferred members of this group from the cost effectiveness standpoint. Of the mixtures of the foregoing biocides that can be used pursuant to This invention, it is preferred to use 1,3-dibromo-5,5-dimethylhydantoin as one of the components, with a mixture of 1,3-dibromo-5,5-dimethylhydantoin and 1,3-dibromo-5-etlryl-5-methylhydantoin being particularly preferred. The most preferred biocide employed in the practice of this invention is 1,3-dibromo-5,5-dimethylhydantoin.

When a mixture of two or more of the foregoing biocides is made up or used pursuant to this invention, the individual biocides of the mixture can be in any proportions relative to each other.

It is to be understood that in the practice of this invention it is not necessary to perform the specified tests every time a body of water is to be dosed with DBDAH or with BCDMH (depending upon the embodiment of this invention being practiced). Instead, as made clear by the use of the term "determinable" (*i.e.*, able to be determined), the testing should be done when deemed necessary or desirable to either establish the requisite dosage of DBDAH or BCDMH, as the case may be, or to check or confirm that the proposed dosage complies with this invention and thus will make available the economic and environmental benefits resulting from the practice of this invention.

When it is desired to conduct the appropriate testing any suitable method of determining "free chlorine" and "total chlorine" can be used, but in the event of any conflicting data or dispute as between different parties, the full procedure set forth below entitled "DBDAH and BCDMH Test Procedure" is to be used to resolve the issue in connection with any embodiment of this invention.

The DBDAH and BCDMH test procedure used is as follows:
1. To determine the amount of species present in the water which respond to the "free chlorine" and "total chlorine" tests, the water sample should be analyzed within a few minutes of being taken, and preferably immediately upon being taken.
2. Hach Method 8021 for testing the amount of species present in the water sample which respond to the "free chlorine" test involves use of the Hach Model DR 2010 colorimeter. The stored program number for chlorine determinations is recalled by keying in "80" on the keyboard, followed by setting the absorbance wavelength to 530 nm by rotating the dial on the side of the instrument. Two identical sample cells are filled to the 10 mL mark with the water under investigation. One of the cells is arbitrarily chosen to be the blank. Using the 10 mL cell riser, this is admitted to the sample compartment of the Hach Model DR 2010, and the shield is closed to prevent stray light effects. Then the ZERO key is depressed. After a few seconds, the display registers 0.00 mg/L Cl₂. To second cell, the contents of a DPD Free Chlorine Powder Pillow are added. This is shaken for 10-20 seconds to mix, as the development of a pink-red color indicates the presence of species in the water which respond positively to the DPD test reagent. Within one minute of adding the DPD "free chlorine" reagent to the 10 mL of water in the sample cell, the blank cell used to zero the instrument is removed from the cell compartment of the Hach Model DR 2010 and replaced with the test sample to which the DPD "free chlorine" test reagent was added. The light shield is then closed as was done for the blank, and the READ key is depressed. The result, in mg/L Cl₂ is shown on the display within a few seconds. This is the "free chlorine" level of the water sample under investigation.
3. Hach Method 8167 for testing the amount of species present in the water sample which respond to the "total chlorine" test involves use of the Hach Model DR 2010 colorimeter. The stored program number for chlorine determinations is recalled by keying in "80" on the keyboard, followed by setting the absorbance wavelength to 530 nm by rotating the dial on the side of the instrument. Two identical sample cells are filled to the 10 mL mark with the water under investigation. One of the cells is arbitrarily chosen to be the blank. To the second cell, the contents of a DPD Total Chlorine Powder Pillow are added. This is shaken for 10-20 seconds to mix, as the development of a pink-red color indicates the presence of species in the water which respond positively to the DPD "total chlorine" test reagent. On the keypad, the SHIFT TIMER keys are depressed to commence a three minute reaction time. After three minutes the instrument beeps to signal the reaction is complete. Using the 10 mL cell riser, the blank sample cell is admitted to the sample compartment of the Hach Model DR 2010, and the shield is closed to prevent stray light effects. Then the ZERO key is depressed. After a few seconds, the display registers 0.00 mg/L Cl₂. Then, the blank sample cell used to zero the instrument is removed from the cell compartment of the Hach Model DR 2010 and replaced with the test sample to which the DPD "total chlorine" test reagent was added. The light shield is then closed as was done for the blank, and the READ key is depressed. The result, in mg/L Cl₂ is shown on the display within a few seconds. This is the "total chlorine" level of the water sample under investigation.

The various new features of this invention and the advantages accruing therefrom will be further apparent from Examples 1-3, which as presented for purposes of illustrating the invention without limiting the scope of the invention.

### EXAMPLE 1

Simulated cooling water was prepared using deionized water to which calcium chloride and sodium bicarbonate were added to provide calcium hardness of 400 ppm and a total alkalinity of 300 ppm. A small amount of phosphonobutanetricarboxylic acid (PBTC) (5 ppm) was used to prevent calcium carbonate precipitation. Concentrated sodium hydroxide was added to adjust the pH of the simulated cooling water solutions to pH 9.1.

Stock solutions of DBDMH and of BCDMH were prepared by slurrying 1 gram of the respective powders in 100 mL of deionized water. After stirring for 20 minutes, the insolubles were filtered to yield clear saturated stock solutions of DBDMH and BCDMH, respectively. Iodometric titration of the stock solutions using the potassium iodide-sodium thiosulfate method indicated the DBDMH solution contained 5 80 mg/L (as total chlorine), and the BCDMH solution contained 1100 mg/L (as total chlorine).

The stock solutions were used to dose two simulated cooling water solutions to 1 mg/L as total chlorine. Thus, 1.7 mL of DBDMH stock solution was introduced to 1000 mL of simulated cooling water to form a first test solution, and 0.91 mL of BCDMH stock solution was introduced to another 1000 mL of simulated cooling water to produce a second test solution. Both of these test solutions were placed in screw-capped amber bottles to shield from light and prevent evaporation. The bottles were then placed in an oven and heated to 38°C (100°F). As soon as the solutions reached the equilibrium temperature of 38°C, 10 mL aliquots of each test solution were removed and analyzed using Hach Method 8167 for "total chlorine," to confirm that each contained a "total chlorine" level of 1 mg/L. The same solutions were also analyzed using Hach Method 8021 for "free chlorine" to determine how much of the total chlorine species also registered as "free chlorine." These analyses were recorded as results at time 0. The test solutions were then kept in the oven at the equilibrium temperature of 38°C for a total of 6 hours during which time additional 10 mL aliquots were removed at known time intervals and subjected to the same analysis procedures for "free chlorine" and "total chlorine."

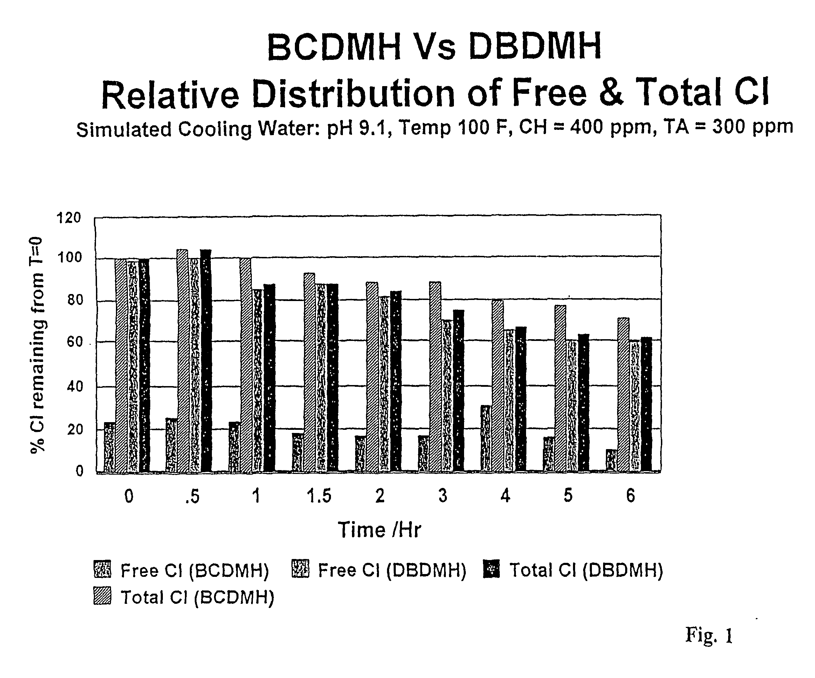

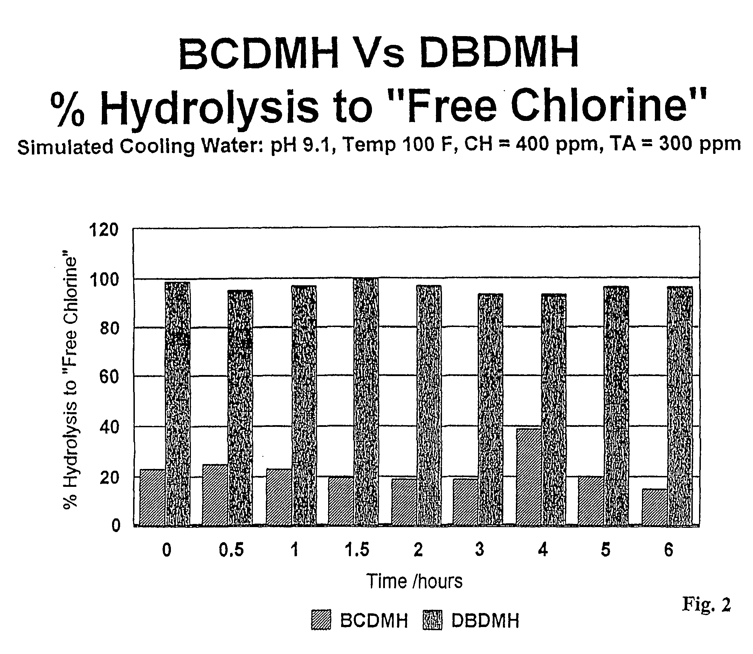

The results of each of the foregoing determinations are summarized in Table 1 and are depicted graphically in Fig. 1. In Table 1 the values given at times 0.5 through 6 hours are percentages of the corresponding values shown in Table 1 for Time 0. These results are depicted graphically in Fig. 1. Table 2 sets forth the percentages of hydrolysis to "free chlorine" experienced by the BCDMH and the DBDMH based on the results shown in Table 1. Fig. 2 depicts the results given in Table 2. It can be seen from Table 2 and Fig. 2 that over a time span of 6 hours the differences in the percentage of hydrolysis as between BCDMH and DBDMH remained substantially constant. The minor variations in such differences appearing in Table 2 and Fig. 2 are deemed insignificant statistically inasmuch as they are within experimental error.

**TABLE 1**

| Time, hr | BCDMH Free Cl₂ | BCDMH Total Cl₂ | DBDMH Free Cl₂ | DBDMH Total Cl₂ |
|---|---|---|---|---|
| 0 | 23.1 | 100 | 98.8 | 100 |
| 0.5 | 25.6 | 104 | 100 | 104 |
| 1 | 23.1 | 100 | 85.1 | 87.3 |
| 1.5 | 17.9 | 92.3 | 87.3 | 87.3 |
| 2 | 16.6 | 88.5 | 81.6 | 83.9 |
| 3 | 16.6 | 88.5 | 70.1 | 74.7 |
| 4 | 30.7 | 79.5 | 65.5 | 66.6 |
| 5 | 15.4 | 76.9 | 60.1 | 63.2 |
| 6 | 10.2 | 71 | 59.8 | 62 |

**TABLE 2**

| Time, hr | BCDMH % hydrolysis to Free Cl₂ | DBDMH % hydrolysis to Free Cl₂ |
|---|---|---|
| 0 | 23.1 | 98.8 |
| 0.5 | 24.7 | 95.6 |
| 1 | 23.1 | 97.3 |
| 1.5 | 19.4 | 100 |
| 2 | 18.8 | 97.2 |
| 3 | 18.8 | 93.8 |
| 4 | 38.7 | 93.8 |
| 5 | 20 | 96.4 |
| 6 | 14.3 | 96.3 |

### EXAMPLE 2

The effectiveness of DBDMH and of BCDMH in microbiological control in cooling tower water was investigated in comparative tests. The cooling tower consisted of two 6.33 x 10⁶ kJ/hr (500-ton) units in a crossflow design. The total system-contained volume was 52,990 L (14,000 gallons), and the tower contained medium efficiency film fill. Water from the tower cooled the coils of two 3.80 x 10⁶ kJ/hr (300-ton) air conditioners (chillers). The tower typically operated at a pH of about 9.1 and 4 cycles of concentration. Blowdown was controlled by conductivity. Make-up water consisted of softened city water and which was of good quality. The make-up water was very low in calcium (< 10 mg/L) but high in pH (8.7). The alkalinity was 145 mg/L (as CaCO₃), and the silica level was 28 mg/L. The tower employed a conventional polyphosphate/molyb-date/phosphonate program to provide corrosion and deposit control. The conditions and results are summarized in Table 3.

**TABLE 3***

| | **Cooling Tower Water** | **Make-up Water** |
|---|---|---|
| ***Cooling Tower Data*** | | |
| Temperature (return line) | 33° C (91°F) | -- |
| Temperature (to process) | 28.3° C (83°F) | -- |
| ΔT | 4.7° C (8°F) | -- |
| Make-up water | 18,168 L/day (4800 gal/day) | -- |
| ***Water Chemistry*** | | |
| Conductivity, mS/cm | 1.22 | 0.32 |
| pH, units | 9.2 | 8.7 |
| Alkalinity, mg/L as CaCO₃ | 480 | 145 |
| Total Hardness, mg/L as CaCO₃ | 1 | 3 |
| Silica, mg/L | 100 | 28 |

| | | |
|---|---|---|
| *This data represents the average of several analyses conducted during the course of the field trial. | | |

The BCDMH (9.1 kg [20 lbs]) was introduced to the water using 20-gram, 2.54 cm (1-inch) tablets charged to a solid halogen feeder (Neptune model BT-40, Neptune Chemical Pump Co., Inc., Lansdale, PA). Before each dose, the cooling tower water was sampled and enumerated for heterotrophic bacteria plate counts. Then the tower was slug dosed three times a week with BCDMH. Slug dosing was accomplished by diverting through the feeder containing the tablets a sidestream of the recirculating water for about 1 to 5 hours until a "free chlorine" dose of about 0.5 mg/L (as "free chlorine") was obtained. The "total chlorine" dose was measured at the same time. After each dose the cooling water was sampled and enumerated for heterotrophic bacteria plate counts. As necessary, the feeder was replenished with more BCDMH tablets. The total dry weight of BCDMH tablets consumed over a 30-day test period (obtained by subtracting the dry weight of the tablets remaining in the feeder at the completion of the test from the total dry weight of the tablets added to the feeder during the test period) was found to be 11.35 kg (25 lbs).

It was found that this biocide program (biocide dose 0.5 mg/L "free chlorine") reduced heterotrophic bacterial levels in the bulk water by an average of 1 order of magnitude. For example, before the biocide dose the bacteria levels in the bulk water ranged from 10⁵ to 14⁴ CFUs/mL. After the biocide dose the bacteria levels in the bulk water were reduced to 10⁴ to 10³.

After emptying the feeder of BCDMH tablets, 9.1 kg (20 lbs) of DBDMH granules was charged into the feeder. Thereupon the same procedure as described above for the BCDMH was carried out except for the fact that is was unnecessary to add any additional DBDMH to the feeder during the 30-day test period. In fact, the total weight of DBDMH consumed during the test was only 3.18 kg (71bs). Also, the targeted 0.5 mg/L "free chlorine" dose in the bulk water was achieved in only 20 to 30 minutes. It was found that the biocidal performance provided by 3.18 kg (71bs) of DBDMH was the same as provided by 11.35 kg (25 lbs) of BCDMH under the same test conditions.

### EXAMPLE 3

Using the same cooling tower as used in Example 2, the effectiveness of 1,3-dibromo-5,5-dimethylhydantoin in microbiological control in cooling tower water was investigated. As noted above, the cooling tower consisted of two 6.33 x 10⁶ kJ/hr (500-ton) units in a crossflow design. The total system-contained volume was 52,990 L (14,000 gallons), and the tower contained medium efficiency film fill. Water from the tower cooled the coils of two 3.80 x 10⁶kJ/hr (300-ton) air conditioners (chillers). The tower typically operated at a pH of about 9.1 and 4 cycles of concentration. Blowdown was controlled by conductivity. Make-up water consisted of softened city water and which was of good quality. The make-up water was very low in calcium (< 10 mg/L) but high in pH (8.7). The alkalinity was 145 mg/L (as CaCO₃), and the silica level was 28 mg/L. The tower employed a conventional polyphosphate/molybdate/phosphonate program to provide corrosion and deposit control.

The 1,3-dibromo-5,5-dimethylhydantoin was introduced to the water using granules charged to a solid halogen feeder (Neptune model BT-40, Neptune Chemical Pump Co., Inc., Lansdale, PA). The field trial lasted 51 days. The tower was slug dosed three times a week with 1,3-dibromo-5,5-dimethylhydantoin. Slug dosing was accomplished by diverting a sidestream of the recirculating water through the feeder containing the granules for about 1 to 5 hours until a total halogen residual of about 0.75 mg/L (as Cl₂) was obtained. This biocide program reduced bacterial levels in the bulk water by an average of 2 orders of magnitude, with bacteria levels in the bulk water after the biocide dose ranging from 10¹ to 10³ CFUs/mL.

The results from the average of several analyses conducted during the course of this field trial using DBDMH were as follows: In the microbiological tests, the levels of aerobic bacteria were in the range of 6 x 10⁰ to 3 x 10³ CFUs/mL in the cooling tower water and 10⁰ in the make-up water. As regards water chemistry, the free halogen residual (as Cl₂) was 0.79 mg/L (the range being 1.9-0.00 mg/L) in the cooling tower water and 0.05 mg/L in the make-up water; and the total halogen residual (as Cl₂) was 0.82 mg/L (the range being 1.9-0.03 mg/L) in the cooling tower water and 0.8 mg/L in the make-up water.

The DBDMH utilized in the practice of this invention can be in the form of a powder, granules, caplets, tablets, briquettes, or pucks. A preferred process for producing highly suitable powder or particulate DBDMH and novel DBDMH products are described respectively in commonly-owned U.S. Application Nos. 09/484,844 and 09/484,687, both filed January 18, 2000. Methods for the formation of compacted forms of DBDMH such as caplets, tablets, briquettes and pucks are described in commonly-owned U.S. Application No. 09/487,816, filed January 18, 2000. Methods for producing DBDMH in granular form are described in commonly-owned U.S. Application No. 09/483,896, filed January 18, 2000.

The methods of this invention thus involve use of 1,3-dibromo-5,5-dimethylhydantoin in compacted or in non-compacted forms. When used in compacted forms, the compacted forms can be produced without use of a binder provided that the average particle size of the 1,3-dibromo-5,5-dimethylhydantoin is at least 175 microns. Alternatively and more preferably, the compacted forms can be produced with use of a binder. A preferred type of binder for producing such compacted products is a saturated, normally solid, fatty amide as described in U.S. Pat. No. 5,565,576, issued October 15, 1996 to L. K. Hall, J. A. Falter, and T. E. Farina. In the practice of this invention such fatty amide binder is used with 1,3-dibromo-5,5-dimethylhydantoin having an average particle size of at least 175 microns. A particularly preferred type of binder for use in producing the compacted forms of 1,3-dibromo-5,5-dimethylhydantoin for use in this invention is a micronized synthetic polyolefin-based hydrocarbon wax and/or a micronized synthetic polyfluorocarbon wax effective to form the compacted product, provided the wax is suitably compatible with the 1,3-dibromo-5,5-dimethylhydantoin. In the practice of this invention with compacted forms of blends of 1,3-dibromo-5,5-dimethylhydantoin with a micronized synthetic polyolefin-based hydrocarbon wax and/or a micronized synthetic polyfluorocarbon wax, the average particle size of the 1,3-dibromo-5,5-dimethylhydantoin can be in the range of 20 to 600 microns, but preferably the average particle size of the 1,3-dibromo-5,5-dimethylhydantoin is in the range of 175 to 400 microns, if not even greater.

The amount of 1,3-dibromo-5,5-dimethylhydantoin used in practicing the methods of this invention is a biocidally effective amount, *e.g.*, an amount which is at least sufficient to achieve substantial microbiological control, if not complete microbiological control, in the water being treated and/or substantial biofilm, eradication, if not complete biofilm eradication, from the surfaces in contact with the water system being treated. Typically, dosages of 1,3-dibromo-5,5-dimethylhydantoin used for this purpose will fall within the range of 0.1 to 4.5 milligrams of "free chlorine" per liter of water (which corresponds to 0.2 to 10 milligrams of bromine, as Br₂, per liter of water). Preferably, such dosages are in the range of 0.1 to 2 milligrams of "free chlorine" per liter of water (which corresponds to 0.2 to 5 milligrams of bromine, as Br₂, per liter of water). However, departures from these ranges are permissible and are within the scope of this invention, provided that the departures result in sufficient microbiological control in accordance with the needs of the occasion, including applicable governmental regulations.

As noted above, the most effective presently-known process for producing 1,3-dibromo-5,5-dimethylhydantoin for use in the practice of this invention is described in commonly-owned U.S. Application No. 09/484,844, filed January 18, 2000. That process comprises, for example, concurrently feeding (i) an aqueous solution or slurry formed from an inorganic base and 5,5-dimethylhydantoin, and (ii) a brominating agent in proportions such that each nitrogen atom is substituted by a bromine atom, thereby continuously forming product which precipitates in an aqueous reaction mixture. The pH of the mixture is continuously maintained in the range of 5.5 to 8.5.

Methods of producing tablets from large average particle size 1,3-dibromo-5,5-dimethylhydantoin without use of binders, and the exceptional crush strength of such binder-free tablets are described in commonly-owned U.S. Application No. 09/484,687, filed January 18, 2000. Methods ofproducing tablets from 1,3-dibromo-5,5-dimethylhydantoin with use of certain micronized wax binders, and the even more exceptional crush strength of such tablets are described in commonly-owned U.S. Application No. 09/487,816, filed January 18, 2000. The remarkable flowability of large particle size 1,3-dibromo-5,5-dimethylhydantoin as compared to samples of commercially-available 1,3-dihalo-5,5-dimethylhydantoin products is described in commonly-owned U.S. Application No. 09/484,687, filed January 18, 2000.

There are a great number of important ways of carrying out or implementing this invention. In brief summary, some of these embodiments are as follows:
A) a method of effecting microbiocidal activity in a body of water, which method comprises providing in such body of water using a 1,3-dibromo-5,5-dialkylhydantoin microbiocidal agent described herein (DBDAH), most preferably 1,3-dibromo-5,5-dimethyl-hydantoin (DBDMH), a concentration of "free chlorine" that is greater than could be predicted from the concentration of "free chlorine" provided by an equimolar amount of N,N'-bromochloro-5,5-dimethylhydantoin (BCDMH), as determinable by comparative testing for "free chlorine" using Hach Method 8021 (copyright 1997, by Hach Company) and for "total chlorine" using Hach Method 8167 (copyright 1997, by Hach Company), and converting the mg/L Cl₂ "free chlorine" values from the tests to percentages of the mg/L Cl₂ "total chlorine" values from the tests, the four water samples used in said tests each having the same pH as said body of water and containing an equimolar quantity of BCDMH or DBDAH.
B) A method of A) above wherein the molar amount of the 1,3-dibromo-5,5-dialkyl-hydantoin microbiocidal agent (DBDAH), most preferably 1,3-dibromo-5,5-dimethylhydantoin, provided in said body of water is less than the molar amount of N,N'-bromochloro-5,5-dimethylhydantoin required to achieve the same degree of microbiological control.
C) Individual methods of A) or B) above wherein the 1,3-dibromo-5,5-dialkylhydantoin microbiocidal agent (DBDAH) used is 1,3-dibromo-5,5-dimethylhydantoin having (a) an average particle size in the range of 20 to 600 microns, (b) an average particle size of at least about 175 microns, (c) an average particle size of at least about 200 microns, (d) an average particle size of at least about 300 microns, or (e) an average particle size of at least about 400 microns.
D) Individual methods of A) or B) above wherein the 1,3-dibromo-5,5-dialkylhydantoin microbiocidal agent (DBDAH) used is (i) 1,3-dibromo-5,5-dimethylhydantoin in the form of a compacted product produced without a binder, or (ii) at least one 1,3-dibromo-5,5-dialkylhydantoinmicrobiocidal agent described herein (DBDAH), most preferably 1,3-dibromo-5,5-dimethylhydantoin, in the form of a compacted product produced using as a binder an amount of a micronized synthetic polyolefin-based hydrocarbon wax and/or a micronized synthetic polyfluorocarbon wax effective to form the compacted product, the wax being compatible with the 1,3-dibromo-5,5-dialkylhydantoin, or (iii) is in the form of a compacted product formed from at least one 1,3-dibromo-5,5-dialkylhydantoin microbiocidal agent described herein (DBDAH), most preferably 1,3-dibromo-5,5-dimethylhydantoin, wherein the compacted product was produced using as a binder an amount of a saturated, normally solid, fatty amide effective to form the compacted product.
E) Individual methods of (i) of D) above wherein the 1,3-dibromo-5,5-dimethylhydantoin being used has an average particle size of at least about 175, at least about 200, at least about 300, or at least about 400, microns.
F) Individual methods of (ii) of D) above wherein the wax is micronized polyethylene wax having, prior to compaction, an average particle size of no greater than about 15 microns, a maximum particle size of no greater than about 40 microns, and a density in the range of 0.9 to 1.4 grams per cc at 25°C; or a micronized polyethylene wax that, prior to compaction, melts at a temperature in the range of 109°C to 111 °C; or a micronized polypropylene wax having, prior to compaction, an average particle size in the range of 5.0 to 7.0 microns, a maximum particle size of about 22 microns, and a density in the range of 0.9 to 1.4 grams per cc at 25°C; a micronized polypropylene wax that melts at a temperature in the range of 140°C to 143°C, that has an average particle size in the range of 5.0 to 7.0 microns, and that has a maximum particle size of about 22 microns.
G) Individual methods of (iii) of D) above wherein the 1,3-dibromo-5,5-dialkylhydantoiii being used is 1,3-dibromo-5,5-dimethylhydantoin having an average particle size of at least about 200, at least about 300, at least about 400, or at least about 500, microns.
H) Individual methods of A) or B) above wherein the microbiocidal activity in said body of water comprises combating *Escherichia coli* and/or *Enterococcus faecium* in said body of water.
I) A method of purveying a microbiological control agent for use in water in accordance with U. S. Environmental Protection Agency regulations, which method comprises purveying a container of a water control agent comprising at least one 1,3-dibromo-5,5-dialkylhydantoin microbiocidal agent described herein (DBDAH), most preferably 1,3-dibromo-5,5-dimethylhydantoin, the container bearing a label having thereon dosage levels pursuant to requirements promulgated by the U. S. Environmental Protection Agency, and specifying either on said label, or on or in packaging for said container, to the effect that the contents are recommended for use, or are for use, in water treatment, or to the effect that the contents are recommended for use, or are for use, in water having a pH of at least about 8.0.
J) Individual methods of H) or I) above wherein the 1,3-dibromo-5,5-dialkylhydantoin being used in H) or the control agent being used in I) is (i) 1,3-dibromo-5,5-dimethylhydantoin in the form of a compacted product produced without a binder, (ii) at least one 1,3-dibromo-5,5-dialkylhydantoin microbiocidal agent described herein (DBDAH), most preferably 1,3-dibromo-5,5-dimethylhydantoin, in the form of a compacted product produced using as a binder an amount of a micronized synthetic polyolefin-based hydrocarbon wax and/or a micronized synthetic polyfluorocarbon wax effective to form the compacted product, the wax being compatible with the 1,3-dibromo-5,5-dialkylhydantoin, or (iii) at least one 1,3-dibromo-5,5-dialkylhydantoin microbiocidal agent described herein (DBDAH), most preferably 1,3-dibromo-5,5-dimethylhydantoin, in the form of a compacted product formed from the 1,3-dibromo-5,5-dialkylhydantoin wherein the compacted product was produced using as a binder an amount of a saturated, normally solid, fatty amide effective to form the compacted product.
K) Individual methods of (i) of J) above wherein the 1,3-dibromo-5,5-dimethylhydantoin being used has an average particle size of at least about 175, at least about 200, at least about 3 00, or at least about 400, microns.
L) Individual methods of (ii) of J) above wherein the wax is polyethylene wax having, prior to compaction, an average particle size of no greater than about 15 microns, a maximum particle size of no greater than about 40 microns, and a density in the range of 0.9 to 1.4 grams per cc at 25 °C; or wherein the wax is a polyethylene wax that, prior to compaction, melts at a temperature in the range of 109°C to 111°C; or wherein the wax is polypropylene wax having, prior to compaction, an average particle size in the range of 5.0 to 7.0 microns, a maximum particle size of about 22 microns, and a density in the range of 0.9 to 1.4 grams per cc at 25°C; or wherein the wax, prior to compaction, is a polypropylene wax that melts at a temperature in the range of 140°C to 143°C, that has an average particle size in the range of 5.0 to 7.0 microns, and that has a maximum particle size of about 22 microns.
M) Individual methods of (iii) of J) above wherein the 1,3-dibromo-5,5-diallrylhydantoin used in forming the compacted product is 1,3-dibromo-5,5-dimethylhydantoin having an average particle size of at least about 200, at least about 300, or at least about 400, microns.
N) Individual methods of any of A)-M) above wherein the body of water being treated is industrial cooling water, wastewater, or process water.
O) A method of N) above wherein the treatment of the water comprises passing a sidestream of the water through a bed of the 1,3-dibromo-5,5-dialkylhydantoin such that a biocidally effective amount of the 1,3-dibromo-5,5-dialkylhydantoin is delivered to the water.
P) Individual methods of I) above wherein the microbiological control agent is purveyed for use in at least cooling water, wastewater, or process water.
Q) Individual methods of A) or B) above wherein the microbiocidal activity in said body of water comprises eradicating, substantially eradicating, or reducing biofilm on a surface in contact with said body of water.
R) Individual methods of Q) above wherein the 1,3-dibromo-5,5-dialkylhydantoin being used is 1,3-dibromo-5,5-dimethylhydantoin having (a) an average particle size in the range of 20 to 600 microns, (b) an average particle size of at least about 175 microns, (c) an average particle size of at least about 200 microns, (d) an average particle size of at least about 300 microns, or (e) an average particle size of at least about 400 microns.
S) Individual methods of Q) above wherein the 1,3-dibromo-5,5-diallcylhydantoin being used is (i) 1,3-dibromo-5,5-dimethylhydantoin in the form of a compacted product produced without a binder, or (ii) at least one 1,3-dibromo-5,5-dialkylliydantoin described herein (DBDAH), most preferably 1,3-dibromo-5,5-dimethylhydantoin, in the form of a compacted product produced using as a binder an amount of a micronized synthetic polyolefin-based hydrocarbon wax and/or a micronized synthetic polyfluorocarbon wax effective to form the compacted product, the wax being compatible with the 1,3-dibromo-5,5-dialkylhydantoin, or (iii) at least one 1,3-dibromo-5,5-dialkylhydantoin described herein (DBDAH), most preferably 1,3-dibromo-5,5-dimethylhydantoin, in the form of a compacted product formed from the 1,3-dibromo-5,5-dialkylhydantoin wherein the compacted product was produced using as a binder an amount of a saturated, normally solid, fatty amide effective to form the compacted product.
T) Individual methods of (i) of S) above wherein the 1,3-dibromo-5,5-dimethylhydantoin being used has an average particle size of at least about 175, at least about 200, at least about 300, or at least about 400, microns.
U) Individual methods of (ii) of S) above wherein the wax is micronized polyethylene wax having, prior to compaction, an average particle size of no greater than about 15 microns, a maximum particle size of no greater than about 40 microns, and a density in the range of 0.9 to 1.4 grams per cc at 25°C; or a micronized polyethylene wax that, prior to compaction, melts at a temperature in the range of 109°C to 111 °C; or a micronized polypropylene wax having, prior to compaction, an average particle size in the range of 5.0 to 7.0 microns, a maximum particle size of about 22 microns, and a density in the range of 0.9 to 1.4 grams per cc at 25°C; a micronized polypropylene wax that melts at a temperature in the range of 140°C to 143°C, that has an average particle size in the range of 5.0 to 7.0 microns, and that has a maximum particle size of about 22 microns.
V) Individual methods of (iii) of S) above wherein the 1,3-dibromo-5,5-dialkylhydantoin being used is 1,3-dibromo-5,5-dimethylhydantoin having an average particle size of at least about 200, at least about 300, at least about 400, or at least about 500, microns.
W) Individual methods of A) or B) above wherein the microbiocidal activity in said body of water comprises eradicating, substantially eradicating, or at least reducing *Pseudomonas aeruginosa* biofilm on a surface in contact with said body of water.
X) A method of purveying a biofilm control agent for use in water in accordance with U. S. Environmental Protection Agency regulations, which method comprises purveying a container of a biofilm control agent for use in aqueous media, such agent comprising at least one 1,3-dibromo-5,5-dialkylhydantoin described herein (DBDAH), most preferably 1,3-dibromo-5,5-dimethylhydantoin, the container bearing a label having thereon dosage levels pursuant to requirements promulgated by the U. S. Environmental Protection Agency, and specifying either on said label, or on or in packaging for said container, to the effect that the contents are recommended for use, or are for use, with water having a pH of at least about 8.0.

### Second Aspect of the Invention

In accordance with this aspect of the invention the biocidally-active 1,3-dibromo-5,5-dialkylhydantoin biocidal compositions are in readily identifiable forms. The only biocidally-active component of the biocidal composition is at least one 1,3-dibromo-5,5-dialkylhydantoin in which one of the alkyl groups in the 5-position is a methyl group and the other alkyl group in the 5-position contains in the range of 1 to 4 carbon atoms (DBDAH). The biocidally-active component or components can be in admixture with from 0 to 90 wt% of biocidally-inactive components such as for example one or more binders, fillers, excipients, dyes or colorants, perfumes, stabilizers, and/or manufacturing by-products. In these biocidal compositions the balance, if any, to 100 wt% of the compositions is one or more biocidally-inactive materials.

Pursuant to one embodiment of this invention, such biocidal compositions are provided for use as a biocide or disinfectant in aqueous systems such as wastewater, commercial and industrial recirculating cooling water systems, industrial once-through cooling water systems, brewery pasteurizers, recreational water (swimming pools, hot tubs, and spas), pulp and paper mill systems, air washer systems, air and gas scrubber systems, decorative fountains, and hard surface sanitizers. In another embodiment such biocidal compositions are provided for use in the formulation of fungicides, algicides, slimicides, and microbiocides for use in such aqueous systems.

According to the invention the only biocidally-active component of the biocidal composition is at least one 1,3-dibromo-5,5-dialkylhydantoin in which one of the alkyl groups in the 5-position is a methyl group and the other alkyl group in the 5-position contains in the range of 1 to 4 carbon atoms (DBDAH).

The invention provides as one of its embodiments an article of manufacture comprising a packaging material and a biocidal composition contained within said packaging material, wherein said biocidal composition is comprised of (i) at least one 1,3-dibromo-5,5-dialkylhydantoin in which one of the alkyl groups in the 5-position is a methyl group and the other alkyl group in the 5-position contains in the range of 1 to 4 carbon atoms as the only biocidally-active ingredient(s) in said composition, and (ii) at least one biocidally-inactive ingredient, wherein said biocidally-inactive ingredient is selected from the group consisting of binders, fillers, excipients, dyes or colorants, perfumes, stabilizers, and/or manufacturing by-products; wherein at least 90 wt.% of said biocidal composition is said at least one 1,3-dibromo-5,5-dialkylhydantoin; and wherein said packaging material comprises at least a label suitably identifying the name of the product in the package, and at least a sticker identifying the contents as being an oxidizing agent, wherein (a) the molar quantity of said at least one 1,3-dibromo-5,5-dialkylhydantoin introduced into an aqueous medium having a pH of at least about 8.0 is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromo-chloro-5,5-dimethylhydantoin.

According to another embodiment the invention provides an article of manufacture comprising a packaging material and a biocidal composition contained within said packaging material; wherein said biocidal composition is comprised of at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used as a biocide for wastewater, recirculating cooling water systems, once-through cooling water systems, brewery pasteurizers, pulp and paper mill systems, air washer systems, air and gas scrubber systems, or decorative fountains, or any two or more of these, and wherein said label or another label associated with said packaging material indicates that the dosage rate for at least one the foregoing eight uses or use patterns is such as to maintain a residual bromine level of 0.5-5 ppm or as needed to maintain biological control, and wherein (a) the molar quantity of said at least one 1,3-dibromo-5,5-dialkylhydantoin introduced into an aqueous medium having a pH of at least about 8.0 is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromochloro-5,5-dimethylhydantoin.

According to a further embodiment the invention provides an article of manufacture comprising a packaging material and a biocidal composition contained within said packaging material, wherein said biocidal composition is comprised of at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used by manufacturers in formulating biocides for wastewater, recirculating cooling water systems, once-through cooling water systems, brewery pasteurizers, recreational water, pulp and paper mill systems, air washer systems, air and gas scrubber systems, decorative fountains, or hard surface sanitizers, or any two or more of these, said recreational water being one or more of swimming pools, hot tubs, and spas, and wherein said label or another label associated with said packaging material indicates that formulators using the product are responsible for EPA registration of their formulated products, and wherein (a) the molar quantity of said at least one 1,3-dibromo-5,5-dialkylhydantoin introduced into an aqueous medium having a pH of at least about 8.0 is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromo-chloro-5,5-dimethylhydantoin.

Further the invention provides according to a further embodiment an article of manufacture comprising a packaging material and a biocidal composition contained within said packaging material, wherein said biocidal composition comprises as an active ingredient of the composition at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used as a biocidal agent or disinfectant for use in pools, spas, and/or hot tubs, and wherein said label or another label associated with said packaging material indicates that (1) the level of active bromine should be maintained between 2-4 ppm in residential spas or hot tubs and 3-6 ppm in commercial spas or hot tubs with the pH of the water being adjusted to 7.2-7.6 prior to initiating treatment with the biocidal composition; and/or (2) the level of active bromine should be maintained between 1-4 ppm in swimming pools with the pH of the water being adjusted to 7.2-7.6 prior to initiating treatment with the biocidal composition, and wherein (a) the molar quantity of said at least one 1,3-dibromo-5,5-dialkylhydantoin introduced into an aqueous medium is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo on the basis of the amount of "free chlorine" that would be released in said aqueous medium by an equimolar quantity of N,N'-bromochloro-5,5-dimethylhydantoin.

Preferably the foregoing label or another label associated with the packaging material will indicate the hazards associated with the handling and use of the packaged composition, and if such article of manufacture is to be exported from one country to another, it is particularly preferred that such precautionary statements relating to such hazards be written in the language of the recipient country. More preferably, the foregoing label or another label associated with the packaging material will indicate that an active ingredient of the composition contained within said packaging material is the one or more of the above-specified 1,3-dibromo-5,5-dialkylhydantoins actually contained therein. Still more preferably, the actual proportion or percentage (typically in terms of wt%) of such one or more 1,3-dibromo-5,5-dialkylhydantoins in the packaged composition will be specified or at least indicated on such label. Even more preferably, such labeling will indicate the actual proportion or percentage (typically in terms of wt%) of inactive contents in the composition contained within said packaging material.

In accordance with preferred embodiments of this invention, there is provided an article of manufacture as described above wherein said packaging material comprises a label that, *inter alia,* identifies the product by name, indicates its function(s) uses or use patterns, and identifies as an active ingredient of the composition contained within said packaging material, the one or more such 1,3-dibromo-5,5-dialkylhydantoins actually contained therein.

More preferably, the foregoing label will additionally set forth at least one or more (and most preferably all) of the following:
- a): the amount (typically in terms of wt%) of each active ingredient present in the composition;
- b): precautionary statements relating to hazards to humans and domestic animals associated with the handling and use of the composition;
- c): description of environmental hazards associated with discharge of the composition into the environment;
- d): description of physical and chemical hazards, and indications of how to avoid or at least reduce such hazards in use;
- e): advice on storage of the product, and on disposal of the product and containers;
- f): advice concerning practical treatment and first aid to be used in the event of contact of the composition with eyes or skin, or if the composition is ingested (swallowed) or inhaled;
- g): directions for use, including but not limited to dosage rates associated with specified use patterns; and
- h): EPA registration number, EPA establishment number, and name and address of the registrant (*i.e.,* the registration holder).

This invention provides thus an article of manufacture capable of providing to the purchaser or user thereof (A) microbiological control in an aqueous medium such as wastewater, recirculating cooling water systems, once-through cooling water systems, brewery pasteurizers, recreational water, pulp and paper mill systems, air washer systems, air and gas scrubber systems, decorative fountains, or any combination of any two or more of these, wherein the recreational water referred to comprises one or more of swimming pools, hot tubs, and spas, and/or (B) eradication or reduction of biofilm on a surface in contact with such aqueous medium. This article of manufacture comprises a packaging material and a biocidal composition contained within said packaging material. The biocidally-active ingredient of such composition is at least one 1,3-dibromo-5,5-dialkyl-hydantoin in which one of the alkyl groups in the 5-position is a methyl group and the other alkyl group in the 5-position contains in the range of 1 to 4 carbon atoms (DBDAH). The packaging material comprises a label that indicates that the product can be used as a biocidal agent or disinfectant for water treatment and contains recommended dosage rates for use or use patterns (types of systems to be treated), whereby in use (i) the molar quantity of the DBDAH introduced into the water can be less than the molar quantity of N,N'-bromochloro-5,5-dimethylhydantoin (BCDMH) that would be required to effect the same degree of microbiological control in such medium, (ii) the quantity of DBDAH introduced into such aqueous medium releases an amount of "free chlorine" that is greater than the amount of "free chlorine" that would be released in such medium by an equimolar quantity of BCDMH, and (iii) the amount of "free chlorine" released by the quantity of such af least one DBDAH introduced into such aqueous medium is greater than the amount of "free chlorine" that could be predicted to be released by that quantity of DBDAH on the basis of the amount of "free chlorine" that would be released in such medium by an equimolar quantity of BCDMH. The most preferred DBDAH used in this embodiment is 1,3-dibromo-5,5-dimethylhydantoin (DBDMH).

In one particularly preferred embodiment of this invention, there is provided an article of manufacture comprising a packaging material and a biocidal composition contained within said packaging material, wherein said biocidal composition comprises as an active ingredient(s) of the composition at least at least 95 wt%, more preferably at least 97 wt%, and most preferably at least 99 wt%, of one or more 1,3-dibromo-5,5-dialkylhydantoins in which one of the alkyl groups in the 5-position is a methyl group and in which the other alkyl group in the 5-position has in the range of 1 to 4 carbon atoms, most preferably 1,3-dibromo-5,5-dimethylhydantoin, with the balance, if any, to 100 wt% being inactive ingredient(s), wherein said packaging material comprises a label that indicates that the product can be used as a biocide for wastewater, recirculating cooling water systems, once-through cooling water systems, brewery pasteurizers, pulp and paper mill systems, air washer systems, air and gas scrubber systems, or decorative fountains, or any combination of any two or more of these. In addition it is preferred that the label indicate that the product can be used as a biocide for at least four (4) of the foregoing eight (8) uses or use patterns, and most preferably for all eight (8) of the foregoing eight (8) uses or use patterns. It is further preferred that such label indicate that the dosage rate for at least one (1) and more preferably at least four (4) of the foregoing eight (8) uses or use patterns be such as to maintain a residual bromine level of 0.5-5 ppm or as needed to maintain control.

In one particularly preferred embodiment ofthis invention, there is provided an article of manufacture comprising a packaging material and a biocidal composition contained within said packaging material, wherein said biocidal composition comprises as an active ingredient of the composition at least 95 wt%, more preferably at least 97 wt%, and most preferably at least 99 wt%, of one or more 1,3-dibromo-5,5-dialkylhydantoins in which one of the alkyl groups in the 5-position is a methyl group and in which the other alkyl group in the 5-position has in the range of 1 to 4 carbon atoms, most preferably 1,3-dibromo-5,5-dimethylhydantoin, with the balance, if any, to 100 wt% being inactive ingredient(s), wherein said packaging material comprises a label that indicates that the product can be used by manufacturers in formulating biocides for wastewater, recirculating cooling water systems, once-through cooling water systems, brewery pasteurizers, recreational water, pulp and paper mill systems, air washer systems, air and gas scrubber systems, decorative fountains, or hard surface sanitizers, or any combination of any two or more of these, wherein the recreational water referred to comprises one or more of swimming pools, hot tubs, and spas. In addition it is preferred that the label indicate that formulators using the product are responsible for EPA registration of their formulated products.

In another particularly preferred embodiment of this invention, there is provided an article of manufacture comprising a packaging material and a biocidal composition contained within said packaging material, wherein said biocidal composition comprises as an active ingredient of the composition at least at least 95 wt%, more preferably at least 97 wt%, and most preferably at least 99 wt%, of one or more 1,3-dibromo-5,5-dialkylhydantoins in which one of the alkyl groups in the 5-position is a methyl group and in which the other alkyl group in the 5-position has in the range of 1 to 4 carbon atoms, most preferably 1,3-dibromo-5,5-dimethylhydantoin, with the balance, if any, to 100 wt% being inactive ingredient(s), wherein said packaging material comprises a label that indicates that the product can be used as a biocidal agent or disinfectant for use in pools, spas, and/or hot tubs. It is further preferred that such label indicate that:
1) the level of active bromine be maintained between 2-4 ppm in residential spas or hot tubs and 3-6 ppm in commercial spas or hot tubs with the pH of the water being adjusted to 7.2-7.6 prior to initiating treatment with the biocidal composition; and/or
2) the level of active bromine be maintained between 1-4 ppm in swimming pools with the pH of the water being adjusted to 7.2-7.6 prior to initiating treatment with the biocidal composition.

Another embodiment of this invention is the method of purveying a microbiological control agent for water, which method comprises purveying an article of manufacture of this invention as described herein.

Typically, the biocidal compositions or water control agents provided pursuant to this invention will be in powder form, or in a compacted form, such as granules, nuggets, pellets, tablets, briquettes, or pucks.

One category of biocidally-active compositions a biocide or disinfectant in which at least 20 wt%, preferably at least 50 wt%, more preferably at least 90 wt%, and most preferably at least 95 wt% of the biocide or disinfectant composition is one or a mixture of the above 1,3-dibromo-5,5-dialkylhydantoins (DBDAH). The balance, if any, to 100 wt% is made up of one or more biocidally-inactive ingredients, such as for example one or more binders, fillers, excipients, dyes or colorants, perfumes, stabilizers, and/or manufacturing by-products.

Thus articles of manufacture as described above in which are packaged biocidal or disinfectant compositions consisting essentially of one or a mixture of the above-described 1,3-dibromo-5,5-dialkylhydantoins (DBDAH) identified on a label affixed to or held in contact with the package and visible from the exterior of the package, as the active ingredient(s) are provided by this invention. Likewise this invention provides articles of manufacture as described above in which are packaged biocidal or disinfectant compositions consisting essentially of (i) 20 to 99.9 wt% of one or a mixture of such 1,3-dibromo-5,5-diallrylhydantoins (DBDAH) identified on a label affixed to or held in contact with the package and visible from the exterior of the package, as the active ingredient(s) together with (ii) 0.1 to 80 wt% of one or more biocidally-inactive ingredients, the total of (i) and (ii) being 100 wt%.

The 1,3-dibromo-5,5-dialkylhydantoins utilized in the practice of this second aspect of this invention are those described above in connection with the first aspect of this invention, including (a) the respective preferred, more preferred, and even more preferred members of those identified above from the cost effectiveness standpoint, and (b) the preferred and particularly preferred mixtures of the 1,3-dibromo-5,5-diallcylhydantoins identified above. As in the first aspect, the most preferred biocide employed in the practice of this aspect of the invention is 1,3-dibromo-5,5-dimethylhydantoin. Also as in the case of the first aspect, when a mixture of two or more of the 1,3-dibromo-5,5-dialkylhydantoins is made up or used pursuant to this aspect of the invention, the individual biocides of the mixture can be in any proportions relative to each other.

As noted above, the biocidally-inactive ingredient(s) may include for example one or more binders, fillers, excipients, dyes or colorants, stabilizers, perfumes, and/or manufacturing by-products. Most of these inactive ingredients are conventional, and are well-known to those of ordinary skill in the art. Such inactive ingredients to the extent present in detectible quantities are disclosed to the U.S. Environmental Protection Agency in terms of their chemical composition in a confidential disclosure form. Such ingredients are typically referred to on the label as "other" ingredients, "inert" ingredients, "inactive" ingredients or by a use of a term of similar import. As noted above, a preferred type of binder for producing compacted products of this invention is a saturated, normally solid, fatty amide as described in U.S. Pat. No. 5,565,576, and a particularly preferred type of binder for this use is a micronized synthetic polyolefin-based hydrocarbon wax and/or a micronized synthetic polyfluorocarbon wax effective to form the compacted product, provided the wax is suitably compatible with the DBDAH, such as described above in connection with the first aspect of this invention.

It can be seen therefore that the compositions of the first aspect of this invention are provided in suitably packaged and labeled form pursuant to this second aspect of the invention. Such packaged and labeled compositions are of the first category of this second aspect of the invention.

Naturally all applicable laws, rules, and regulations of the country or countries in which the article of manufacture of this invention is manufactured, sold, transported, and used need to be complied with, including all matters pertaining to the labeling on the article of manufacture.

In certain embodiments of this invention the packaging material comprises a label that indicates, denotes, designates, signifies, or specifies that an active ingredient of the composition is one or more such 1,3-dibromo-5,5-dialkylhydantoins (DBDAH). In addition, such label will indicate, denote, designate, signify or specify the percentage of the DBDAH actually present in the composition, such percentage being at least 20 wt%, preferably at least 50 wt%, more preferably at least 90 wt%, and most preferably in the range of 95 to 100 wt% of the total ingredients of the biocide or disinfectant composition.

The packaging material itself can comprise glass, plastic, metal, cardboard, or any other suitable inert material, or any combination of materials, that does not react with any of the ingredients therein. The packaging material serves as one or more containers for the biocidal composition, and may itself define an enclosure in which at least a portion of the interior walls is in direct contact with the ingredients therein, such as for example, a box, drum, pail, can, bag, jar or similar container. Such interior walls may have, and if the container is a metal container should have, a protective coating or liner thereon. Alternatively, the packaging material may comprise an exterior portion serving as housing for one or more internal containers encased within the exterior portion, such as for example a box, crate, bag, drum, or jar within which is disposed at least one internal container. For example the packaging material can be an outer container such as a box or pail containing one or more bags or boxes in which the ingredients are disposed. Other similar packaging materials may occur to those of ordinary skill in the art after a reading of this disclosure.

The packaging material preferably also comprises one or more entrance sites enabling the contents of the package to be withdrawn, for example either (i) directly as all or a portion of the ingredients (*e.g*., by pouring, scooping, unwrapping, or otherwise extracting or recovering ingredients from the package), or (ii) indirectly as one or more intact smaller packages, which smaller packages in turn are opened as needed to gain access to the ingredients. These and perhaps other ways of providing access to the ingredients will, after reading this disclosure, be readily apparent to those of ordinary skill in the art.

Typically, the label is suitably affixed to the exterior of the packaging material. However, a transparent (or slightly translucent) overwrap may be applied to the package or packages over the label so that the label can be read without removing the overwrap. For example, a plurality of unlabeled containers can be disposed on a pallet with a transparent overwrap affixed to the upper portion of the pallet and encasing the containers. In such a package, a label can be disposed within the overwrap at a site which can be viewed from the exterior. Similarly, the package can be a rigid or semi-rigid container encased by transparent shrink film which also encases the label so that it can be viewed from the exterior.

Preferably the label is adhesively attached to the exterior of the packaging material, as for example by use of a printed paper label with a suitable adhesive substance on its reverse side. Alternatively, the label may be imprinted directly onto the exterior surface of the packaging material, for example by use of a screen printing process. Any other suitable way of labeling the packing material, e.g., stenciling, may be used, if desired.

Preferably, the label of the articles of manufacture of this invention will identify the active ingredient(s) of the composition contained within the package, at least one of which must be DBDAH. In addition, the preferred labels-will specify the amount (typically in terms of wt%) of each active ingredient present in the composition contained within the package, as well as the amount (typically in terms of wt%) of any inactive ingredient(s) present in the composition contained within the package. In more preferred articles of manufacture of this invention, the label will also contain dosage rate information. In each embodiment of this invention it is desirable, if not required, to include a visible sticker indicating that the contents of the package constitute an oxidizing agent.

All of the description and explanation given above with respect to the first aspect of this invention regarding "free chlorine" and "total chlorine" and test procedures, including the DBDAH and BCDMH test procedure, applies equally well to the second aspect of this invention, and thus need not be repeated here.

The packaged biocide of this invention can be in the form of a powder, granules, nuggets, caplets, pellets, tablets, briquettes, or pucks. When the packaged biocidal product of this invention contains as the sole active ingredient 1,3-dibromo-5,5-dimethylhydantoin in a compacted form, such compacted form can be produced without use of a binder provided that the average particle size of the 1,3-dibromo-5,5-dimethylhydantoin (DBDMH) is at least 175 microns. Alternatively and more preferably, the compacted forms of DBDMH, and in fact of any and all DBDAH, are produced with use of a binder. Preferred binders (fatty amide binders) and particularly preferred binders (micronized synthetic polyolefin-based hydrocarbon wax and/or a micronized synthetic polyfluorocarbon wax) for such use have been described and referred to above.

The amount of the packaged biocides of this invention used is a biocidally effective amount, *e.g.,* an amount which is at least sufficient to achieve substantial microbiological control, if not complete microbiological control, in the water being treated and/or substantial biofilm eradication, if not complete biofilm eradication, from the surfaces in contact with the water system being treated. Such dosage level is preferably indicated on the label of the package. Typically, the dosages will fall within the range of 0.1 to 4.5 milligrams of "free chlorine" per liter of water (which corresponds to 0.2 to 10 milligrams of bromine, as Br₂, per liter of water). Preferably, such dosages are in the range of 0.1 to 2 milligrams of "free chlorine" per liter of water (which corresponds to 0.2 to 5 milligrams of bromine, as Br₂, per liter of water). However, departures from these ranges are permissible and are within the scope of this invention, provided that the departures result in sufficient microbiological control in accordance with the needs of the occasion, including applicable governmental regulations.

The efficacy of the packaged biocidal compositions of this invention in control of microbial infestations, was demonstrated in a series of tests was conducted at an independent microbiology and virology laboratory. *Escherichia coli* and *Enterococcus faecium* were the pathogens used in this study. One such series of tests utilized the AOAC Official Method, involved determinations of microbiological control against the *E. coli* bacteria. The other set of tests involved determinations of microbiological control against the *E. faecium.* In each case, comparative tests were carried out in the same manner utilizing N,N'-bromochloro-5,5-dimethylhydantoin. Briefly, the test involves exposing a culture of the microorganism to various concentrations of bromine solution prepared from an aqueous stock solution of the compound under test. At various time intervals the bromine in the test suspensions is chemically neutralized, and the amount of viable bacteria remaining is enumerated by plating onto nutrient agar and incubating for 2 days at 37°C. Results are expressed at the log₁₀ colony forming units (CFU). The concentration of the compound required to achieve complete kill (*i.e.,* no viable bacteria remain) within 3 0 seconds is determined in the test and reported to the U.S. Environmental Protection Agency to support the product registration as a disinfectant for swimming pools. Such testing is one of the requirements needed for product registration with the EPA, which in turn enables the product to be purveyed with labeling showing the efficacious dosage level of the product.

Table 4 summarizes the data obtained in the tests using respectively, 1,3-dibromo-5,5-dimethylhydantoin (DBDMH) and N,N'-bromochloro-5,5-dimethylhydantoin (BCDMH) and in which the microorganism in each case was *E. coli.* It can be seen that 1,3-dibromo-5,5-dimethylhydantoin passes the test at one milligram of bromine, as Br₂, per liter of water, as evidenced by the complete kill within 30 seconds, whereas 1,3-bromochloro-5,5-dimethylhydantoin requires two milligrams of bromine, as Br₂, per liter of water to achieve complete kill within 30 seconds.

**TABLE 4 - EFFECTIVENESS AGAINST E. COLI**

| Concentration mg/L as Br₂ | Contact Time | Log₁₀ CFU Recovered Using DBDMH | Log₁₀ CFU Recovered Using BCDMH |
|---|---|---|---|
| 0.5 mg/L | 30 sec | > 4.48 | > 4.48 |
| | 1 min | 1.70 | 4.46 |
| | 2 min | 0 | 1.65 |
| | 3 min | 0 | 0 |
| | 4 min | 0 | 0 |
| | 5 min | 0 | 0 |
| | 10 min | 0 | 0 |
| 1.0 mg/L | 30 sec | 0 | > 4.48 |
| | 1 min | 0 | 0.7 |
| | 2 min | 0 | 0 |
| | 3 min | 0 | 0 |
| | 4 min | 0 | 0 |
| | 5 min | 0 | 0 |
| | 10 min | 0 | 0 |
| 2.0 mg/L | 30 sec | 0 | 0 |
| | 1 min | 0 | 0 |
| | 2 min | 0 | 0 |
| | 3 min | 0 | 0 |
| | 4 min | 0 | 0 |
| | 5 min | 0 | 0 |
| | 10 min | 0 | 0 |

Table 5 summarizes the data obtained in the tests using respectively 1,3-dibromo-5,5-dimethylhydantoin (DBDMH) and N,N'-bromochloro-5,5-dimethylhydantoin (BCDMH) and in which the microorganism in each case was *E. faecium.* Table 5 shows that 1,3-dibromo-5,5-dimethylhydantoin passes the test at one milligram of bromine, as Br₂, per liter of water, as evidenced by the complete kill within 30 seconds, whereas N,N'-bromochloro-5,5-dimethylhydantoin requires two milligrams of bromine, as Br₂, per liter of water to achieve complete kill within 30 seconds.

**TABLE 5 - EFFECTIVENESS AGAINST E. FAECIUM**

| Concentration mg/L as Br₂ | Contact Time | Log₁₀ CFU Recovered Using DBDMH | Log₁₀ GFU Recovered Using BCDMH |
|---|---|---|---|
| 0.5 mg/L | 30 sec | 4.32 | >4.48 |
| | 1 min | 2.36 | 3.53 |
| | 2 min | 0 | 2.63 |
| | 3 min | 0 | 0 |
| | 4 min | 0 | 0 |
| | 5 min | 0 | 0 |
| | 10 min | 0 | 0 |
| 1.0 mg/L | 30 sec | 0 | >4.48 |
| | 1 min | 0 | 2.38 |
| | 2 min | 0 | 0 |
| | 3 min | 0 | 0 |
| | 4 min | 0 | 0 |
| | 5 min | 0 | 0 |
| | 10 min | 0 | 0 |
| 2.0 mg/L | 30 sec | 0 | 0 |
| | 1 min | 0 | 0 |
| | 2 min | 0 | 0 |
| | 3 min | 0 | 0 |
| | 4 min | 0 ' | 0 |
| | 5 min | 0 | 0 |
| | 10 min | 0 | 0 |

It can be seen that this second aspect enables provision of suitably packaged and labeled articles containing the biocidal compositions that can be used in accordance with, and which provide the various advantages of, the first aspect of this invention, including the subject matter of A) through X) above.

References herein to biofilm on a surface in contact with an aqueous medium or water, are not to be construed as requiring the aqueous medium or water to be in constant contact with such surface. As long as the aqueous medium or water comes into contact with a surface often enough to result in the formation of biofilm on such surface, it is within the scope of this invention to treat such aqueous medium or water pursuant to this invention so as to combat such biofilm. For example, this invention includes treatment of aqueous media or water that is splashed, sprayed, or dripped on or against a surface with sufficient frequency for biofilm to develop on such surface. It is also to be understood that the aqueous medium or the water can contain any of a variety of contaminants and/or impurities. The only requirements are that such aqueous medium or water periodically or constantly contacts a surface such that the formation of biofilm occurs on the surface, and that the contaminants and/or impurities in the aqueous medium or water do not prevent the 1,3-dibromo-5,5-dialkylhydantoin(s) such as 1,3-dibromo-5,5-dimethylhydantoin, from eradicating, or at least reducing the amount of, the biofilm on such surface.

As used herein, including the claims, the term "purveying" means carrying out or causing to be carried out one or more of the following activities: advertising, marketing, promoting for sale, offering for sale, selling, bartering, trading, leasing, merchandising, importing, exporting, dealing in commerce with, supplying, distributing, delivering, and any and all other activities of similar import.

As used herein, including the claims, the terms "aqueous medium" and "water" refer to and include any liquid in which the predominate liquid component is water. Such aqueous medium or water may contain various other materials, whether organic or inorganic, or both, and is exemplified by recreational water, industrial cooling water, process water and wastewater. As is well known in the art, if the water has a pH of at least about 8, it is not included in the category of recreational water, at least at the present time in the United States.

Compounds referred to by chemical name or formula anywhere in this document, whether referred to in the singular or plural, are identified as they exist prior to coming into contact with another substance referred to by chemical name or chemical type (*e.g.*, another component or a solvent). It matters not what preliminary chemical changes, if any, take place in the resulting mixture or solution, as such changes are the natural result of bringing the specified substances together under the conditions called for pursuant to this disclosure. Also, even though the claims may refer to substances in the present tense (*e.g.*, "comprises" or "is"), the reference is to the substance as it exists at the time just before it is first contacted, blended or mixed with one or more other substances in accordance with the present disclosure.

Except as may be expressly otherwise indicated, the article "a" or "an" if and as used herein is not intended to limit, and should not be construed as limiting, a claim to a single element to which the article refers. Rather, the article "a" or "an" if and as used herein is intended to cover one or more such elements, unless the teart expressly indicates otherwise.

It will also be understood that the terms "substantial" and "substantially" denote that chemical operations or treatments ordinarily do not involve absolutes. Thus instead of describing a variable or a result as an absolute, it is far more realistic to describe the variable or result as being in the substantial vicinity of the expressed variable or result. For example when describing eradication of an organism, it can be more realistic to refer to the substantial eradication of the organism rather than to imply that absolute total eradication occurs, since one skilled in the art fully realizes that a substantial kill is a very desirable result, and the possibility always exists that even if a small portion of the organism survives the treatment, the overall result is nevertheless highly beneficial in most cases. Thus this document should be read with the application of reason and common sense.

As used herein the term "water-soluble" means that the biocidally-active ingredient in question has at least sufficient solubility to provide adequate biological control in the water in which it is used. The ingredient may still have greater solubility but need not be soluble in all proportions in water.

As used herein the term "sticker" means any label which can be affixed by any method to packaging material such that the contents of the sticker can be perceived visually from the exterior of the package.

This invention is susceptible to considerable variation in its practice. Therefore the foregoing description is not intended to limit, and should not be construed as limiting, the invention to the particular exemplifications presented hereinabove.

## Claims

1. A method of providing microbiological control in an aqueous medium having a pH of at least about 8.0 and/or eradication or reduction of biofilm on a surface in contact with such aqueous medium, which method comprises introducing into the aqueous medium a microbiocidally effective amount of a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhy-dantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, wherein (i) the molar quantity of said at least one 1,3-dibromo-5,5-dialkylhydantoin introduced into said aqueous medium is less than the molar quantity of N,N'-bromochloro-5,5-dimethylhydantoin that would be required to effect the same degree of microbiological control in said medium, (ii) the quantity of said at least one 1,3-dibromo-5,5-dialkylhydantoin introduced into said aqueous medium releases an amount of "free chlorine" that is greater than the amount of "free chlorine" that would be released in said medium by an equimolar quantity of N,N'-bromochloro-5,5-dimethylhydantoin, and (iii) the amount of "free chlorine" released by the quantity of said at least one 1,3-dibromo-5,5-dialkylhydantoin introduced into said medium is greater than the amount of "free chlorine" that could be predicted to be released by that quantity of said at least one 1,3-dibromo-5,5-dialkylhydantoin on the basis of the amount of "free chlorine" that would be released in said medium by an equimolar quantity of N,N'-bromochloro-5,5-dimethylhydantoin.

2. A method of Claim 1 wherein said at least one 1,3-dibromo-5,5-dialkylhydantoin is 1,3-dibromo-5-isobutyl-5-methylhydantoin.

3. A method of Claim 1 wherein said at least one 1,3-dibromo-5,5-dialkylhydantoin is 1,3-dibromo-5-n-propyl-5-methylhydantoin.

4. A method of Claim 1 wherein said at least one 1,3-dibromo-5,5-dialkylhydantoin is 1,3-dibromo-5-ethyl-5-methylhydantoin.

5. A method of Claim 1 wherein said at least one 1,3-dibromo-5,5-dialkylhydantoin is a mixture of two or more of said 1,3-dibromo-5,5-dialkylhydantoins.

6. A method of Claim 1 wherein said at least one 1,3-dibromo-5,5-dialkylhydantoin is a mixture of 1,3-dibromo-5,5-dimethylhydantoin and 1,3-dibromo-5-ethyl-5-methylhydantoin.

7. A method of claim 1 wherein said aqueous medium has a pH of at least about 8.0, and wherein said at least one 1,3-dibromo-5,5-dialkylhydantoin is 1,3-dibromo-5,5-dimethylhydantoin.

8. A method of Claim 7 wherein the 1,3-dibromo-5,5-dimethylhydantoin being used has an average particle size of at least about 175 microns.

9. A method of Claim 7 wherein the 1,3-dibromo-5,5-dimethylhydantoin being used has an average particle size of at least about 200 microns.

10. A method of Claim 7 wherein the 1,3-dibromo-5,5-dimethylhydantoin being used has an average particle size of at least about 300 microns.

11. A method of Claim 7 wherein the 1,3-dibromo-5,5-dimethylhydantoin being used is in the form of a shape-retentive pressure compacted article produced by pressure compacting 1,3-dibromo-5,5-dimethylhydantoin particulate solids without use of a binder and without prior treatment of such solids to enhance their compactibility.

12. A method of Claim 11 wherein the 1,3-dibromo-5,5-dimethylhydantoin particulate solids used in forming said article had, prior to compaction, an average particle size of at least about 175 microns.

13. A method of Claim 7 wherein the 1,3-dibromo-5,5-dimethylhydantoin being used is in the form of a shape-retentive pressure compacted article produced by pressure compacting 1,3-dibromo-5,5-dimethylhydantoin particulate solids with use of a binder.

14. A method of Claim 13 wherein the 1,3-dibromo-5,5-dimethylhydantoin particulate solids used in forming said article had, prior to compaction, an average particle size of at least about 175 microns.

15. A method of Claim 7 wherein the 1,3-dibromo-5,5-dimethylhydantoin being used is in the form of a compacted product produced using as a binder an amount of a micronized synthetic polyolefin-based hydrocarbon wax and/or a micronized synthetic polyfluorocarbon wax effective to form said compacted product, said wax being compatible with said 1,3-dibromo-5,5-dimethylhydantoin.

16. A method of Claim 15 wherein said wax is polyethylene wax having, prior to compaction, an average particle size of no greater than about 15 microns, a maximum particle size of no greater than about 40 microns, and a density in the range of about 0.9 to about 1.4 grams per cc at 25 °C.

17. A method of Claim 15 wherein said wax is a polyethylene wax that melts at a temperature in the range of about 109°C to about 111 C.

18. A method of Claim 15 wherein said wax is polypropylene wax having, prior to compaction, an average particle size in the range of about 5.0 to about 7.0 microns, a maximum particle size of about 22 microns, and a density in the range of about 0.9 to about 1.4 grams per cc at 25 °C.

19. A method of Claim 15 wherein said wax is a polypropylene wax that melts at a temperature in the range of about 140°C to about 143 °C, that prior to compaction has an average particle size in the range of about 5.0 to about 7.0 microns, and that prior to compaction has a maximum particle size of about 22 microns.

20. A method of Claim 7 wherein the 1,3-dibromo-5,5-dimethylhydantoin being used is in the form of a compacted product formed from 1,3-dibromo-5,5-dimethylhydantoin having an average particle size of at least 175 microns, and wherein said compacted product was produced using as a binder an amount of a saturated, normally solid, fatty amide effective to form said compacted product.

21. A method of Claim 20 wherein the 1,3-dibromo-5,5-dimethylhydantoin used in forming said compacted product had an average particle size of at least about 200 microns.

22. A method of Claim 20 wherein the 1,3-dibromo-5,5-dimethylhydantoin used in forming said compacted product had an average particle size of at least about 300 microns.

23. A method of effecting microbiocidal activity in water having a pH of at least about 8.0, which method comprises providing in the water using a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhy-dantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, a microbiocidally effective amount of "free chlorine" that is greater than could be predicted from the amount of "free chlorine" that would be released in said water by an equimolar quantity of N,N'-bromochloro-5,5-dimethylhydantoin, while using a smaller molar quantity of said at least one 1,3-dibromo-5,5-dialkylhydantoin than the molar quantity of N,N'-bromochloro-5,5-dimethylhydantoin that would be required to release in said water the same microbiocidally effective amount of "free chlorine."

24. A method of Claim 23 wherein said at least one 1,3-dibromo-5,5-dialkylhydantoin is 1,3-dibromo-5-isobutyl-5-methylhydantoin.

25. A method of Claim 23 wherein said at least one 1,3-dibromo-5,5-dialkylhydantoin is 1,3-dibromo-5-n-propyl-5-methylhydantoin.

26. A method of Claim 23 wherein said at least one 1,3-dibromo-5,5-dialkylhydantoin is 1,3-dibromo-5-ethyl-5-methylhydantoin.

27. A method of Claim 23 wherein said at least one 1,3-dibromo-5,5-dialkylhydantoin is a mixture of two or more of said 1,3-dibromo-5,5-dialkylhydantoins.

28. A method of Claim 23 wherein said at least one 1,3-dibromo-5,5-dialkylhydantoin is a mixture of 1,3-dibromo-5,5-dimethylhydantoin and 1,3-dibromo-5-ethyl-5-methylhydantoin.

29. A method of effecting microbiocidal activity in water having a pH of at least about 8.0, which method comprises providing in such water using a microbiocidal agent consisting of 1,3-dibromo-5,5-dimethylhydantoin, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, a microbiocidally effective amount of "free chlorine" that is greater than could be predicted from the amount of "free chlorine" that would be released in said water by an equimolar quantity of N,N'-bromochloro-5,5-dimethylhydantoin, while using a smaller quantity by weight of 1,3-dibromo-5,5-dimethylhydantoin than the quantity by weight of N,N'-bromochloro-5,5-dimethylhydantoin that would be required to release in said water the same microbiocidally effective amount of "free chlorine".

30. A method of Claim 29 wherein the 1,3-dibromo-5,5-dimethylhydantoin being used has an average particle size of at least about 175 microns.

31. A method of Claim 29 wherein the 1,3-dibromo-5,5-dimethylhydantoin being used has an average particle size of at least about 200 microns.

32. A method of Claim 29 wherein the 1,3-dibromo-5,5-dimethylhydantoin being used has an average particle size of at least about 300 microns.

33. A method of Claim 29 wherein the 1,3-dibromo-5,5-dimethylhydantoin being used is in the form of a shape-retentive pressure compacted article produced by pressure compacting 1,3-dibromo-5,5-dimethylhydantoin particulate solids with use of a binder.

34. A method of Claim 33 wherein the 1,3-dibromo-5,5-dimethylhydantoin particulate solids used in forming said article had, prior to compaction, an average particle size of at least about 175 microns.

35. A method of Claim 29 wherein the 1,3-dibromo-5,5-dimethylhydantoin being used is in the form of a compacted product produced using as a binder an amount of a micronized synthetic polyolefin-based hydrocarbon wax and/or a micronized synthetic polyfluorocarbon wax effective to form said compacted product, said wax being compatible with said 1,3-dibromo-5,5-dimethylhydantoin.

36. A method of Claim 35 wherein said wax is polyethylene wax having, prior to compaction, an average particle size of no greater than about 15 microns, a maximum particle size of no greater than about 40 microns, and a density in the range of about 0.9 to about 1.4 grams per cc at 25°C.

37. A method of Claim 35 wherein said wax is a polyethylene wax that melts at a temperature in the range of about 109°C to about 111 °C.

38. A method of Claim 35 wherein said wax is polypropylene wax having, prior to compaction, an average particle size in the range of about 5.0 to about 7.0 microns, a maximum particle size of about 22 microns, and a density in the range of about 0.9 to about 1.4 grams per cc at 25 °C.

39. A method of Claim 35 wherein said wax is a polypropylene wax that melts at a temperature in the range of about 140°C to about 143 °C, that prior to compaction has an average particle size in the range of about 5.0 to about 7.0 microns, and that prior to compaction has a maximum particle size of about 22 microns.

40. A method of Claim 29 wherein the 1,3-dibromo-5,5-dimethylhydantoin being used is in the form of a compacted product formed from 1,3-dibromo-5,5-dimethylhydantoin having an average particle size of at least 175 microns, and wherein said compacted product was produced using as a binder an amount of a saturated, normally solid, fatty amide effective to form said compacted product.

41. A method of Claim 40 wherein the 1,3-dibromo-5,5-dimethylhydantoin used in forming said compacted product had an average particle size of at least about 200 microns.

42. A method of Claim 40 wherein the 1,3-dibromo-5,5-dimethylhydantoin used in forming said compacted product had an average particle size of at least about 300 microns.

43. A composition having microbiocidal activity, which composition comprises water having a pH of at least about 8.0 to which has been added a microbiocidally effective quantity of a microbiocidal agent which is selected from the group consisting of 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-dibromo-5-isobutyl-5-methylhydantoin, 1,3-dibromo-5-sec-butyl-5-methylhydantoin, 1,3-dibromo-5-tert-butyl-5-methylhydantoin, and mixtures of any two or more of these, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, (i) the molar quantity of said at least one 1,3-dibromo-5,5-dialkylhydantoin added being less than the molar quantity of N,N'-bromochloro-5,5-dimethylhydantoin required to effect the same degree of microbiocidal activity in said water, (ii) the quantity of said at least one 1,3-dibromo-5,5-dialkylhydantoin added releasing an amount of "free chlorine" that is greater than the amount of "free chlorine" that would be released in said water by an equimolar quantity of N,N'-bromochloro-5,5-dimethylhydantoin, and (iii) the amount of "free chlorine" released by the quantity of said at least one 1,3-dibromo-5,5-dialkylhydantoin added being greater than the amount of "free chlorine" that could be predicted to be released by that quantity of said at least one 1,3-dibromo-5,5-dialkylhydantoin on the basis of the amount of "free chlorine" that would be released in said water by an equimolar quantity of N,N'-bromochloro-5,5-dimethylhydantoin.

44. A composition of Claim 43 wherein said microbiocidal agent is 1,3-di-bromo-5-isobutyl-5-methylhydantoin.

45. A composition of Claim 43 wherein said microbiocidal agent is 1,3-di-bromo-5-n-propyl-5-methylhydantoin.

46. A composition of Claim 43 wherein said microbiocidal agent is 1,3-di-bromo-5-ethyl-5-methylhydantoin.

47. A composition of Claim 43 wherein said microbiocidal agent is a mixture of two or more of said microbiocidal agents.

48. A composition of Claim 43 wherein said microbiocidal agent is a mixture of 1,3-dibromo-5,5-dimethylhydantoin and 1,3-dibromo-5-ethyl-5-methylhydantoin.

49. A composition having microbiocidal activity, which composition comprises water having a pH of at least about 8.0 containing a microbiocidally effective amount of "free chlorine" provided in the water by a microbiocidal agent which is selected from the group consisting of 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-dibromo-5-isobutyl-5-methylhydantoin, 1,3-dibromo-5-sec-butyl-5-methylhydantoin, 1,3-dibromo-5-tert-butyl-5-methylhydantoin, and mixtures of any two or more of these, with the exception of dissolving 1,3-dibromo-5,5-dimethylhy-dantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, (i) the molar quantity of said at least one 1,3-di-bromo-5,5-dialkylhydantoin providing said amount of "free chlorine" in the water being less than the molar quantity of N,N'-bromochloro-5,5-dimethylhydantoin required to effect the same degree of microbiocidal activity in said water, (ii) the quantity of said at least one 1,3-dibromo-5,5-dialkylhydantoin providing said amount of "free chlorine" releasing an amount of "free chlorine" that is greater than the amount of "free chlorine" that would be released in said water by an equimolar quantity of N,N'-bromochloro-5,5-dimethylhydantoin, and (iii) the amount of "free chlorine" released by the quantity of said at least one 1,3-dibromo-5,5-dialkylhy-dantoin providing said amount of "free chlorine" being greater than the amount of "free chlorine" that could be predicted to be released by that quantity of said at least one 1,3-dibromo-5,5-dialkylhydantoin on the basis of the amount of "free chlorine" that would be released in said water by an equimolar quantity of N,N'-bromochloro-5,5-di-methylhydantoin.

50. A composition of Claim 49 wherein said microbiocidal agent is 1,3-dibromo-5-isobutyl-5-methylhydantoin.

51. A composition of Claim 49 wherein said microbiocidal agent is 1,3-di-bromo-5-n-propyl-5-methylhydantoin.

52. A composition of Claim 49 wherein said microbiocidal agent is 1,3-di-bromo-5-ethyl-5-methylhydantoin.

53. A composition of Claim 49 wherein said microbiocidal agent is a mixture of two or more of said microbiocidal agents.

54. A composition of Claim 49 wherein said microbiocidal agent is a mixture of 1,3-dibromo-5,5-dimethylhydantoin and 1,3-dibromo-5-ethyl-5-methylhydantoin.

55. A composition having microbiocidal activity, which composition comprises water having a pH of at least about 8.0 to which has been added a microbiocidally effective quantity of a microbiocidal agent which is 1,3-dibromo-5,5-dimethylhydantoin, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, (i) the quantity by weight of 1,3-dibromo-5,5-dimethylhydantoin added being less than the quantity by weight of N,N'-bromochloro-5,5-dimethylhydantoin required to effect the same degree of microbiocidal activity in said water, (ii) the quantity of 1,3-di-bromo-5,5-dimethylhydantoin added releasing an amount of "free chlorine" that is greater than the amount of "free chlorine" that would be released in said water by an equimolar quantity of N,N'-bromochloro-5,5-dimethylhydantoin, and (iii) the amount of "free chlorine" released by the quantity of the 1,3-dibromo-5,5-dimethylhydantoin added being greater than the amount of "free chlorine" that could be predicted to be released by that quantity of the 1,3-dibromo-5,5-dimethylhydantoin on the basis of the amount of "free chlorine" that would be released in said water by an equimolar quantity of N,N'-bromochloro-5,5-dimethyl-hydantoin.

56. A composition having microbiocidal activity, which composition comprises water having a pH of at least about 8.0 containing a microbiocidally effective amount of "free chlorine" provided in the water by a microbiocidal agent which is 1,3-dibromo-5,5-dimethylhydantoin, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, (i) the quantity by weight of 1,3-dibromo-5,5-dimethylhydantoin providing said amount of "free chlorine" in the water being less than the quantity by weight of N,N'-bromochloro-5,5-dimethylhydantoin required to effect the same degree of microbiocidal activity in said water, (ii) the quantity of 1,3-dibromo-5,5-dimethylhydantoin providing said amount of "free chlorine" releasing an amount of "free chlorine" that is greater than the amount of "free chlorine" that would be released in said water by an equimolar quantity of N,N'-bromochloro-5,5-dimethylhydantoin, and (iii) the amount of "free chlorine" released by the quantity of 1,3-dibromo-5,5-dimethylhydantoin providing said amount of "free chlorine" being greater than the amount of "free chlorine" that could be predicted to be released by that quantity of 1,3-dibromo-5,5-dimethylhydantoin on the basis of the amount of "free chlorine" that would be released in said water by an equimolar quantity of N,N'-bromochloro-5,5-dimethylhydantoin.

57. A method for determining a quantity of a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, to be used in microbiocidal treatment of water having a pH of at least about 8.0, said method comprising (i) determining the "free chlorine" concentrations of samples of said water containing respectively N,N'-bromochloro-5,5-dimethylhydantoin and said at least one 1,3-dibromo-5,5-dialkylhydantoin, (ii) determining the "total chlorine" values of samples of said water containing respectively N,N'-bromochloro-5,5-dimethylhydantoin and said at least one 1,3-dibromo-5,5-dialkylhydantoin, and (iii) determining respectively for N,N'-bromochloro-5,5-dimethylhydantoin and said at least one 1,3-dibromo-5,5-dialkylhydantoin the relative extent of hydrolysis to species which register as "free chlorine", thereby enabling the amount of said at least one 1,3-dibromo-5,5-dialkylhydantoin to be used in achieving the target dose of "free chlorine" selected to effect or maintain microbiological control in the water being subjected to treatment.

58. A method of Claim 57 wherein said at least one 1,3-dibromo-5,5-dialkylhydantoin is 1,3-dibromo-5-isobutyl-5-methylhydantoin.

59. A method of Claim 57 wherein said at least one 1,3-dibromo-5,5-dialkylhydantoin is 1,3-dibromo-5-n-propyl-5-methylhydantoin.

60. A method of Claim 57 wherein said at least one 1,3-dibromo-5,5-dialkylhydantoin is 1,3-dibromo-5-ethyl-5-methylhydantoin.

61. A method of Claim 57 wherein said at least one 1,3-dibromo-5,5-dialkylhydantoin is a mixture of two or more of said 1,3-dibromo-5,5-dialkylhydantoins.

62. A method of Claim 57 wherein said at least one 1,3-dibromo-5,5-dialkylhydantoin is a mixture of 1,3-dibromo-5,5-dimethylhydantoin and 1,3-dibromo-5-ethyl-5-methylhydantoin.

63. A method of Claim 57 wherein said at least one 1,3-dibromo-5,5-dialkylhydantoin is 1,3-dibromo-5,5-dimethylhydantoin.

64. The method of Claim 57 wherein Hach Method 8021 (copyright 1997) for determining "free chlorine" and Hach Method 8167 (copyright 1997) for determining "total chlorine" are used for the determinations in connection with a given body of water.

65. The method of Claim 57 wherein Hach Method 8021 (copyright 1997) for determining "free chlorine" and Hach Method 8167 (copyright 1997) for determining "total chlorine" are used for the determinations in connection with a given body of water.

66. A method of effecting biocidal activity in water having a pH of at least about 8.0, which method comprises providing in such water using a microbiocidal agent consisting of at least one 1,3-dibromo-5,5-dialkylhydantoin in which one of the alkyl groups in the 5-position is a methyl group and in which the other alkyl group in the 5-position has in the range of 1 to 4 carbon atoms, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, an amount of "free chlorine" that is greater than could be predicted from the amount of "free chlorine" that would be provided in said water by an equimolar amount of N,N'-bromochloro-5,5-dimethylhydantoin, as determinable by comparative testing as follows:
a) determining the amount of species of said at least one 1,3-dibromo-5,5-dialkylhydantoin and of N,N'-bromochloro-5,5-dimethylhydantoin which register respectively as "total chlorine" using Hach Method 8167 (copyright 1997, by Hach Company);
b) determining the amount of species of said at least one 1,3-dibromo-5,5-dialkylhydantoin and of N,N'-bromochloro-5,5-dimethylhydantoin which register respectively as "free chlorine" using Hach Method 8021 (copyright 1997, by Hach Company); and
c) determining respectively for said at least one 1,3-dibromo-5,5-dialkylhydantoin and N,N'-bromoChloro-5,5-dimethylhydantoin the relative extent of hydrolysis to species which register as "free chlorine."

67. A method of Claim 66 wherein said at least one 1,3-dibromo-5,5-dialkylhydantoin is 1,3-dibromo-5-isobutyl-5-methylhydantoin.

68. A method of Claim 66 wherein said at least one 1,3-dibromo-5,5-dialkylhydantoin is 1,3-dibromo-5-n-propyl-5-methylhydantoin.

69. A method of Claim 66 wherein said at least one 1,3-dibromo-5,5-dialkylhydantoin is 1,3-dibromo-5-ethyl-5-methylhydantoin.

70. A method of Claim 66 wherein said at least one 1,3-dibromo-5,5-dialkylhydantoin is a mixture of two or more of said 1,3-dibromo-5,5-dialkylhydantoins.

71. A method of Claim 66 wherein said at least one 1,3-dibromo-5,5-dialkylhydantoin is a mixture of 1,3-dibromo-5,5-dimethylhydantoin and 1,3-dibromo-5-ethyl-5-methylhydantoin.

72. A method of Claim 66 wherein said at least one 1,3-dibromo-5,5-dialkylhydantoin is 1,3-dibromo-5,5-dimethylhydantoin.

73. As a composition of matter, water having a pH of at least about 8.0 in which microbiological and/or biofilm activity is minimized if not eliminated by the addition thereto of an amount of "free chlorine" produced in the water by a microbiocidal agent which is selected from the group consisting of 1,3-dibromo-5,5-dimethylhydantoin, 1,3-dibromo-5-ethyl-5-methylhydantoin, 1,3-dibromo-5-n-propyl-5-methylhydantoin, 1,3-dibromo-5-isopropyl-5-methylhydantoin, 1,3-dibromo-5-n-butyl-5-methylhydantoin, 1,3-di-bromo-5-isobutyl-5-methylhydantoin, 1,3-dibromo-5-sec-butyl-5-methylhydantoin, 1,3-dibromo-5-tert-butyl-5-methylhydantoin, and mixtures of any two or more of these, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, wherein the amount of "free chlorine" actually present in the water is greater than could be predicted from the amount of "free chlorine" that would be provided in such water by an equimolar quantity of N,N'-bromochloro-5,5-dimethylhydantoin (BCDMH), as determinable by comparative testing as follows:
a) determining the amount of species of said at least one 1,3-dibromo-5,5-dialkylhydantoin and of BCDMH which register respectively as "total chlorine" using Hach Method 8167 (copyright 1997, by Hach Company); and
b) determining the amount of species of the DBDAH and of BCDMH which register respectively as "free chlorine" using Hach Method 8021 (copyright 1997, by Hach Company); and
c) determining respectively for the DBDAH and BCDMH the relative extent of hydrolysis to species which register as "free chlorine."

74. A composition of Claim 73 wherein said microbiocidal agent is 1,3-di-bromo-5-isobutyl-5-methylhydantoin.

75. A composition of Claim 73 wherein said microbiocidal agent is 1,3-di-bromo-5-n-propyl-5-methylhydantoin.

76. A composition of Claim 73 wherein said microbiocidal agent is 1,3-di-bromo-5-ethyl-5-methylhydantoin.

77. A composition of Claim 73 wherein said microbiocidal agent is a mixture of two or more of said microbiocidal agents.

78. A composition of Claim 73 wherein said microbiocidal agent is a mixture of 1,3-dibromo-5,5-dimethylhydantoin and 1,3-dibromo-5-ethyl-5-methylhydantoin.

79. A composition of Claim 73 wherein said at least one 1,3-dibromo-5,5-dialkylhydantoin is 1,3-dibromo-5,5-dimethylhydantoin.

80. A composition of Claim 73 wherein said microbiocidal agent is selected from 1,3-dibromo-5-isobutyl-5-methylhydantoin, 1,3-dibromo-5-n-propyl-5-methylhydantoin, 1,3-dibromo-5-ethyl-5-methylhydantoin, 1,3-dibromo-5,5-dimethylhydan-toin, or a mixture of at least any two of them.

81. A composition of Claim 73 wherein said microbiocidal agent is 1,3-dibromo-5,5-dimethylhydantoin.

82. An article of manufacture comprising a packaging material and a biocidal composition contained within said packaging material, wherein said biocidal composition is comprised of (i) at least one 1,3-dibromo-5,5-dialkylhydantoin in which one of the alkyl groups in the 5-position is a methyl group and the other alkyl group in the 5-position contains in the range of 1 to 4 carbon atoms as the only biocidally-active ingredient(s) in said composition, and (ii) at least one biocidally-inactive ingredient, wherein said biocidally-inactive ingredient is selected from the group consisting of binders, fillers, excipients, dyes or colorants, perfumes, stabilizers, and/or manufacturing by-products; wherein at least 90 wt.% of said biocidal composition is said at least one 1,3-dibromo-5,5-dialkylhydantoin; and wherein said packaging material comprises at least a label suitably identifying the name of the product in the package, and at least a sticker identifying the contents as being an oxidizing agent, wherein (a) the molar quantity of said at least one 1,3-dibromo-5,5-dialkylhydantoin introduced into an aqueous medium having a pH of at least about 8.0 is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkyl-hydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromo-chloro-5,5-dimethylhydantoin.

83. An article of manufacture of Claim 82 wherein said label or another label associated with said packaging material indicates hazards associated with the handling and use of the packaged composition.

84. An article of manufacture of Claim 83 wherein said at least one biocidally-inactive ingredient comprises a binder or a manufacturing by-product, or both.

85. An article of manufacture of Claim 84 wherein said label or another label associated with said packaging material indicates that the active ingredient of said biocidal composition contained within said packaging material is the one or more of said 1,3-dibromo-5,5-dialkylhydantoins actually contained therein.

86. An article of manufacture of Claim 85 wherein said label or another label associated with said packaging material indicates the proportion or percentage of the one or more 1,3-dibromo-5,5-dialkylhydantoins in the said biocidal composition contained in the packaged composition.

87. An article of manufacture of Claim 86 wherein said label or another label associated with said packaging material indicates the proportion or percentage of inactive contents in the composition contained within said packaging material.

88. An article of manufacture of Claim 86 wherein said label or another label associated with said packaging material include at least one of the following:
a) description of environmental hazards associated with discharge of the composition into the environment;
b) description of physical and chemical hazards, and indications of how to avoid or at least reduce such hazards in use;
c) advice on storage of the product, and on disposal of the product and containers;
d) advice concerning practical treatment and first aid to be used in the event of contact of the composition with eyes or skin, or if the composition is ingested (swallowed) or inhaled;
e) directions for use, including but not limited to dosage rates associated with specified use patterns; and
f) EPA registration number, EPA establishment number, and name and address of the registrant.

89. An article of manufacture of Claim 82 wherein said at least one 1,3-dibromo-5,5-dialkylhydantoin is 1,3-dibromo-5-isobutyl-5-methylhydantoin, 1,3-dibromo-5-n-propyl-5-methylhydantoin, or 1,3-dibromo-5-ethyl-5-methylhydantoin, and wherein said at least one biocidally-inactive ingredient comprises a binder or a manufacturing by-product, or both.

90. An article of manufacture of Claim 82 wherein said at least one 1,3-dibromo-5,5-dialkylhydantoin is a mixture of at least two of said 1,3-dibromo-5,5-dialkylhydantoins, one of which is 1,3-dibromo-5,5-dimethylhydantoin, and wherein said at least one biocidally-inactive ingredient comprises a binder or a manufacturing by-product, or both.

91. An article of manufacture of Claim 82 wherein said at least one 1,3-dibromo-5,5-dialkylhydantoin is a mixture of 1,3-dibromo-5,5-dimethylhydantoin and 1,3-dibromo-5-ethyl-5-methylhydantoin, and wherein said at least one biocidally-inactive ingredient comprises a binder or a manufacturing by-product, or both.

92. An article of manufacture of Claim 82 wherein said at least one 1,3-dibromo-5,5-dialkylhydantoin is 1,3-dibromo-5,5-dimethylhydantoin, and wherein said at least one biocidally-inactive ingredient comprises a binder or a manufacturing by-product, or both.

93. An article of manufacture of any of Claims 89, 90, 91, or 92 wherein said label or another label associated with said packaging material indicates hazards associated with the handling and use of the packaged composition.

94. An article of manufacture of any of Claims 89, 90, 91, or 92 wherein said label or another label associated with said packaging material indicates the proportion or percentage of the 1,3-dibromo-5,5-dialkylhydantoin(s) in the biocidal composition contained in the packaged composition, and the proportion or percentage of the biocidally-inactive ingredients in the composition contained within said packaging material.

95. An article of manufacture comprising a packaging material and a biocidal composition contained within said packaging material, wherein said biocidal composition is comprised of at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used as a biocide for wastewater, recirculating cooling water systems, once-through cooling water systems, brewery pasteurizers, pulp and paper mill systems, air washer systems, air and gas scrubber systems, or decorative fountains, or any two or more of these, and wherein said label or another label associated with said packaging material indicates that the dosage rate for at least one the foregoing eight uses or use patterns is such as to maintain a residual bromine level of 0.5-5 ppm or as needed to maintain biological control, and wherein (a) the molar quantity of said at least one 1,3-dibromo-5,5-dialkylhydantoin introduced into an aqueous medium having a pH of at least about 8.0 is less than the molar quantity of N,N'-bromochloro-5,5-dimethyl-hydantoin that would be required to effect the same degree of microbiological control in said aqueous medium, (b) the quantity of said at least one 1,3-dibromo-5,5-dialkylhy-dantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromochloro-5,5-dimethylhydantoin.

96. An article of manufacture of Claim 95 wherein said biocidal composition is comprised of at least 97 wt% of said one or more 1,3-dibromo-5,5-dialkylhydantoins, wherein said inactive ingredient(s) comprise at least a binder or a manufacturing by-product, or both, and wherein said packaging material further comprises a sticker identifying the contents as being an oxidizing agent.

97. An article of manufacture of Claim 95 wherein said one or more 1,3-dibromo-5,5-dialkylhydantoins are selected from the group consisting of 1,3-dibromo-5-isobutyl-5-methylhydantoin, 1,3-dibromo-5-n-propyl-5-methylhydantoin, 1,3-dibromo-5-ethyl-5-methylhydantoin, and mixtures of any two or all three thereof, wherein said inactive ingredient(s) comprise at least a binder or a manufacturing by-product, or both, and wherein said packaging material further comprises a sticker identifying the contents as being an oxidizing agent.

98. An article of manufacture of Claim 95 wherein said one or more 1,3-dibromo-5,5-dialkylhydantoins is 1,3-dibromo-5,5-dimethylhydantion, wherein said inactive ingredient(s) comprise at least a binder or a manufacturing by-product, or both, and wherein said packaging material further comprises a sticker identifying the contents as being an oxidizing agent.

99. An article of manufacture comprising a packaging material and a biocidal composition contained within said packaging material, wherein said biocidal composition is comprised of at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used by manufacturers in formulating biocides for wastewater, recirculating cooling water systems, once-through cooling water systems, brewery pasteurizers, recreational water, pulp and paper mill systems, air washer systems, air and gas scrubber systems, decorative fountains, or hard surface sanitizers, or any two or more of these, said recreational water being one or more of swimming pools, hot tubs, and spas, and wherein said label or another label associated with said packaging material indicates that formulators using the product are responsible for EPA registration of their formulated products, and
wherein (a) the molar quantity of said at least one 1,3-dibromo-5,5-dialkylhydantoin introduced into an aqueous medium having a pH of at least about 8.0 is less than the molar quantity of N,N'-bromo-chloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo-5,5-dialkylhydantoin on the basis of the amount of "free chlorine" that would be released in said aqueous medium by an equimolar quantity of N,N'-bromochloro-5,5-dimethylhydantoin.

100. An article of manufacture of Claim 99 wherein said biocidal composition is comprised of at least 97 wt% of said one or more 1,3-dibromo-5,5-dialkylhydantoins, wherein said inactive ingredient(s) comprise at least a binder or a manufacturing by-product, or both, and wherein said packaging material further comprises a sticker identifying the contents as being an oxidizing agent.

101. An article of manufacture of Claim 99 wherein said one or more 1,3-dibromo-5,5-dialkylhydantoins are selected from the group consisting of 1,3-dibromo-5-isobutyl-5-methylhydantoin, 1,3-dibromo-5-n-propyl-5-methylhydantoin, 1,3-dibromo-5-ethyl-5-methylhydantoin, and mixtures of any two or all three thereof, wherein said inactive ingredient(s) comprise at least a binder or a manufacturing by-product, or both, and wherein said packaging material further comprises a sticker identifying the contents as being an oxidizing agent.

102. An article of manufacture of Claim 99 wherein said one or more 1,3-dibromo-5,5-dialkylhydantoins is 1,3-dibromo-5,5-dimethylhydantoin, wherein said inactive ingredient(s) comprise at least a binder or a manufacturing by-product, or both, and wherein said packaging material further comprises a sticker identifying the contents as being an oxidizing agent.

103. An article of manufacture comprising a packaging material and a biocidal composition contained within said packaging material, wherein said biocidal composition comprises as an active ingredient of the composition at least 95 wt% of one or more 1,3-dibromo-5,5-dialkylhydantoins in which one of the alkyl groups in the 5-position is a methyl group and in which the other alkyl group in the 5-position has in the range of 1 to 4 carbon atoms as the only biocidally-active ingredient(s) in said composition, with the balance, if any, to 100 wt% being inactive ingredient(s), wherein said inactive ingredient is selected from the group consisting of binders, fillers, excipients, dyes or colorants, perfumes, stabilizers, and/or manufacturing by-products, wherein said packaging material comprises a label that indicates that the product can be used as a biocidal agent or disinfectant for use in pools, spas, and/or hot tubs, and wherein said label or another label associated with said packaging material indicates that (1) the level of active bromine should be maintained between 2-4 ppm in residential spas or hot tubs and 3-6 ppm in commercial spas or hot tubs with the pH of the water being adjusted to 7.2-7.6 prior to initiating treatment with the biocidal composition; and/or (2) the level of active bromine should be maintained between 1-4 ppm in swimming pools with the pH of the water being adjusted to 7.2-7.6 prior to initiating treatment with the biocidal composition, and wherein (a) the molar quantity of said at least one 1,3-dibromo-5,5-dialkylhydantoin introduced into an aqueous medium is less than the molar quantity of N,N'-bromochloro-5,5-dimethylhydantoin that would be required to effect the same degree of microbiological control in said aqueous medium, (b) the quantity of said at least one 1,3-dibromo-5,5-dialkylhydantoin introduced into the aqueous medium releases an amount of "free chlorine" that is greater than the amount of "free chlorine" that would be released in said aqueous medium by an equimolar quantity of N,N'-bromochloro-5,5-dimethylhydantoin, and (c) the amount of "free chlorine" released by the quantity of said at least one 1,3-dibromo-5,5-dialkylhydantoin introduced into the aqueous medium is greater than the amount of "free chlorine" that could be predicted to be released by that quantity of said at least one 1,3-dibromo on the basis of the amount of "free chlorine" that would be released in said aqueous medium by an equimolar quantity of N,N'-bromochloro-5,5-dimethylhydantoin.

104. A method of providing a microbiological control agent for use in treating water, which method comprises purveying an article of manufacture of any of Claims 82, 85, 87, 88, 95, 96, 97, 98, 99, 100, 101, 102, or 103.

105. Use of a microbiocidal agent formed by introducing into water having a pH of at least about 8.0 at least one 1,3-dibromo-5,5-dialkylhydantoin in which one of the alkyl groups in the 5-position is a methyl group and in which the other alkyl group in the 5-position has in the range of 1 to 4 carbon atoms to achieve an amount of "free chlorine" in said water that is greater than the amount of "free chlorine" that could be predicted to be released by that quantity of said at least one 1,3-dibromo-5,5-dialkylhydantoin on the basis of the amount of "free chlorine" that would be released in said medium by an equimolar quantity of N,N'-bromochloro-5,5-dimethylhydantoin, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L.

106. A method of obtaining an amount of "free chlorine" in water that is greater than the amount of "free chlorine" that could be predicted to be released by that quantity of said at least one 1,3-dibromo-5,5-dialkylhydantoin on the basis of the amount of "free chlorine" that would be released in said medium by an equimolar quantity of N,N'-bromochloro-5,5-dimethylhydantoin, **characterized by** introducing into water having a pH of at least about 8.0 at least one 1,3-dibromo-5,5-dialkylhy-dantoin in which one of the alkyl groups in the 5-position is a methyl group and in which the other alkyl group in the 5-position has in the range of 1 to 4 carbon atoms, with the exception of dissolving 1,3-dibromo-5,5-dimethylhydantoin as the sole microbiologically active ingredient in form of granules if the aqueous medium being a cooling tower water having a temperature of 32.8 °C (return line) or 28.3 °C (to process), a conductivity of 1.22 mS/cm, a pH of about 9.1 or of 9.2, an alkalinity of 480 mg/L as CaCO₃, a total hardness of 1 mg/L as CaCO₃ and a silica level of 100 mg/L, and a make-up water having a conductivity of 0.32 mS/cm, a pH of 8.7, an alkalinity of 145 mg/L as CaCO₃, a total hardness of 3 mg/L as CaCO₃ and a silica level of 28 mg/L, wherein (i) the molar quantity of said at least one 1,3-dibromo-5,5-dialkylhydantoin introduced into said aqueous medium is less than the molar quantity of N,N'-bromochloro-5,5-dimethylhydantoin that would be required to effect the same degree of microbiological control in said medium, and (ii) the quantity of said at least one 1,3-dibromo-5,5-dialkylhydantoin introduced into said aqueous medium releases an amount of "free chlorine" that is greater than the amount of "free chlorine" that would be released in said medium by an equimolar quantity of N,N'-bromochloro-5,5-dimethylhydantoin.

## Patentansprüche

1. Verfahren zum Bereitstellen von mikrobiologischer Kontrolle in einem wässrigen Medium mit einem pH-Wert von mindestens etwa 8,0 und/oder zum Auslöschen oder zur Reduktion von Biofilm auf einer Oberfläche in Kontakt mit einem solchen wässrigen Medium, bei dem in das wässrige Medium eine mikrobiozid wirksame Menge eines mikrobioziden Mittels eingebracht wird, das aus mindestens einem 1,3-Dibrom-5,5-dialkylhydantoin besteht, wobei eine der Alkylgruppen in der 5-Position eine Methylgruppe ist und wobei die andere Alkylgruppe in der 5-Position im Bereich von 1 bis 4 Kohlenstoffatomen aufweist, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, wobei (i) die molare Menge des mindestens einen 1,3-Dibrom-5,5-dialkylhydantoins, die in das wässrige Medium eingebracht wird, unter der molaren Menge an N,N'-Bromchlor-5,5-dimethylhydantoin liegt, die erforderlich wäre, um den gleichen Grad an mikrobiologischer Kontrolle in dem Medium zu bewirken, (ii) die Menge des mindestens einen 1,3-Dibrom-5,5-dialkylhydantoins, die in das wässrige Medium eingebracht wird, eine Menge an "freiem Chlor" freisetzt, die über der Menge an "freiem Chlor" liegt, die durch eine äquimolare Menge N,N'Bromchlor-5,5-dimethylhydantoin in das Medium freigesetzt würde, und (iii) die Menge an "freiem Chlor", die durch die Menge des mindestens einen 1,3-Dibrom-5,5-dialkylhydantoins freigesetzt wird, die in das Medium eingebracht wird, größer als die Menge an "freiem Chlor" ist, die laut Vorhersage durch jene Menge des mindestens einen 1,3-Dibrom-5,5-dialkylhydantoins auf Basis des "freien Chlors" freigesetzt würde, die in dem Medium durch eine äquimolare Menge an N,N'-Bromchlor-5,5-dimethylhydantoin freigesetzt würde.

2. Verfahren nach Anspruch 1, bei dem das mindestens eine 1,3-Dibrom-5,5-dialkylhydantoin 1,3-Dibrom-5-isobutyl-5-methylhydantoin ist.

3. Verfahren nach Anspruch 1, bei dem das mindestens eine 1,3-Dibrom-5,5-dialkylhydantoin 1,3-Dibrom-5-n-propyl-5-methylhydantoin ist.

4. Verfahren nach Anspruch 1, bei dem das mindestens eine 1,3-Dibrom-5,5-dialkylhydantoin 1,3-Dibrom-5-ethyl-5-methylhydantoin ist.

5. Verfahren nach Anspruch 1, bei dem das mindestens eine 1,3-Dibrom-5,5-dialkylhydantoin eine Mischung von zwei oder mehr der 1,3-Dibrom-5,5-dialkylhydantoine ist.

6. Verfahren nach Anspruch 1, bei dem das mindestens eine 1,3-Dibrom-5,5-dialkylhydantoin eine Mischung von 1,3-Dibrom-5,5-dimethylhydantoin und 1,3-Dibrom-5-ethyl-5-methylhydantoin ist.

7. Verfahren nach Anspruch 1, bei dem das wässrige Medium einen pH-Wert von mindestens etwa 8,0 hat und bei dem das mindestens eine 1,3-Dibrom-5,5-dialkylhydantoin 1,3-Dibrom-5,5-dimethylhydantoin ist.

8. Verfahren nach Anspruch 7, bei dem das verwendete 1,3-Dibrom-5,5-dimethylhydantoin eine durchschnittliche Teilchengröße von mindestens etwa 175 µm hat.

9. Verfahren nach Anspruch 7, bei dem das verwendete 1,3-Dibrom-5,5-dimethylhydantoin eine durchschnittliche Teilchengröße von mindestens etwa 200 µm hat.

10. Verfahren nach Anspruch 7, bei dem das verwendete 1,3-Dibrom-5,5-dimethylhydantoin eine durchschnittliche Teilchengröße von mindestens etwa 300 µm hat.

11. Verfahren nach Anspruch 7, bei dem das verwendete 1,3-Dibrom-5,5-dimethylhydantoin in Form eines formhaltenden, druckverdichteten Gegenstands vorliegt, der durch Druckverdichten von teilchenförmigen 1,3-Dibrom-5,5-dimethyl-hydantoinfeststoffen ohne Verwendung eines Bindemittels und ohne vorhergehende Behandlung dieser Feststoffe zur Steigerung ihrer Verdichtbarkeit hergestellt worden ist.

12. Verfahren nach Anspruch 11, bei dem die zur Bildung des Gegenstands verwendeten teilchenförmigen 1,3-Dibrom-5,5-dimethylhydantoinfeststoffe vor der Verdichtung eine durchschnittliche Teilchengröße von mindestens etwa 175 µm haben.

13. Verfahren nach Anspruch 7, bei dem das verwendete 1,3-Dibrom-5,5-dimethylhydantoin in Form eines formhaltenden, druckverdichteten Gegenstands vorliegt, der durch Druckverdichten von teilchenförmigen 1,3-Dibrom-5,5-dimethyl-hydantoinfeststoffen mit Verwendung eines Bindemittels hergestellt worden ist.

14. Verfahren nach Anspruch 13, bei dem die zur Bildung des Gegenstands verwendeten teilchenförmigen 1,3-Dibrom-5,5-dimethylhydantoinfeststoffe vor der Verdichtung eine durchschnittliche Teilchengröße von mindestens etwa 175 µm haben.

15. Verfahren nach Anspruch 7, bei dem das verwendete 1,3-Dibrom-5,5-dimethylhydantoin in Form eines verdichteten Produkts vorliegt, das unter Verwendung einer Menge eines mikronisierten synthetischen Kohlenwasserstoffwachses auf Polyolefinbasis und/oder eines mikronisierten synthetischen Polyfluorkohlenstoffwachses als Bindemittel hergestellt ist, die wirksam sind, um das verdichtete Produkt zu bilden, wobei das Wachs mit dem 1,3-Dibrom-5,5-dimethylhydantoin verträglich ist.

16. Verfahren nach Anspruch 15, bei dem das Wachs Polyethylenwachs ist, das vor der Verdichtung eine durchschnittliche Teilchengröße von nicht größer als etwa 15 µm, eine maximale Teilchengröße von nicht größer als etwa 40 µm und eine Dichte im Bereich von etwa 0,9 bis etwa 1,4 g/cm³ bei 25°C hat.

17. Verfahren nach Anspruch 15, bei dem das Wachs Polyethylenwachs ist, das bei einer Temperatur im Bereich von etwa 109°C bis etwa 111°C schmilzt.

18. Verfahren nach Anspruch 15, bei dem das Wachs Polypropylenwachs ist, das vor der Verdichtung eine durchschnittliche Teilchengröße im Bereich von etwa 5,0 bis etwa 7,0 µm, eine maximale Teilchengröße von etwa 22 µm und eine Dichte im Bereich von etwa 0,9 bis etwa 1,4 g/cm³ bei 25°C hat.

19. Verfahren nach Anspruch 15, bei dem das Wachs Polypropylenwachs ist, das bei einer Temperatur im Bereich von etwa 140°C bis etwa 143°C schmilzt, das vor der Verdichtung eine durchschnittliche Teilchengröße im Bereich von etwa 5,0 bis etwa 7,0 µm hat, und das vor der Verdichtung eine maximale Teilchengröße von etwa 22 µm hat.

20. Verfahren nach Anspruch 7, bei dem das verwendete 1,3-Dibrom-5,5-dimethylhydantoin in Form eines verdichteten Produkts vorliegt, das aus 1,3-Dibrom-5,5-dimethylhydantoin mit einer durchschnittlichen Teilchengröße von mindestens 175 µm gebildet ist, und bei dem das verdichtete Produkt unter Verwendung einer Menge eines gesättigten, normalerweise festen Fettamids als Bindemittel hergestellt worden ist, das wirksam ist, um das verdichtete Produkt zu bilden.

21. Verfahren nach Anspruch 20, bei dem das zur Bildung des verdichteten Produkts verwendete 1,3-Dibrom-5,5-dimethylhydantoin eine durchschnittliche Teilchengröße von mindestens etwa 200 µm hat.

22. Verfahren nach Anspruch 20, bei dem das zur Bildung des verdichteten Produkts verwendete 1,3-Dibrom-5-dimethylhydantoin eine durchschnittliche Teilchengröße von mindestens etwa 300 µm hat.

23. Verfahren zum Bewirken von mikrobiozider Aktivität in Wasser mit einem pH-Wert von mindestens etwa 8,0, bei dem in Wasser unter Verwendung eines mikrobioziden Mittels, das aus mindestens einem 1,3-Dibrom-5,5-dialkylhydantoin besteht, wobei eine der Alkylgruppen in der 5-Position eine Methylgruppe ist und wobei die andere Alkylgruppe in der 5-Position im Bereich von 1 bis 4 Kohlenstoffatomen aufweist, ausgenommen dass 1,3-Dibrom-5,5-dimethylhydantoin als einziger mikrobiologisch aktiver Bestandteil in Form von Körnern gelöst wird, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, eine mikrobiozid wirksame Menge an "freiem Chlor" bereitgestellt wird, die größer ist, als aus der Menge an "freiem Chlor" vorhergesagt werden kann, die in dem Wasser durch eine äquimolare Menge N,N'-Bromchlor-5,5-dimethylhydantoin freigesetzt würde, während eine kleinere molare Menge des mindestens einen 1,3-Dibrom-5,5-dialkylhydantoins als die molare Menge an N,N'-Bromchlor-5,5-dimethylhydantoin verwendet wird, die erforderlich wäre, um in dem Wasser die gleiche mikrobiozid wirksame Menge an "freiem Chlor" freizusetzen.

24. Verfahren nach Anspruch 23, bei dem das mindestens eine 1,3-Dibrom-5,5-dialkylhydantoin 1,3-Dibrom-5-isobutyl-5-methylhydantoin ist.

25. Verfahren nach Anspruch 23, bei dem das mindestens eine 1,3-Dibrom-5,5-dialkylhydantoin 1,3-Dibrom-5-n-propyl-5-methylhydantoin ist.

26. Verfahren nach Anspruch 23, bei dem das mindestens eine 1,3-Dibrom-5,5-dialkylhydantoin 1,3-Dibrom-5-ethyl-5-methylhydantoin ist.

27. Verfahren nach Anspruch 23, bei dem das mindestens eine 1,3-Dibrom-5,5-dialkylhydantoin eine Mischung von zwei oder mehr der 1,3-Dibrom-5,5-dialkylhydantoine ist.

28. Verfahren nach Anspruch 23, bei dem das mindestens eine 1,3-Dibrom-5,5-dialkylhydantoin eine Mischung von 1,3-Dibrom-5,5-dimethylhydantoin und 1,3-Dibrom-5-ethyl-5-methylhydantoin ist.

29. Verfahren zum Bewirken von mikrobiozider Aktivität in Wasser mit einem pH-Wert von mindestens etwa 8,0, bei dem in einem solchen Wasser unter Verwendung eines mikrobioziden Mittels, das aus mindestens einem 1,3-Dibrom-5,5-dimethylhydantoin besteht, ausgenommen dass 1,3-Dibrom-5,5-dimethylhydantoin als einziger mikrobiologisch aktiver Bestandteil in Form von Körnern gelöst wird, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, eine mikrobiozid wirksame Menge an "freiem Chlor" bereitgestellt wird, die größer ist, als aus der Menge an "freiem Chlor" vorhergesagt werden kann, die in dem Wasser durch eine äquimolare Menge N,N'-Bromchlor-5,5-dimethylhydantoin freigesetzt würde, während eine kleinere molare Menge von 1,3-Dibrom-5,5-dimethylhydantoin als die molare Menge an N,N'-Bromchlor-5,5-dimethylhydantoin verwendet wird, die erforderlich wäre, um in dem Wasser die gleiche mikrobiozid wirksame Menge an "freiem Chlor" freizusetzen.

30. Verfahren nach Anspruch 29, bei dem das verwendete 1,3-Dibrom-5,5-dimethylhydantoin eine durchschnittliche Teilchengröße von mindestens etwa 175 µm hat.

31. Verfahren nach Anspruch 29, bei dem das verwendete 1,3-Dibrom-5,5-dimethylhydantoin eine durchschnittliche Teilchengröße von mindestens etwa 200 µm hat.

32. Verfahren nach Anspruch 29, bei dem das verwendete 1,3-Dibrom-5,5-dimethylhydantoin eine durchschnittliche Teilchengröße von mindestens etwa 300 µm hat.

33. Verfahren nach Anspruch 29, bei dem das verwendete 1,3-Dibrom-5,5-dimethylhydantoin in Form eines formhaltenden, druckverdichteten Gegenstands vorliegt, der durch Druckverdichten von teilchenförmigen 1,3-Dibrom-5,5-dimethylhydantoinfeststoffen mit Verwendung eines Bindemittels hergestellt worden ist.

34. Verfahren nach Anspruch 33, bei dem die zur Bildung des Gegenstands verwendeten teilchenförmigen 1,3-Dibrom-5,5-dimethylhydantoinfeststoffe vor der Verdichtung eine durchschnittliche Teilchengröße von mindestens etwa 175 µm haben.

35. Verfahren nach Anspruch 29, bei dem das verwendete 1,3-Dibrom-5,5-dimethylhydantoin in Form eines verdichteten Produkts vorliegt, das unter Verwendung einer Menge eines mikronisierten synthetischen Kohlenwasserstoffwachses auf Polyolefinbasis und/oder eines mikronisierten synthetischen Polyfluorkohlenstoffwachses als Bindemittel hergestellt ist, die wirksam sind, um das verdichtete Produkt zu bilden, wobei das Wachs mit dem 1,3-Dibrom-5-dimethylhydantoin verträglich ist.

36. Verfahren nach Anspruch 35, bei dem das Wachs Polyethylenwachs ist, das vor der Verdichtung eine durchschnittliche Teilchengröße von nicht größer als etwa 15 µm, eine maximale Teilchengröße von nicht größer als etwa 40 µm und eine Dichte im Bereich von etwa 0,9 bis etwa 1,4 g/cm³ bei 25°C hat.

37. Verfahren nach Anspruch 35, bei dem das Wachs Polyethylenwachs ist, das bei einer Temperatur im Bereich von etwa 109°C bis etwa 111 °C schmilzt.

38. Verfahren nach Anspruch 35, bei dem das Wachs Polypropylenwachs ist, das vor der Verdichtung eine durchschnittliche Teilchengröße im Bereich von etwa 5,0 bis etwa 7,0 µm, eine maximale Teilchengröße von etwa 22 µm und eine Dichte im Bereich von etwa 0,9 bis etwa 1,4 g/cm³ bei 25°C hat.

39. Verfahren nach Anspruch 35, bei dem das Wachs Polypropylenwachs ist, das bei einer Temperatur im Bereich von etwa 140°C bis etwa 143°C schmilzt, das vor der Verdichtung eine durchschnittliche Teilchengröße im Bereich von etwa 5,0 bis etwa 7,0 µm hat, und das vor der Verdichtung eine maximale Teilchengröße von etwa 22 µm hat.

40. Verfahren nach Anspruch 29, bei dem das verwendete 1,3-Dibrom-5,5-dimethylhydantoin in Form eines verdichteten Produkts vorliegt, das aus 1,3-Dibrom-5,5-dimethylhydantoin mit einer durchschnittlichen Teilchengröße von mindestens 175 µm gebildet ist, und bei dem das verdichtete Produkt unter Verwendung einer Menge eines gesättigten, normalerweise festen Fettamids als Bindemittel hergestellt worden ist, das wirksam ist, um das verdichtete Produkt zu bilden.

41. Verfahren nach Anspruch 40, bei dem das zur Bildung des verdichteten Produkts verwendete 1,3-Dibrom-5,5-dimethylhydantoin eine durchschnittliche Teilchengröße von mindestens etwa 200 µm hat.

42. Verfahren nach Anspruch 40, bei dem das zur Bildung des verdichteten Produkts verwendete 1,3-Dibrom-5,5-dimethylhydantoin eine durchschnittliche Teilchengröße von mindestens etwa 300 µm hat.

43. Zusammensetzung mit mikrobiozider Aktivität, die Wasser mit einem pH-Wert von mindestens etwa 8,0 umfasst, dem eine mikrobiozid wirksame Menge eines mikrobioziden Mittels zugesetzt worden ist, das ausgewählt ist aus der Gruppe bestehend aus 1,3-Dibrom-5,5-dimethylhydantoin, 1,3-Dibrom-5-ethyl-5-methylhydantoin, 1,3-Dibrom-5-n-propyl-5-methylhydantoin, 1,3-Dibrom-5-isopropyl-5-methylhydantoin, 1,3-Dibrom-5-n-butyl-5-methylhydantoin, 1,3-Dibrom-5-isobutyl-5-methylhydantoin, 1,3-Dibrom-5-sek.-butyl-5-methylhydantoin, 1,3-Dibrom-5-tert.-butyl-5-methylhydantoin und Mischungen von irgendwelchen zwei oder mehr von diesen, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, wobei (i) die molare Menge des mindestens einen zugefügten 1,3-Dibrom-5,5-dialkylhydantoins unter der molaren Menge an N,N'-Bromchlor-5,5-dimethylhydantoin liegt, die erforderlich wäre, um den gleichen Grad an mikrobiologischer Kontrolle in dem Medium zu bewirken, (ii) die Menge des mindestens einen zugefügten 1,3-Dibrom-5,5-dialkylhydantoins eine Menge an "freiem Chlor" freisetzt, die über der Menge an "freiem Chlor" liegt, die durch eine äquimolare Menge N,N'Bromchlor-5,5-dimethylhydantoin in das Wasser freigesetzt würde, und (iii) die Menge an "freiem Chlor", die durch die Menge des mindestens einen zugefügten 1,3-Dibrom-5,5-dialkylhydantoins freigesetzt wird, größer als die Menge an "freiem Chlor" ist, die laut Vorhersage durch jene Menge des mindestens einen 1,3-Dibrom-5,5-dialkylhydantoins auf Basis des "freien Chlors" freigesetzt wird, die in dem Medium durch eine äquimolare Menge an N,N'-Bromchlor-5,5-dimethylhydantoin freigesetzt würde.

44. Zusammensetzung nach Anspruch 43, bei der das mikrobiozide Mittel 1,3-Dibrom-5-isobutyl-5-methylhydantoin ist.

45. Zusammensetzung nach Anspruch 43, bei der das mikrobiozide Mittel 1,3-Dibrom-5-n-propyl-5-methylhydantoin ist.

46. Zusammensetzung nach Anspruch 43, bei der das mikrobiozide Mittel 1,3-Dibrom-5-ethyl-5-methylhydantoin ist.

47. Zusammensetzung nach Anspruch 43, bei der das mikrobiozide Mittel eine Mischung von zwei oder mehr der mikrobioziden Mittel ist.

48. Zusammensetzung nach Anspruch 43, bei der das mikrobiozide Mittel eine Mischung von 1,3-Dibrom-5,5-dimethylhydantoin und 1,3-Dibrom-5-ethyl-5-methylhydantoin ist.

49. Zusammensetzung mit mikrobiozider Aktivität, die Wasser mit einem pH-Wert von mindestens etwa 8,0 umfasst, das eine mikrobiozid wirksame Menge an "freiem Chlor" enthält, die in dem Wasser durch ein mikrobiozides Mittel bereitgestellt wird, das ausgewählt ist aus der Gruppe bestehend aus 1,3-Dibrom-5,5-dimethylhydantoin, 1,3-Dibrom-5-ethyl-5-methylhydantoin, 1,3-Dibrom-5-n-propyl-5-methylhydantoin, 1,3-Dibrom-5-isopropyl-5-methylhydantoin, 1,3-Dibrom-5-n-butyl-5-methylhydantoin, 1,3-Dibrom-5-isobutyl-5-methylhydantoin, 1,3-Dibrom-5-sek.-butyl-5-methylhydantoin, 1,3-Dibrom-5-tert.-butyl-5-methylhydantoin und Mischungen von irgendwelchen zwei oder mehr von diesen, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l Ca-CO₃ und einem Siliciumdioxidniveau von 28 mg/l ist, wobei (i) die molare Menge des mindestens einen 1,3-Dibrom-5,5-dialkylhydantoins, das die Menge des "freien Chlors" in dem Wasser bereitstellt, unter der molaren Menge an N,N'-Bromchlor-5,5-dimethylhydantoin liegt, die erforderlich ist, um den gleichen Grad an mikrobiologischer Kontrolle in dem Wasser zu bewirken, (ii) die Menge des mindestens einen 1,3-Dibrom-5,5-dialkylhydantoins, das die Menge des "freien Chlors" bereitstellt, eine Menge an "freiem Chlor" freisetzt, die über der Menge an "freiem Chlor" liegt, die durch eine äquimolare Menge N,N'-Bromchlor-5,5-dimethylhydantoin in das Medium freigesetzt würde, und (iii) die Menge an "freiem Chlor", die durch die Menge des mindestens einen 1,3-Dibrom-5,5-dialkylhydantoins freigesetzt wird, das die Menge des "freien Chlors" bereitstellt, größer als die Menge an "freiem Chlor" ist, die laut Vorhersage durch jene Menge des mindestens einen 1,3-Dibrom-5,5-dialkylhydantoins auf Basis der Menge des "freien Chlors" freigesetzt würde, die in dem Medium durch eine äquimolare Menge an N,N'-Bromchlor-5,5-dimethylhydantoin freigesetzt wird.

50. Zusammensetzung nach Anspruch 49, bei der das mikrobiozide Mittel 1,3-Dibrom-5-isobutyl-5-methylhydantoin ist.

51. Zusammensetzung nach Anspruch 49, bei der das mikrobiozide Mittel 1,3-Dibrom-5-n-propyl-5-methylhydantoin ist.

52. Zusammensetzung nach Anspruch 49, bei der das mikrobiozide Mittel 1,3-Dibrom-5-ethyl-5-methylhydantoin ist.

53. Zusammensetzung nach Anspruch 49, bei der das mikrobiozide Mittel eine Mischung von zwei oder mehr der mikrobioziden Mittel ist.

54. Zusammensetzung nach Anspruch 49, bei der das mikrobiozide Mittel eine Mischung von 1,3-Dibrom-5,5-dimethylhydantoin und 1,3-Dibrom-5-ethyl-5-methylhydantoin ist.

55. Zusammensetzung mit mikrobiozider Aktivität, die Wasser mit einem pH-Wert von mindestens etwa 8,0 umfasst, dem eine mikrobiozid wirksame Menge eines mikrobioziden Mittels zugesetzt worden ist, das 1,3-Dibrom-5,5-dimethylhydantoin ist, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, wobei (i) die Gewichtsmenge des zugefügten 1,3-Dibrom-5,5-dimethylhydantoins unter der Gewichtsmenge an N,N'-Bromchlor-5,5-dimethylhydantoin liegt, die erforderlich wäre, um den gleichen Grad an mikrobiozider Aktivität in dem Wasser zu bewirken, (ii) die Menge des zugefügten 1,3-Dibrom-5,5-dimethylhydantoins eine Menge an "freiem Chlor" freisetzt, die über der Menge an "freiem Chlor" liegt, die durch eine äquimolare Menge N,N'-Bromchlor-5,5-dimethylhydantoin in das Wasser freigesetzt würde, und (iii) die Menge an "freiem Chlor", die durch die Menge des zugefügten 1,3-Dibrom-5,5-dimethylhydantoins freigesetzt wird, größer als die Menge an "freiem Chlor" ist, die laut Vorhersage durch jene Menge des mindestens einen 1,3-Dibrom-5,5-dimethylhydantoins auf Basis der Menge des "freien Chlors" freigesetzt würde, die in dem Wasser durch eine äquimolare Menge an N,N'-Bromchlor-5,5-dimethylhydantoin freigesetzt wird.

56. Zusammensetzung mit mikrobiozider Aktivität, die Wasser mit einem pH-Wert von mindestens etwa 8,0 umfasst, das eine mikrobiozid wirksame Menge an "freiem Chlor" enthält, die in dem Wasser durch ein mikrobiozides Mittel bereitgestellt wird, das 1,3-Dibrom-5,5-dimethylhydantoin ist, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l Ca-CO₃ und einem Siliciumdioxidniveau von 28 mg/l ist, wobei (i) die Gewichtsmenge des 1,3-Dibrom-5,5-dimethylhydantoins, das die Menge an "freiem Chlor" in dem Wasser bereitstellt, unter der Gewichtsmenge an N,N'-Bromchlor-5,5-dimethylhydantoin liegt, die erforderlich ist, um den gleichen Grad an mikrobiozider Aktivität in dem Wasser zu bewirken, (ii) die Menge des 1,3-Dibrom-5,5-dimethylhydantoins, das die Menge an "freiem Chlor" bereitstellt, eine Menge an "freiem Chlor" freisetzt, die über der Menge an "freiem Chlor" liegt, die durch eine äquimolare Menge N,N'-Bromchlor-5,5-dimethylhydantoin in das Wasser freigesetzt würde, und (iii) die Menge an "freiem Chlor", die durch die Menge des 1,3-Dibrom-5,5-dimethylhydantoins freigesetzt wird, das das "freie Chlor" bereitstellt, größer als die Menge an "freiem Chlor" ist, die laut Vorhersage durch jene Menge des mindestens einen 1,3-Dibrom-5,5-dimethylhydantoins auf Basis der Menge des "freien Chlors" freigesetzt würde, die in dem Medium durch eine äquimolare Menge an N,N'-Bromchlor-5,5-dimethylhydantoin freigesetzt wird.

57. Verfahren zum Bestimmen einer Menge eines mikrobioziden Mittels, das aus mindestens einem 1,3-Dibrom-5,5-dialkylhydantoin besteht, wobei eine der Alkylgruppen in der 5-Position eine Methylgruppe ist und wobei die andere Alkylgruppe in der 5-Position im Bereich von 1 bis 4 Kohlenstoffatomen aufweist, zur Verwendung zur mikrobioziden Behandlung von Wasser mit einem pH-Wert von mindestens etwa 8,0, bei dem (i) die Konzentrationen an "freiem Chlor" von Proben des Wassers, das N,N'-Bromchlor-5,5-dimethylhydantoin beziehungsweise das mindestens eine 1,3-Dibrom-5,5-dialkylhydantoin enthält, bestimmt werden, (ii) der Wert an "Gesamtchlor" der Proben des Wassers, das N,N'-Bromchlor-5,5-dimethylhydantoin beziehungsweise das mindestens eine 1,3-Dibrom-5,5-dialkylhydantoin enthält, bestimmt wird, und (iii) jeweils für N,N'-Bromchlor-5,5-dimethylhydantoin und das mindestens eine 1,3-Dibrom-5,5-dialkylhydantoin das relative Ausmaß der Hydrolyse zu Spezies bestimmt wird, die als "freies Chlor" registriert werden, wobei die zu verwendende Menge des mindestens einen 1,3-Dibrom-5,5-dialkylhydantoins zum Erreichen der Zieldosis an "freiem Chlor" zugänglich wird, die gewählt wird, um mikrobiologische Kontrolle in dem der Behandlung unterzogenen Wasser zu bewirken oder aufrechtzuerhalten.

58. Verfahren nach Anspruch 57, bei dem das mindestens eine 1,3-Dibrom-5,5-dialkylhydantoin 1,3-Dibrom-5-isobutyl-5-methylhydantoin ist.

59. Verfahren nach Anspruch 57, bei dem das mindestens eine 1,3-Dibrom-5,5-dialkylhydantoin 1,3-Dibrom-5-n-propyl-5-methylhydantoin ist.

60. Verfahren nach Anspruch 57, bei dem das mindestens eine 1,3-Dibrom-5,5-dialkylhydantoin 1,3-Dibrom-5-ethyl-5-methylhydantoin ist.

61. Verfahren nach Anspruch 57, bei dem mindestens ein 1,3-Dibrom-5,5-dialkylhydantoin eine Mischung von zwei oder mehr der 1,3-Dibrom-5,5-dialkylhydantoine ist.

62. Verfahren nach Anspruch 57, bei dem das mindestens eine 1,3-Dibrom-5,5-dialkylhydantoin eine Mischung von 1,3-Dibrom-5,5-dimethylhydantoin und 1,3-Dibrom-5-ethyl-5-methylhydantoin ist.

63. Verfahren nach Anspruch 57, bei dem das mindestens eine 1,3-Dibrom-5,5-dialkylhydantoin 1,3-Dibrom-5,5-dimethylhydantoin ist.

64. Verfahren nach Anspruch 57, bei dem das Hach-Verfahren 8021 (Copyright 1997) zur Bestimmung von "freiem Chlor" und das Hach-Verfahren 8167 (Copyright 1997) zur Bestimmung von "Gesamtchlor" für die Bestimmungen im Zusammenhang mit einem gegebenen Wasserkörper verwendet werden.

65. Verfahren nach Anspruch 57, bei dem das Hach-Verfahren 8021 (Copyright 1997) zur Bestimmung von "freiem Chlor" und das Hach-Verfahren 8167 (Copyright 1997) zur Bestimmung von "Gesamtchlor" für die Bestimmungen im Zusammenhang mit einem gegebenen Wasserkörper verwendet werden.

66. Verfahren zum Bewirken von mikrobiozider Aktivität in Wasser mit einem pH-Wert von mindestens etwa 8,0, bei dem in diesem Wasser unter Verwendung eines mikrobioziden Mittels, das aus mindestens einem 1,3-Dibrom-5,5-dialkylhydantoin besteht, wobei eine der Alkylgruppen in der 5-Position eine Methylgruppe ist und wobei die andere Alkylgruppe in der 5-Position im Bereich von 1 bis 4 Kohlenstoffatomen aufweist, ausgenommen dass 1,3-Dibrom-5,5-dimethylhydantoin als einziger mikrobiologisch aktiver Bestandteil in Form von Körnern gelöst wird, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, eine Menge an "freiem Chlor" bereitgestellt wird, die größer ist, als aus der Menge an "freiem Chlor" vorhergesagt werden kann, die in dem Wasser durch eine äquimolare Menge N,N'-Bromchlor-5,5-dimethylhydantoin freigesetzt würde, bestimmbar durch Vergleichstests wie folgt:
a) Bestimmen der Menge der Spezies des mindestens einen 1,3-Dibrom-5,5-dialkylhydantoins und von N,N'-Bromchlor-5,5-dimethylhydantin, die jeweils unter Verwendung des Hach-Verfahrens 8167 (Copyright 1997, Hach Company) als "Gesamtchlor" registriert werden;
B) Bestimmen der Menge der Spezies des mindestens einen 1,3-Dibrom-5,5-dialkylhydantoins und von N,N'-Bromchlor-5,5-dimethylhydantin, die jeweils unter Verwendung des Hach-Verfahrens 8021 (Copyright 1997, Hach Company) als "freies Chlor" registriert werden; und
c) Bestimmen des relativen Ausmaßes der jeweiligen Hydrolyse des mindestens einen 1,3-Dibrom-5,5-dialkylhydantoin und von N,N'-Bromchlor-5,5-dimethylhydantoin zu Spezies, die als "freies Chlor" registriert werden.

67. Verfahren nach Anspruch 66, bei dem das mindestens eine 1,3-Dibrom-5,5-dialkylhydantoin 1,3-Dibrom-5-isobutyl-5-methylhydantoin ist.

68. Verfahren nach Anspruch 66, bei dem das mindestens eine 1,3-Dibrom-5,5-dialkylhydantoin 1,3-Dibrom-5-n-propyl-5-methylhydantoin ist.

69. Verfahren nach Anspruch 66, bei dem das mindestens eine 1,3-Dibrom-5,5-dialkylhydantoin 1,3-Dibrom-5-ethyl-5-methylhydantoin ist.

70. Verfahren nach Anspruch 66, bei dem mindestens ein 1,3-Dibrom-5,5-dialkylhydantoin eine Mischung von zwei oder mehr der 1,3-Dibrom-5,5-dialkylhydantoine ist.

71. Verfahren nach Anspruch 66, bei dem das mindestens eine 1,3-Dibrom-5,5-dialkylhydantoin eine Mischung von 1,3-Dibrom-5,5-dimethylhydantoin und 1,3-Dibrom-5-ethyl-5-methylhydantoin ist.

72. Verfahren nach Anspruch 66, bei dem das mindestens eine 1,3-Dibrom-5,5-dialkylhydantoin 1,3-Dibrom-5,5-dimethylhydantoin ist.

73. Materialzusammensetzung aus Wasser mit einem pH-Wert von mindestens etwa 8,0, in dem mikrobiologische und/oder Biofilmaktivität minimiert, wenn nicht eliminiert worden ist, indem diesem eine Menge an "freiem Chlor" zugefügt wurde, die in dem Wasser durch ein mikrobiozides Mittel erzeugt wurde, das ausgewählt ist aus der Gruppe bestehend aus 1,3-Dibrom-5,5-dimethylhydantoin, 1,3-Dibrom-5-ethyl-5-methylhydantoin, 1,3-Dibrom-5-n-propyl-5-methylhydantoin, 1,3-Dibrom-5-isopropyl-5-methylhydantoin, 1,3-Dibrom-5-n-butyl-5-methylhydantoin, 1,3-Dibrom-5-isobutyl-5-methylhydantoin, 1,3-Dibrom-5-sek.-butyl-5-methylhydantoin, 1,3-Dibrom-5-tert.-butyl-5-methylhydantoin und Mischungen von irgendwelchen zwei oder mehr von diesen, ausgenommen dass 1,3-Dibrom-5,5-dimethylhydantoin als der einzige mikrobiologisch aktive Bestandteil in Form von Körnern gelöst ist, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l Ca-CO₃ und einem Siliciumdioxidniveau von 28 mg/l ist, wobei die Menge an "freiem Chlor", die in dem Wasser tatsächlich vorhanden ist, größer als diejenige ist, die aus der Menge an "freiem Chlor" vorhergesagt werden kann, die in dem Wasser durch eine äquimolare Menge N,N'-Bromchlor-5,5-dimethylhydantoin (BCDMH) bereitgestellt wird, bestimmbar durch Vergleichstests wie folgt:
a) Bestimmen der Menge der Spezies des mindestens einen 1,3-Dibrom-5,5-dialkylhydantoins und von BCDMH, die jeweils unter Verwendung des Hach-Verfahrens 8167 (Copyright 1997, Hach Company) als "Gesamtchlor" registriert werden; und
b) Bestimmen der Menge der Spezies von DBDAH und von BCDMH, die jeweils unter Verwendung des Hach-Verfahrens 8021 (Copyright 1997, Hach Company) als "freies Chlor" registriert werden; und
c) Bestimmen des jeweiligen Ausmaßes der Hydrolyse von DBDAH und BCDMH zu Spezies, die als "freies Chlor" registriert werden.

74. Zusammensetzung nach Anspruch 73, bei der das mikrobiozide Mittel 1,3-Dibrom-5-isobutyl-5-methylhydantoin ist.

75. Zusammensetzung nach Anspruch 73, bei der das mikrobiozide Mittel 1,3-Dibrom-5-n-propyl-5-methylhydantoin ist.

76. Zusammensetzung nach Anspruch 73, bei der das mikrobiozide Mittel 1,3-Dibrom-5-ethyl-5-methylhydantoin ist.

77. Zusammensetzung nach Anspruch 73, bei der das mikrobiozide Mittel eine Mischung von zwei oder mehr der mikrobioziden Mittel ist.

78. Zusammensetzung nach Anspruch 73, bei der das mikrobiozide Mittel eine Mischung von 1,3-Dibrom-5,5-dimethylhydantoin und 1,3-Dibrom-5-ethyl-5-methylhydantoin ist.

79. Verfahren nach Anspruch 73, bei dem das mindestens eine 1,3-Dibrom-5,5-dialkylhydantoin 1,3-Dibrom-5,5-dimethylhydantoin ist.

80. Zusammensetzung nach Anspruch 73, bei der das mikrobiozide Mittel ausgewählt ist aus 1,3-Dibrom-5-isobutyl-5-methylhydantoin, 1,3-Dibrom-5-n-propyl-5-methylhydantoin, 1,3-Dibrom-5-ethyl-5-methylhydantoin, 1,3-Dibrom-5,5-dimethylhydantoin oder einer Mischung von mindestens irgendwelchen zwei von ihnen.

81. Zusammensetzung nach Anspruch 73, bei der das mikrobiozide Mittel 1,3-Dibrom-5,5-dimethylhydantoin ist.

82. Fertigungsgegenstand, der ein Verpackungsmaterial und eine in dem Verpackungsmaterial enthaltene biozide Zusammensetzung umfasst, wobei die biozide Zusammensetzung aus (i) mindestens einem 1,3-Dibrom-5,5-dialkylhydantoin, wobei eine der Alkylgruppen in der 5-Position eine Methylgruppe ist und die andere Alkylgruppe in der 5-Position im Bereich von 1 bis 4 Kohlenstoffatomen enthält, als einzigem biozid aktiven Bestandteil/einzige biozid aktive Bestandteile in der Zusammensetzung und (ii) mindestens einem biozid inaktiven Bestandteil zusammengesetzt ist, wobei der biozid inaktive Bestandteil ausgewählt ist aus der Gruppe bestehend aus Bindemitteln, Füllstoffen, Hilfsstoffen, Farbstoffen oder Färbungsmitteln, Parfüms, Stabilisatoren und/oder Fertigungsnebenprodukten, wobei mindestens 90 Gew.-% der bioziden Zusammensetzung das mindestens eine 1,3-Dibrom-5,5-dialkylhydantoin sind, und wobei das Verpackungsmaterial mindestens ein Etikett, das den Namen des Produkts in der Verpackung in geeigneter Weise identifiziert, und mindestens einen Aufkleber umfasst, der den Inhalt als Oxidationsmittel identifiziert, wobei (a) die molare Menge des mindestens einen 1,3-Dibrom-5,5-dialkylhydantoins, die in ein wässriges Medium mit einem pH-Wert von mindestens etwa 8,0 eingebracht wird, kleiner als die molare Menge an N,N'-Bromchlor-5,5-dimethylhydantoin ist, die erforderlich wäre, um den gleichen Grad an mikrobiologischer Kontrolle in dem wässrigen Medium zu bewirken, (b) die Menge des mindestens einen 1,3-Dibrom-5,5-dialkylhydantoins, die in das wässrige Medium eingebracht wird, eine Menge an "freiem Chlor" freisetzt, die größer als die Menge an "freiem Chlor" ist, die durch eine äquimolare Menge an N,N'-Bromchlor-5,5-dimethylhydantoin in das wässrige Medium freigesetzt werden würde, und (c) die Menge an "freiem Chlor", die durch die Menge des mindestens einen 1,3-Dibrom-5,5-dialkylhydantoins freigesetzt wird, das in das wässrige Medium eingebracht wird, größer als die Menge an "freiem Chlor" ist, die laut Vorhersage durch jene Menge des mindestens einen 1,3-Dibrom-5,5-dialkylhydantoins auf Basis der Menge an "freiem Chlor" freigesetzt würde, die durch eine äquimolare Menge N,N'-Bromchlor-5,5-dimethylhydantoin in dem wässrigen Medium freigesetzt werden würde.

83. Fertigungsgegenstand nach Anspruch 82, bei dem das Etikett oder ein anderes mit dem Verpackungsmaterial zusammenhängendes Etikett Gefahren anzeigt, die mit der Handhabung und Verwendung der verpackten Zusammensetzung verbunden sind.

84. Fertigungsgegenstand nach Anspruch 83, bei dem der mindestens eine biozid inaktive Bestandteil ein Bindemittel oder ein Fertigungsnebenprodukt oder beide umfasst.

85. Fertigungsgegenstand nach Anspruch 84, bei dem das Etikett oder ein anderes Etikett, das mit dem Verpackungsmaterial zusammenhängt, anzeigt, dass der aktive Bestandteil der in dem Verpackungsmaterial enthaltenen bioziden Zusammensetzung das eine oder die mehreren der tatsächlich darin enthaltenen 1,3-Dibrom-5,5-dialkylhydantoine ist.

86. Fertigungsgegenstand nach Anspruch 85, bei dem das Etikett oder ein anderes Etikett, das mit dem Verpackungsmaterial zusammenhängt, den Anteil oder Prozentsatz des einen oder der mehreren 1,3-Dibrom-5,5-dialkylhydantoine in der bioziden Zusammensetzung anzeigt, der in der verpackten Zusammensetzung enthalten ist.

87. Fertigungsgegenstand nach Anspruch 86, bei dem das Etikett oder ein anderes Etikett, das mit dem Verpackungsmaterial zusammenhängt, den Anteil oder Prozentsatz des inaktiven Inhalts in der Zusammensetzung anzeigt, der in dem Verpackungsmaterial enthalten ist.

88. Fertigungsgegenstand nach Anspruch 86, bei dem das Etikett oder ein anderes Etikett, das mit dem Verpackungsmaterial zusammenhängt, mindestens eines der Folgenden einschließt:
a) Beschreibung der Umweltgefahren, die mit dem Freiwerden der Zusammensetzung in der Umgebung zusammenhängen;
b) Beschreibung der physikalischen und chemischen Gefahren und Anweisungen, wie diese Gefahren bei Gebrauch vermieden oder mindestens reduziert werden können;
c) Anweisung zur Lagerung des Produkts und zur Entsorgung des Produkts und der Behälter;
d) Anweisungen hinsichtlich praktischer Behandlung und erster Hilfe, die im Falle des Kontakts der Zusammensetzung mit Augen oder Haut anzuwenden sind, oder wenn die Zusammensetzung eingenommen (verschluckt) oder inhaliert worden ist;
e) Anweisungen zum Gebrauch einschließlich, jedoch nicht beschränkt auf Dosierraten, die mit speziellen Gebrauchsweisen zusammenhängen, und
f) EPA-Registriernummer, EPA-Einrichtungsnummer und Name und Adresse des Registrierenden.

89. Fertigungsgegenstand nach Anspruch 82, bei dem das mindestens eine 1,3-Dibrom-5,5-dialkylhydantoin 1,3-Dibrom-5-isobutyl-5-methylhydantoin, 1,3-Dibrom-5-n-propyl-5-methylhydantoin oder 1,3-Dibrom-5-ethyl-5-methylhydantoin ist, und bei dem der mindestens eine biozid inaktive Bestandteil ein Bindemittel oder ein Fertigungsnebenprodukt oder beides umfasst.

90. Fertigungsgegenstand nach Anspruch 82, bei dem das mindestens eine 1,3-Dibrom-5,5-dialkylhydantoin eine Mischung aus mindestens zwei der 1,3-Dibrom-5,5-dialkylhydantoine ist, von denen eines 1,3-Dibrom-5,5-dimethylhydantoin ist, und bei dem der mindestens eine biozid inaktive Bestandteil ein Bindemittel oder ein Fertigungsnebenprodukt oder beide umfasst.

91. Fertigungsgegenstand nach Anspruch 82, bei dem das mindestens eine 1,3-Dibrom-5,5-dialkylhydantoin eine Mischung aus 1,3-Dibrom-5,5-dimethylhydantoin und 1,3-Dibrom-5-ethyl-5-methylhydantoin ist, und bei dem der mindestens eine biozid inaktive Bestandteil ein Bindemittel oder ein Fertigungsnebenprodukt oder beides umfasst.

92. Fertigungsgegenstand nach Anspruch 82, bei dem das mindestens eine 1,3-Dibrom-5,5-dialkylhydantoin 1,3-Dibrom-5,5-dimethylhydantoin ist, und bei dem der mindestens eine biozid inaktive Bestandteil ein Bindemittel oder ein Fertigungsnebenprodukt oder beides umfasst.

93. Fertigungsgegenstand nach einem der Ansprüche 89, 90, 91 oder 92, bei dem das Etikett oder ein anderes mit dem Verpackungsmaterial zusammenhängendes Etikett Gefahren anzeigt, die mit der Handhabung und Verwendung der verpackten Zusammensetzung verbunden sind.

94. Fertigungsgegenstand nach einem der Ansprüche 89, 90, 91 oder 92, bei dem das Etikett oder ein anderes Etikett, das mit dem Verpackungsmaterial zusammenhängt, den Anteil oder Prozentsatz des/der 1,3-Dibrom-5,5-dialkylhydantoin(s)(e) in der bioziden Zusammensetzung anzeigt, der in der verpackten Zusammensetzung enthalten ist, sowie den Anteil oder Prozentsatz der biozid inaktiven Bestandteile in der Zusammensetzung, die in dem Verpackungsmaterial enthalten sind.

95. Fertigungsgegenstand, der ein Verpackungsmaterial und eine in dem Verpackungsmaterial enthaltene biozide Zusammensetzung umfasst, wobei die biozide Zusammensetzung aus mindestens 95 Gew.-% von einem oder mehreren 1,3-Dibrom-5,5-dialkylhydantoinen, wobei eine der Alkylgruppen in der 5-Position eine Methylgruppe ist und die andere Alkylgruppe in der 5-Position im Bereich von 1 bis 4 Kohlenstoffatomen aufweist, als einzigem biozid aktiven Bestandteil/einzige biozid aktive Bestandteile in der Zusammensetzung zusammengesetzt ist, wobei der Rest bis 100 Gew.-%, soweit vorhanden, inaktiver Bestandteil/inaktive Bestandteile ist bzw. sind, wobei der inaktive Bestandteil ausgewählt ist aus der Gruppe bestehend aus Bindemitteln, Füllstoffen, Hilfsstoffen, Farbstoffen oder Färbungsmitteln, Parfüms, Stabilisatoren und/oder Fertigungsnebenprodukten, wobei das Verpackungsmaterial ein Etikett umfasst, welches angibt, dass das Produkt als Biozid für Abwasser, Umlauf-Kühlwassersysteme, Kühlwassersysteme mit einmaligem Durchsatz, Pasteurisierungsgeräte in Brauereien, Zellstoff- und Papiermühlensysteme, Luftreinigungssysteme, Luft- und Gaswäschersysteme oder Wasserspiele zu Dekorationszwecken oder irgendwelche zwei oder mehr von diesen verwendet werden kann, und wobei das Etikett oder ein anderes Etikett, das mit dem Verpakkungsmaterial zusammenhängt, angibt, dass die Dosierrate für mindestens eine der vorangehenden acht Anwendungen oder Verwendungszwecke so ist, dass ein Restbromniveau von 0,5 bis 5 ppm oder nach Bedarf zum Aufrechterhalten der biologischen Kontrolle aufrechterhalten wird, und wobei (a) die molare Menge des mindestens einen 1,3-Dibrom-5,5-dialkylhydantoins, die in ein wässriges Medium mit einem pH-Wert von mindestens etwa 8,0 eingebracht wird, kleiner als die molare Menge an N,N'-Bromchlor-5,5-dimethylhydantoin ist, die erforderlich wäre, um den gleichen Grad an mikrobiologischer Kontrolle in dem wässrigen Medium zu bewirken, (b) die Menge des mindestens einen 1,3-Dibrom-5,5-dialkylhydantoins, die in das wässrige Medium eingebracht wird, eine Menge an "freiem Chlor" freisetzt, die größer als die Menge an "freiem Chlor" ist, die durch eine äquimolare Menge an N,N'-Bromchlor-5,5-dimethylhydantoin in das wässrige Medium freigesetzt werden würde, und (c) die Menge an "freiem Chlor", die durch die Menge des mindestens einen 1,3-Dibrom-5,5-dialkylhydantoins freigesetzt wird, das in das wässrige Medium eingebracht wird, größer als die Menge an "freiem Chlor" ist, die laut Vorhersage durch jene Menge des mindestens einen 1,3-Dibrom-5,5-dialkylhydantoins auf Basis der Menge an "freiem Chlor" freigesetzt würde, die durch eine äquimolare Menge N,N'-Bromchlor-5,5-dimethylhydantoin in dem wässrigen Medium freigesetzt werden würde.

96. Fertigungsgegenstand nach Anspruch 95, bei dem die biozide Zusammensetzung aus mindestens 97 Gew.-% von einem oder mehreren 1,3-Dibrom-5,5-dialkylhydantoinen zusammengesetzt ist, wobei der inaktive Bestandteil/die inaktiven Bestandteile mindestens ein Bindemittel oder ein Fertigungsnebenprodukt oder beide umfassen, und wobei das Verpackungsmaterial ferner einen Aufkleber umfasst, der den Inhalt als Oxidationsmittel identifiziert.

97. Fertigungsgegenstand nach Anspruch 95, bei dem das eine oder die mehreren 1,3-Dibrom-5,5-dialkylhydantoine aus der Gruppe bestehend aus 1,3-Dibrom-5-isobutyl-5'-methylhydantoin, 1,3-Dibrom-5-n-propyl-5-methylhydantoin, 1,3-Dibrom-5-ethyl-5-methylhydantoin und Mischungen von irgendwelchen zwei oder allen dreien davon ausgewählt ist bzw. sind, wobei der inaktive Bestandteil/die inaktiven Bestandteile mindestens ein Bindemittel oder ein Fertigungsnebenprodukt oder beide umfasst bzw. umfassen, und wobei das Verpackungsmaterial ferner einen Aufkleber umfasst, der den Inhalt als Oxidationsmittel identifiziert.

98. Fertigungsgegenstand nach Anspruch 95, bei dem das eine oder die mehreren 1,3-Dibrom-5,5-dialkylhydantoine 1,3-Dibrom-5,5-dimethylhydantoin ist, wobei der inaktive Bestandteil/die inaktiven Bestandteile mindestens ein Bindemittel oder ein Fertigungsnebenprodukt oder beide umfassen, und wobei das Verpackungsmaterial ferner einen Aufkleber umfasst, der den Inhalt als Oxidationsmittel identifiziert.

99. Fertigungsgegenstand, der ein Verpackungsmaterial und eine in dem Verpackungsmaterial enthaltene biozide Zusammensetzung umfasst, wobei die biozide Zusammensetzung aus mindestens 95 Gew.-% von einem oder mehreren 1,3-Dibrom-5,5-dialkylhydantoin(en), wobei eine der Alkylgruppen in der 5-Position eine Methylgruppe ist und die andere Alkylgruppe in der 5-Position im Bereich von 1 bis 4 Kohlenstoffatomen aufweist, als einzigem biozid aktiven Bestandteil/einzigen biozid aktiven Bestandteilen in der Zusammensetzung zusammengesetzt ist, wobei der Rest bis 100 Gew.-%, soweit vorhanden, inaktiver Bestandteil/inaktive Bestandteile ist bzw. sind, wobei der inaktive Bestandteil ausgewählt ist aus der Gruppe bestehend aus Bindemitteln, Füllstoffen, Hilfsstoffen, Farbstoffen oder Färbungsmitteln, Parfüms, Stabilisatoren und/oder Fertigungsnebenprodukten, wobei das Verpackungsmaterial ein Etikett umfasst, welches angibt, dass das Produkt von Herstellern zum Formulieren von Bioziden für Abwasser, Umlauf-Kühlwassersysteme, Kühlwassersysteme mit einmaligem Durchsatz, Pasteurisierungsgeräte in Brauereien, Wasser für den Freizeit- und Erholungsbereich, Zellstoff-und Papiermühlensysteme, Luftreinigungssysteme, Luft- und Gaswäschersystemen oder Wasserspiele zu Dekorationszwekken oder Entkeimungsmitteln für harte Oberflächen oder irgendwelchen zwei oder mehr von diesen verwendet werden kann, wobei das Wasser für den Freizeit- und Erholungsbereich eines oder mehrere von Schwimmbädern, Heißwasserbütten und Wellness-Wassereinrichtungen (Spas) ist, und wobei das Etikett oder ein anderes Etikett, das mit dem Verpackungsmaterial zusammenhängt, angibt, dass Formulierer, die das Produkt verwenden, für die EPA-Registrierung ihrer formulierten Produkte verantwortlich sind, und wobei (a) die molare Menge des mindestens einen 1,3-Dibrom-5,5-dialkylhydantoins, die in ein wässriges Medium mit einem pH-Wert von mindestens etwa 8,0 eingebracht wird, kleiner als die molare Menge an N,N'-Bromchlor-5,5-dimethylhydantoin ist, die erforderlich wäre, um den gleichen Grad an mikrobiologischer Kontrolle in dem wässrigen Medium zu bewirken, (b) die Menge des mindestens einen 1,3-Dibrom-5,5-dialkylhydantoins, die in das wässrige Medium eingebracht wird, eine Menge an "freiem Chlor" freisetzt, die größer als die Menge an "freiem Chlor" ist, die durch eine äquimolare Menge an N,N'-Bromchlor-5,5-dimethylhydantoin in das wässrige Medium freigesetzt werden würde, und (c) die Menge an "freiem Chlor", die durch die Menge des mindestens einen 1,3-Dibrom-5,5-dialkylhydantoins freigesetzt wird, das in das wässrige Medium eingebracht wird, größer als die Menge an "freiem Chlor" ist, die laut Vorhersage durch jene Menge des mindestens einen 1,3-Dibrom-5,5-dialkylhydantoins auf Basis der Menge an "freiem Chlor" freigesetzt wird, die durch eine äquimolare Menge N,N'-Bromchlor-5,5-dimethylhydantoin in dem wässrigen Medium freigesetzt werden würde.

100. Fertigungsgegenstand nach Anspruch 99, bei dem die biozide Zusammensetzung aus mindestens 97 Gew.-% von einem oder mehreren 1,3-Dibrom-5,5-dialkylhydantoin(en) zusammengesetzt ist, wobei der inaktive Bestandteil/die inaktiven Bestandteile mindestens ein Bindemittel oder ein Fertigungsnebenprodukt oder beide umfassen, und wobei das Verpackungsmaterial ferner einen Aufkleber umfasst, der den Inhalt als Oxidationsmittel identifiziert.

101. Fertigungsgegenstand nach Anspruch 99, bei dem das eine oder die mehreren 1,3-Dibrom-5,5-dialkylhydantoin(e) aus der Gruppe bestehend aus 1,3-Dibrom-5-isobutyl-5-methylhydantoin, 1,3-Dibrom-5-n-propyl-5-methylhydantoin, 1,3-Dibrom-5-ethyl-5-methylhydantoin und Mischungen von irgendwelchen zwei oder allen dreien davon ausgewählt ist bzw. sind, wobei der inaktive Bestandteil/die inaktiven Bestandteile mindestens ein Bindemittel oder ein Fertigungsnebenprodukt oder beide umfasst bzw. umfassen, und wobei das Verpackungsmaterial ferner einen Aufkleber umfasst, der den Inhalt als Oxidationsmittel identifiziert.

102. Fertigungsgegenstand nach Anspruch 99, bei dem das eine oder die mehreren 1,3-Dibrom-5,5-dialkylhydantoin(e) 1,3-Dibrom-5,5-dimethylhydantoin ist, wobei der inaktive Bestandteil/die inaktiven Bestandteile mindestens ein Bindemittel oder ein Fertigungsnebenprodukt oder beide umfasst bzw. umfassen, und wobei das Verpackungsmaterial ferner einen Aufkleber umfasst, der den Inhalt als Oxidationsmittel identifiziert.

103. Fertigungsgegenstand, der ein Verpackungsmaterial und eine in dem Verpackungsmaterial enthaltene biozide Zusammensetzung umfasst, wobei die biozide Zusammensetzung als aktiven Bestandteil der Zusammensetzung mindestens 95 Gew.-% von einem oder mehreren 1,3-Dibrom-5,5-dialkylhydantoin(en), wobei eine der Alkylgruppen in der 5-Position eine Methylgruppe ist und die andere Alkylgruppe in der 5-Position im Bereich von 1 bis 4 Kohlenstoffatomen aufweist, als einzigem biozid aktiven Bestandteil/einzigen biozid aktiven Bestandteilen in der Zusammensetzung zusammengesetzt ist, wobei der Rest bis 100 Gew.%, soweit vorhanden, inaktiver Bestandteil/inaktive Bestandteile ist bzw. sind, wobei der inaktive Bestandteil ausgewählt ist aus der Gruppe bestehend aus Bindemitteln, Füllstoffen, Hilfsstoffen, Farbstoffen oder Färbungsmitteln, Parfüms, Stabilisatoren und/oder Fertigungsnebenprodukten, wobei das Verpackungsmaterial ein Etikett umfasst, welches angibt, dass das Produkt als biozides Mittel oder Desinfektionsmittel zur Verwendung in Pools, Wassereinrichtungen im Wellnessbereich (Spas) und Heißwasserbütten verwendet werden kann, wobei das Etikett oder ein anderes Etikett, das mit dem Verpakkungsmaterial zusammenhängt, angibt, dass (1) das Niveau an aktivem Brom in häuslichen Spas oder Heißwasserbütten zwischen 2 und 4 ppm und in kommerziellen Spas und Heißwasserbütten auf 3 bis 6 ppm gehalten werden sollte, wobei der pH-Wert des Wassers vor Behandlungsbeginn mit der bioziden Zusammensetzung auf 7,2 bis 7,6 eingestellt wird, und/oder (2) das Niveau des aktiven Broms in Schwimmbädern zwischen 1 und 4 ppm gehalten werden sollte, wobei der pH-Wert des Wassers vor Behandlungsbeginn mit der bioziden Zusammensetzung auf 7,2 bis 7,6 eingestellt wird, und wobei (a) die molare Menge des mindestens einen 1,3-Dibrom-5,5-dialkylhydantoins, die in ein wässriges Medium eingebracht wird, kleiner als die molare Menge an N,N'-Bromchlor-5,5-dimethylhydantoin ist, die erforderlich wäre, um den gleichen Grad an mikrobiologischer Kontrolle in dem wässrigen Medium zu bewirken, (b) die Menge des mindestens einen 1,3-Dibrom-5,5-dialkylhydantoins, die in das wässrige Medium eingebracht wird, eine Menge an "freiem Chlor" freisetzt, die größer als die Menge an "freiem Chlor" ist, die durch eine äquimolare Menge an N,N'-Bromchlor-5,5-dimethylhydantoin in das wässrige Medium freigesetzt werden würde, und (c) die Menge an "freiem Chlor", die durch die Menge des mindestens einen 1,3-Dibrom-5,5-dialkylhydantoins freigesetzt wird, das in das wässrige Medium eingebracht wird, größer als die Menge an "freiem Chlor" ist, die laut Vorhersage durch jene Menge des mindestens einen 1,3-Dibroms auf Basis der Menge an "freiem Chlor" freigesetzt würde, die durch eine äquimolare Menge N,N'-Bromchlor-5,5-dimethylhydantoin in dem wässrigen Medium freigesetzt werden würde.

104. Verfahren zum Bereitstellen eines Mittels zur mikrobiologischen Kontrolle bei der Behandlung von Wasser, bei dem ein Fertigungsgegenstand gemäß einem der Ansprüche 82, 85, 87, 88, 95, 96, 97, 98, 99, 100, 101, 102 oder 103 bereitgestellt wird.

105. Verwendung eines mikrobioziden Mittels, das gebildet wird, indem in Wasser mit einem pH-Wert von mindestens etwa 8,0 mindestens ein 1,3-Dibrom-5,5-dialkylhydantoin eingebracht wird, wobei eine der Alkylgruppen in der 5-Position eine Methylgruppe ist und wobei die andere Alkylgruppe in der 5-Position im Bereich von 1 bis 4 Kohlenstoffatomen aufweist, um eine Menge an "freiem Chlor" in dem Wasser zu erreichen, die größer als die Menge an "freiem Chlor" ist, die laut Vorhersage durch jene Menge des mindestens einen 1,3-Dibrom-5,5-dialkylhydantoins auf Basis der Menge an "freiem Chlor" freigesetzt würde, die in dem Medium durch eine äquimolare Menge N,N'-Bromchlor-5,5-dimethylhydantoin freigesetzt werden würde, ausgenommen dass 1,3-Dibrom-5,5-dimethylhydantoin als einziger mikrobiologisch aktiver Bestandteil in Form von Körnern gelöst wird, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist.

106. Verfahren zum Erhalten einer Menge an "freiem Chlor" in Wasser, die größer als die Menge an "freiem Chlor" ist, die laut Vorhersage durch jene Menge des mindestens einen 1,3-Dibrom-5,5-dialkylhydantoins auf Basis der Menge an "freiem Chlor" freigesetzt würde, die in dem Medium durch eine äquimolare Menge N,N'-Bromchlor-5,5-dimethylhydantoin freigesetzt werden würde, **dadurch gekennzeichnet, dass** in Wasser mit einem pH-Wert von mindestens etwa 8,0 mindestens ein 1,3-Dibrom-5,5-dialkylhydantoin eingebracht wird, wobei eine der Alkylgruppen in der 5-Position eine Methylgruppe ist und wobei die andere Alkylgruppe in der 5-Position im Bereich von 1 bis 4 Kohlenstoffatome aufweist, ausgenommen dass 1,3-Dibrom-5,5-dimethylhydantoin als einziger mikrobiologisch aktiver Bestandteil in Form von Körnern gelöst wird, wenn das wässrige Medium ein Kühlturmwasser mit einer Temperatur von 32,8°C (Rückkehrleitung) oder 28,3°C (zum Verfahren), einer Leitfähigkeit von 1,22 mS/cm, einem pH-Wert von etwa 9,1 oder 9,2, einer Alkalinität von 480 mg/l CaCO₃, einer Gesamthärte von 1 mg/l als CaCO₃ und einem Siliciumdioxidniveau von 100 mg/l ist, und ein Zusatzwasser mit einer Leitfähigkeit von 0,32 mS/cm, einem pH-Wert von 8,7, einer Alkalinität von 145 mg/l als CaCO₃, einer Gesamthärte von 3 mg/l CaCO₃ und einem Siliciumdioxidniveau von 28 mg/l ist, wobei (i) die molare Menge des mindestens einen 1,3-Dibrom-5,5-dialkylhydantoins, die in das wässrige Medium eingebracht wird, kleiner als die molare Menge N,N'-Bromchlor-5,5-dimethylhydantoin ist, die erforderlich wäre, um in dem Medium den gleichen Grad an mikrobiologischer Kontrolle zu bewirken, und (ii) die Menge des mindestens einen 1,3-Dibrom-5,5-dialkylhydantoins, die in das wässrige Medium eingebracht wird, eine Menge an "freiem Chlor" freisetzt, die größer als die Menge an "freiem Chlor" ist, die in dem Medium durch eine äquimolare Menge N,N'-Bromchlor-5,5-dimethylhydantoin freigesetzt würde.

## Revendications

1. Procédé de contrôle microbiologique dans un milieux aqueux ayant un pH d'au moins environ 8,0 et/ou d'éradication ou de réduction d'un biofilm sur une surface en contact avec un tel milieux aqueux, ledit procédé comprenant une étape consistant à introduire dans le milieux aqueux une quantité efficace d'un point de vue microbicide d'un agent microbicide constitué par au moins une 1,3-dibromo-5,5-dia,lkylhydantoïne, dans laquelle un des groupes alkyles en position 5 est un groupe méthyle, et dans laquelle l'autre groupe alkyle en position 5 a dans la plage de 1 à 4 atomes de carbone, à la condition de ne pas dissoudre la 1,3-dibromo-5,5-diméthylhydantoïne à titre d'unique ingrédient actif d'un point de vue microbiologique sous forme de granulés, dans le cas où le milieu aqueux est une tour de refroidissement d'eau, ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, dans lequel (i) la quantité molaire de ladite 1,3-dibromo-5,5-dialkylhydantoïne introduite dans ledit milieu aqueux est inférieure à la quantité molaire de N,N'-bromochloro-5,5-diméthylhydantoïne qui serait nécessaire pour réaliser le même niveau de contrôle microbiologique dans ledit milieu, (ii) la quantité de ladite au moins une 1,3-dibromo-5,5-dialkylhydantoïne introduite dans ledit milieux aqueux libère une quantité de « chlore libre » qui est supérieure à la quantité de « chlore libre » qui serait libérée dans ledit milieu par une quantité équimolaire de N,N'-bromochloro-5,5-diméthylhydantoïne, et (iii) la quantité de « chlore libre » libérée par la quantité de ladite au moins une 1,3-dibromo-5,5-dialkylhydantoïne introduite dans ledit milieux est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux par une quantité équimolaire de N,N'-bromochloro-5,5-diméthylhydantoïne.

2. Procédé selon la revendication 1, dans lequel ladite au moins une 1,3-dibromo-5,5-dialkylhydantoïne est la 1,3-dibromo-5-isobutyl-5-méthylhydantoïne.

3. Procédé selon la revendication 1, dans lequel ladite au moins une 1,3-dibromo-5,5-dialkylhydantoïne est la 1,3-dibromo-5-n-propyl-5-méthylhydantoïne.

4. Procédé selon la revendication 1, dans lequel ladite au moins une 1,3-dibromo-5,5-dialkylhydantoïne est la 1,3-dibromo-5-éthyl-5-méthylhydantoïne.

5. Procédé selon la revendication 1, dans lequel ladite au moins une 1,3-dibromo-5,5-dialkylhydantoïne est un mélange de deux ou d'un nombre supérieur desdites 1,3-dibromo-5,5-dialkylhydantoïnes.

6. Procédé selon la revendication 1, dans lequel ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne.

7. Procédé selon la revendication 1, dans lequel ledit milieux aqueux a un pH d'au moins environ 8,0, et dans lequel ladite au moins une 1,3-dibromo-5,5-dialkylhydantoïne est la 1,3-dibromo-5,5-diméthylhydantoïne.

8. Procédé selon la revendication 7, dans lequel la 1,3-dibromo-5,5-diméthylhydantoïne, étant utilisée a une taille moyenne de particules d'au moins environ 175 microns.

9. Procédé selon la revendication 7, dans lequel la 1,3-dibromo-5,5-diméthylhydantoïne, étant utilisée a une taille moyenne de particules d'au moins environ 200 microns.

10. Procédé selon la revendication 7, dans lequel la 1,3-dibromo-5,5-diméthylhydantoïne, étant utilisée a une taille moyenne de particules d'au moins environ 300 microns.

11. Procédé selon la revendication 7, dans lequel la 1,3-dibromo-5,5-diméthylhydantoïne, étant utilisée est sous la forme d'un article compacté par pression à mémoire de forme, produit par compactage par pression de solides particulaires de 1,3-dibromo-5,5-diméthylhydantoïne sans utiliser de liant ou sans traiter au préalable de tels solides pour accroître leur aptitude à être compactés.

12. Procédé selon la revendication 11, dans lequel les solides particulaires de 1,3-dibromo-5,5-diméthylhydantoïne, utilisés dans la production dudit article, ont, avant compactage, une taille moyenne de particules d'au moins environ 175 microns.

13. Procédé selon la revendication 7, dans lequel la 1,3-dibromo-5,5-diméthylhydantoïne, étant utilisée est sous la forme d'un article compacté par pression à mémoire de forme produit par compactage par pression de solides particulaires de 1,3-dibromo-5,5-diméthylhydantoïne en utilisant un liant.

14. Procédé selon la revendication 13, dans lequel les solides particulaires de 1,3-dibromo-5,5-diméthylhydantoïne, utilisés dans la production dudit article, ont, avant compactage, une taille moyenne de particules d'au moins environ 175 microns.

15. Procédé selon la revendication 7, dans lequel la 1,3-dibromo-5,5-diméthylhydantoïne, étant utilisée est sous la forme d'un produit compacté produit en utilisant en tant que liant une quantité d'une cire hydrocarbonée à base de polyoléfine synthétique micronisée et/ou d'une cire polyfluorocarbonée synthétique micronisée apte à produire ledit produit compacté, ladite cire étant compatible avec ladite 1,3-dibromo-5,5-diméthylhydantoïne.

16. Procédé selon la revendication 15, dans lequel ladite cire est une cire de polyéthylène ayant, avant compactage, une taille moyenne de particules qui n'est pas supérieure à environ 15 microns, une taille maximale de particules qui n'est pas supérieure à environ 40 microns, et une densité dans la plage d'environ 0,9 à environ 1,4 g par cc à 25 °C.

17. Procédé selon la revendication 15, dans lequel ladite cire est une cire de polyéthylène qui fond à une température dans la plage d'environ 109 °C à environ 111 °C.

18. Procédé selon la revendication 15, dans lequel ladite cire est une cire de polypropylène ayant, avant compactage, une taille moyenne de particules dans la plage d'environ 5,0 à environ 7,0 microns, une taille maximale de particules qui n'est pas supérieure à environ 22 microns, et une densité dans la plage d'environ 0,9 à environ 1,4 g par cc à 25 °C.

19. Procédé selon la revendication 15, dans lequel ladite cire est une cire de polypropylène qui fond à une température dans la plage d'environ 140 °C à environ 143 °C, qui a avant compactage une taille moyenne de particules dans la plage d'environ 5,0 à environ 7,0 microns, et qui a, avant compactage, une taille maximale de particules d'environ 22 microns.

20. Procédé selon la revendication 7, dans lequel la 1,3-dibromo-5,5-diméthylhydantoïne, étant utilisée est sous la forme d'un produit compacté produit- à partir de la 1,3-dibromo-5,5-diméthylhydantoïne ayant une taille moyenne de particules d'au moins 175 microns, et dans lequel ledit produit compacté est produit en utilisant en tant que liant une quantité d'amide gras saturé, habituellement solide, apte à produire ledit produit compacté.

21. Procédé selon la revendication 20, dans lequel la 1,3-dibromo-5,5-diméthylhydantoïne utilisée dans la production dudit produit compacté a une taille moyenne de particules d'au moins environ 200 microns.

22. Procédé selon la revendication 20, dans lequel ladite 1,3-dibromo-5,5-diméthylhydantoïne utilisée dans la production dudit produit compacté a une taille moyenne de particules d'au moins environ 300 microns.

23. Procédé pour exercer une activité microbicide dans de l'eau ayant un pH d'au moins environ 8,0, ledit procédé comprenant une étape consistant à procurer dans l'eau, en utilisant un agent microbicide constitué par au moins une 1,3-dibromo-5,5-dialkylhydantoïne dans laquelle un des groupes alkyles en position 5 est un groupe méthyle et dans laquelle l'autre groupe alkyle en position 5 a dans la plage de 1 à 4 atomes de carbone, avec la condition de ne pas dissoudre la 1,3-dibromo-5,5-diméthylhy-dantoïne à titre d'unique ingrédient actif d'un point de vue microbiologique sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, une quantité efficace d'un point de vue microbicide de « chlore libre » qui est supérieure à celle qui peut être prédite à partir de la quantité de « chlore libre » qui serait libérée dans ladite eau par une quantité équimolaire de N,N'-bromochloro-5,5-diméthylhydantoïne, tout en utilisant une quantité molaire inférieure de ladite au moins une 1,3-dibromo-5,5-dialkylhydantoïne à la quantité molaire de N,N'-bromochloro-5,5-diméthylhydantoïne qui serait nécessaire pour libérer dans ladite eau la même quantité efficace d'un point de vue microbicide de « chlore libre ».

24. Procédé selon la revendication 23, dans lequel ladite au moins une 1,3-dibromo-5,5-dialkylhydantoïne est la 1,3-dibromo-5-isobutyl-5-méthylhydantoïne.

25. Procédé selon la revendication 23, dans lequel ladite au moins une 1,3-dibromo-5,5-dialkylhydantoïne est la 1,3-dibromo-5-n-propyl-5-méthylhydantoïne.

26. Procédé selon la revendication 23, dans lequel ladite au moins une 1,3-dibromo-5,5-dialkylhydantoïne est la 1,3-dibromo-5-éthyl-5-méthylhydantoïne.

27. Procédé selon la revendication 23, dans lequel ladite au moins une 1,3-dibromo-5,5-dialkylhydantoïne est un mélange de deux ou d'un nombre supérieur desdites 1,3-dibromo-5,5-dialkylhydantoïnes.

28. Procédé selon la revendication 23, dans lequel ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne.

29. Procédé pour exercer une activité microbicide dans de l'eau ayant un pH d'au moins environ 8,0, ledit procédé comprenant une étape consistant à procurer dans une telle eau, en utilisant un agent microbicide constitué par au moins une 1,3-dibromo-5,5-dimétylhydantoïne, à la condition de ne pas dissoudre la 1,3-dibromo-5,5-diméthylhydantoïne à titre d'unique ingrédient actif d'un point de vue microbiologique sous forme de granulés dans le cas où le milieux aqueux est un château d'eau de refroidissement ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté-totale de 3 mg/l en équivalent de CaCO₃, et un taux de silice de 28 mg/l, une quantité efficace d'un point de vue microbicide de « chlore libre » qui est supérieure à celle qui peut être prédite à partir de la quantité de « chlore libre » qui serait libérée dans ladite eau par une quantité équimolaire de N,N'-bromochloro-5,5-diméthylhydantoïne, tout en utilisant une quantité en poids inférieure de 1,3-dibromo-5,5-diméthylhydantoïne à la quantité en poids de N,N'-bromochloro-5,5-diméthylhydantoïne qui serait nécessaire pour libérer dans ladite eau la même quantité efficace d'un point de vue microbicide de « chlore libre ».

30. Procédé selon la revendication 29, dans lequel la 1,3-dibromo-5,5-diméthylhydantoïne étant utilisée a une taille moyenne de particules d'au moins environ 175 microns.

31. Procédé selon la revendication 29, dans lequel la 1,3-dibromo-5,5-diméthylhydantoïne étant utilisée a une taille moyenne de particules d'au moins environ 200 microns.

32. Procédé selon la revendication 29, dans lequel la 1,3-dibromo-5,5-diméthylhydantoïne étant utilisée a une taille moyenne de particules d'au moins environ 300 microns.

33. Procédé selon la revendication 29, dans lequel la 1,3-dibromo-5,5-diméthylhydantoïne étant utilisée est sous la forme d'un article compacté par pression à mémoire de forme produit par compactage par pression de solides particulaires de 1,3-dibromo-5,5-diméthylhydantoïne en utilisant un liant.

34. Procédé selon la revendication 33, dans lequel les solides particulaires de 1,3-dibromo-5,5-diméthylhydantoïne utilisés dans la production dudit article ont, avant compactage, une taille moyenne de particules d'au moins environ 175 microns.

35. Procédé selon la revendication 29, dans lequel la 1,3-dibromo-5,5-diméthylhydantoïne étant utilisée est sous la forme d'un produit compacté produit en utilisant en tant que liant une quantité d'une cire hydrocarbonée à base de polyoléfine synthétique micronisée et/ou d'une cire polyfluorocarbonée synthétique micronisée apte à produire ledit produit compacté, ladite cire étant compatible avec ladite 1,3-dibromo-5,5-diméthylhydantoïne.

36. Procédé selon la revendication 35, dans lequel ladite cire est une cire de polyéthylène ayant, avant compactage, une taille moyenne de particules qui n'est pas supérieure à environ 15 microns, une taille maximale de particules qui n'est pas supérieure à environ 40 microns, et une densité dans la plage d'environ 0,9 à environ 1,4 g par cc à 25 °C.

37. Procédé selon la revendication 35, dans lequel ladite cire est une cire de polyéthylène qui fond à une température dans la plage d'environ 109 °C à environ 111 °C.

38. Procédé selon la revendication 35, dans lequel ladite cire est une cire de polypropylène ayant, avant compactage, une taille moyenne de particules dans la plage d'environ 5,0 à environ 7,0 microns, une taille maximale de particules qui n'est pas supérieure à environ 22 microns, et une densité dans la plage d'environ 0,9 à environ 1,4 g par cc à 25 °C.

39. Procédé selon la revendication 35, dans lequel ladite cire est une cire de polypropylène qui fond à une température dans la plage d'environ 140 °C à environ 143 °C, qui avant compactage a une taille moyenne de particules dans la plage d'environ 5,0 à environ 7,0 microns, et qui a, avant compactage, une taille maximale de particules d'environ 22 microns.

40. Procédé selon la revendication 29, dans lequel la 1,3-dibromo-5,5-diméthylhydantoïne étant utilisée est sous la forme d'un produit compacté produit à partir de la 1,3-dibromo-5,5-diméthylhydantoïne ayant une taille moyenne de particules d'au moins 175 microns et dans lequel ledit produit compacté est produit en utilisant an tant que liant une quantité d'amide gras saturé, habituellement solide, apte à produire ledit produit compacté.

41. Procédé selon la revendication 40, dans lequel la 1,3-dibromo-5,5-diméthylhydantoïne utilisée dans la production dudit produit compacté a une taille moyenne de particules d'au moins environ 200 microns.

42. Procédé selon la revendication 40, dans lequel la 1,3-dibromo-5,5-diméthylhydantoïne utilisée dans la production du produit compacté a une taille moyenne de particules d'au moins environ 300 microns.

43. Composition ayant une activité microbicide, ladite composition comprenant de l'eau ayant un pH d'au moins environ 8,0 à laquelle est ajoutée une quantité efficace d'un point de vue microbicide d'un agent microbicide choisi dans le groupe constitué par la 1,3-dibromo-5,5-diméthylhydantoïne, la 1,3-dibromo-5-éthyl-5-méthylhydantoïne, la 1,3-dibromo-5-n-propyl-5-méthylhydantoïne, la 1,3-dibromo-5-isopropyl-5-méthylhydantoïne, la 1,3-dibromo-5-n-butyl-5-méthylhydantoïne, la 1,3-dibromo-5-isobutyl-5-méthylhydantoïne, 1,3-dibromo-5-sec-butyl-5-méthylhydantoïne, la 1,3-dibromo-5-tert-butyl-5-méthylhydantoïne, et les mélanges de deux quelconques ou d'un nombre supérieur de celles-ci, à la condition de ne pas dissoudre la 1,3-dibromo-5,5-diméthylhydantoïne à titre d'unique ingrédient actif d'un point de vue microbicide sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, (i) la quantité molaire de ladite au moins une 1,3-dibromo-5,5-dialkylhydantoïne ajoutée étant inférieure à la quantité molaire de N,N'-bromochloro-5,5-diméthylhydantoïne qui serait nécessaire pour réaliser le même niveau d'activité microbiologique dans ledit milieu, (ii) la quantité de ladite au moins une 1,3-dibromo-5,5-dialkylhydantoïne ajoutée libérant une quantité de « chlore libre » qui est supérieure à la quantité de « chlore libre » qui serait libérée dans ladite eau par une quantité équimolaire de N,N'-bromochloro- 5,5-diméthylhydantoïne, et (iii) la quantité de « chlore libre » libérée par la quantité de ladite au moins une 1,3-dibromo-5,5-dialkylhydantoïne ajoutée étant supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ladite eau par une quantité équimolaire de N,N'-bromochloro-5,5-diméthylhydantoïne.

44. Composition selon la revendication 43, dans laquelle ledit agent microbicide est la 1,3-di-bromo-5-isobutyl-5-méthlhydantoïne.

45. Composition selon la revendication 43, dans laquelle ledit agent microbicide est la 1,3-di-bromo-5-n-propyl-5-méthlhydantoïne.

46. Composition selon la revendication 43, dans laquelle ledit agent microbicide est la 1,3-di-bromo-5-éthyl-5-méthlhydantoïne.

47. Composition selon la revendication 43, dans laquelle l'agent microbicide est un mélange de deux ou d'un nombre supérieur d'agents microbicides.

48. Composition selon la revendication 43, dans laquelle ledit agent microbicide est un mélange de la 1,3-dibromo-5,5-diméthylhydantoïne et de la 1,3-dibromo-5-éthyl-5-méthlhydantoïne.

49. Composition ayant une activité microbicide, ladite composition comprenant de l'eau ayant un pH d'au moins environ 8,0 qui contient une quantité efficace d'un point de vue microbicide de « chlore libre » procurée dans l'eau par un agent microbicide choisi dans le groupe constitué par la 1,3-dibromo-5,5-diméthylhydantoïne, la 1,3-dibromo-5-éthyl-5-méthylhydantoïne, la 1,3-dibromo-5-n-propyl-5-méthylhydantoïne, la 1,3-dibromo-5-isopropyl-5-méthylhydantoïne, la 1,3-dibromo-5-n-butyl-5-méthylhydantoïne, la 1,3-dibromo-5-isobutyl-5-méthylhydantoïne; 1,3-dibromo-5-sec-butyl-5-méthylhydantoïne, la 1,3-dibromo-5-tert-butyl-5-méthylhydantoïne, et les mélanges de deux quelconques ou d'un nombre supérieur de celles-ci, à la condition de ne pas dissoudre la 1,3-dibromo-5,5-diméthylhy-dantoïne à titre d'unique ingrédient actif d'un point de vue microbiologique sous forme de granulés dans le cas où le milieux aqueux est un château d'eau de refroidissement ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, (i) la quantité molaire de ladite au moins une 1,3-dibromo-5,5-dialkylhydantoïne procurant ladite quantité de « chlore libre » dans l'eau étant inférieure à la quantité molaire de N,N'-bromochloro-5,5-diméthylhydantoïne qui serait nécessaire pour réaliser le même niveau d'activité microbiologique dans ladite eau, (ii) la quantité de ladite au moins une 1,3-dibromo-5,5-dialkylhydantoïne procurant ladite quantité de « chlore libre » libérant une quantité de « chlore libre » qui est supérieure à la quantité de « chlore libre » qui serait libérée dans ladite eau par une quantité équimolaire de N,N'-bromochloro- 5,5-diméthylhydantoïne, et (iii) la quantité de « chlore libre » libérée par la quantité de ladite au moins une 1,3-dibromo-5,5-dialkylhy-dantoïne procurant ladite quantité de « chlore libre » étant supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ladite eau par une quantité équimolaire de N,N'-bromochloro-5,5-diméthylhydantoïne.

50. Composition selon la revendication 49, dans laquelle ledit agent microbicide est la 1,3-di-bromo-5-isobutyl-5-méthlhydantoïne.

51. Composition selon la revendication 49, dans laquelle ledit agent microbicide est la 1,3-di-bromo-5-n-propyl-5-méthlhydantoïne.

52. Composition selon la revendication 49, dans lequel ladite au moins une 1,3-dibromo-5,5-dialkylhydantoïne est la 1,3-dibromo-5-éthyl-5-méthylhydantoïne.

53. Composition selon la revendication 49, dans laquelle ledit agent microbicide est un mélange de deux ou d'un nombre supérieur desdits agents microbicides.

54. Composition selon la revendication 49, dans laquelle ledit agent microbicide est un mélange de la 1,3-dibromo-515-diméthylhydantoïne et de la 1,3-dibromo-5-éthyl-5-méthlhydantoïne.

55. Composition ayant une activité microbicide, ladite composition comprenant de l'eau ayant un pH d'au moins environ 8,0 à laquelle est ajoutée une quantité efficace d'un point de vue microbicide d'un agent microbicide qui est la 1,3-dibromo-5,5-diméthylhydantoïne, à la condition de ne pas dissoudre la 1,3-dibromo-5,5-diméthylhydantoïne à titre d'unique ingrédient actif d'un point de vue microbiologique sous forme de granulés dans le cas où le milieux aqueux est un château d'eau de refroidissement ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, (i) la quantité en poids de la 1,3-dibromo-5,5-diméthylhydantoïne ajoutée étant inférieure à la quantité en poids de N,N'-bromochloro-5,5-diméthylhydantoïne qui serait nécessaire pour réaliser le même niveau d'activité microbiologique dans ladite eau, (ii) la quantité de 1,3-di-bromo-5,5-dialkylhydantoïne ajoutée libérant une quantité de « chlore libre » qui est supérieure à la quantité de « chlore libre » qui serait libérée dans ladite eau par une quantité équimolaire de N,N'-bromochloro- 5,5-diméthylhydantoïne, et (iii) la quantité de « chlore libre » libérée par la quantité de 1,3-dibromo-5,5-diméthylhydantoïne ajoutée étant supérieure à la quantité de « chlore libre » qu'on s'attend à voir libérer par cette quantité de ladite au moins une 1,3-dibromo-5,5-diméthylhydantoïne par rapport à la quantité de « chlore libre » qui serait libérée dans ladite eau par une quantité équimolaire de N,N'-bromochloro-5,5-diméthyl-hydantoïne.

56. Composition ayant une activité microbicide, ladite composition comprenant de l'eau ayant un pH d'au moins environ 8,0 qui contient une quantité efficace d'un point de vue microbicide de « chlore libre » procurée dans l'eau par un agent microbicide qui est la 1,3-dibromo-5,5-diméthylhydantoïne, à la condition de ne pas dissoudre la 1,3-dibromo-5,5-diméthylhydantoïne à titre d'unique ingrédient actif d'un point de vue microbicide sous forme de granulés dans le cas où le milieux aqueux est un château d'eau de refroidissement ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, (i) la quantité en poids de ladite 1,3-dibromo-5,5-diméthylhydantoïne procurant ladite quantité de « chlore libre » dans l'eau étant inférieure à la quantité en poids de N,N'-bromochloro-5,5-diméthylhydantoïne qui serait nécessaire pour réaliser le même niveau d'activité microbiologique dans ladite eau, (ii) la quantité de 1,3-dibromo-5,5-diméthylhydantoïne procurant ladite quantité de « chlore libre » libèrent une quantité de « chlore libre » qui est supérieure à la quantité de « chlore libre » qui serait libérée dans ladite eau par une quantité équimolaire de N,N'-bromochloro- 5,5-diméthylhydantoïne, et (iii) la quantité de « chlore libre » libérée par la quantité de 1,3-dibromo-5,5-diméthylhydantoïne procurant ladite quantité de « chlore libre » étant supérieure à la quantité de « chlore libre » qu'on s'attend à voir libérer par cette quantité de ladite au moins une 1,3-dibromo-5,5-diméthylhydantoïne par rapport à la quantité de « chlore libre » qui serait libérée dans ladite eau par une quantité équimolaire de N,N'-bromochloro-5,5-diméthylhydantoïne.

57. Procédé de détermination d'une quantité d'un agent microbicide constitué par au moins une 1,3-dibromo-5,5-dialkylhydantoïne dans laquelle un des groupes alkyles en position 5 est un groupe méthyle et dans laquelle l'autre groupe alkyle en position 5 a dans la plage de 1 à 4 atomes de carbone, à utiliser dans le traitement microbicide de l'eau ayant un pH d'au moins environ 8,0, ledit procédé comprenant les étapes suivantes consistant à (i) déterminer les concentrations de « chlore libre » des échantillons de ladite eau contenant respectivement la N,N'-bromochloro-5,5-diméthylhydantoïne et ladite au moins 1,3-dibromo-5,5-dialkylhydantoïne, (ii) déterminer les valeurs de « chlore total » des échantillons de ladite eau contenant respectivement la N,N'-bromochloro-5,5-diméthylhydantoïne et ladite au moins 1,3-dibromo-5,5-dialkylhydantoïne, et (iii) déterminer respectivement pour la N,N'-bromochloro-5,5-diméthylhydantoïne et ladite au moins 1,3-dibromo-5,5-dialkylhydantoïne, l'importance relative de l'hydrolyse en espèces recensées comme « chlore libre », permettant ainsi à la quantité de ladite au moins une 1,3-dibromo-5,5-dialkylhydantoïne d'être utilisée pour procurer la dose prévue de « chlore libre » choisie pour réaliser ou maintenir un contrôle microbiologique dans l'eau qui est soumise au traitement.

58. Procédé selon la revendication 57, dans lequel ladite au moins une 1,3-dibromo-5,5-dialkylhydantoïne est la 1,3-dibromo-5-isobutyl-5-méthylhydantoïne.

59. Procédé selon la revendication 57, dans lequel ladite au moins une 1,3-dibromo-5,5-dialkylhydantoïne est la 1,3-dibromo-5-n-propyl-5-méthylhydantoïne.

60. Procédé selon la revendication 57, dans lequel ladite au moins une 1,3-dibromo-5,5-dialkylhydantoïne est la 1,3-dibromo-5-éthyl-5-méthylhydantoïne.

61. Procédé selon la revendication 57, dans lequel ladite au moins une 1,3-dibromo-5,5-dialkylhydantoïne est un mélange de deux ou d'un nombre supérieur desdites 1,3-dibromo-5,5-dialkylhydantoïnes.

62. Procédé selon la revendication 57, dans lequel ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne.

63. Procédé selon la revendication 57, dans lequel ladite au moins une 1,3-dibromo-5,5-dialkylhydantoïne est la 1,3-dibromo-5,5-diméthylhydantoïne.

64. Procédé selon la revendication 57, dans lequel la méthode de Hach 8021 (copyright 1997) pour la détermination du « chlore libre » et la méthode de Hach 8167 (copyright 1997) pour la détermination du « chlore total » sont utilisées pour les déterminations relatives à une quantité donnée d'eau.

65. Procédé selon la revendication 57, dans lequel la méthode de Hach 8021 (copyright 1997) pour la détermination du « chlore libre » et la méthode de Hach 8167 (copyright 1997) pour la détermination du « chlore total » sont utilisées pour les déterminations relatives à une quantité donnée d'eau.

66. Procédé pour procurer une activité biocide dans de l'eau ayant un pH d'au moins environ 8,0, ledit procédé comprenant une étape consistant à procurer dans une telle eau, en utilisant un agent microbicide constitué par au moins une 1,3-dibromo-5,5-dialkylhydantoïne dans laquelle un des groupes alkyles en position 5 est un groupe méthyle et dans laquelle l'autre groupe alkyle en position 5 a dans la plage de 1 à 4 atomes de carbone, à la condition de ne pas dissoudre la 1,3-dibromo-5,5-diméthylhy-dantoïne à titre d'unique ingrédient actif d'un point de vue microbicide sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, une quantité de « chlore libre » qui est supérieure à celle qui peut être prédite à partir de la quantité de « chlore libre » qui serait libérée dans ladite eau par une quantité équimolaire de N,N'-bromochloro-5,5-diméthylhydantoïne, comme il est possible de la déterminer par les tests comparatifs suivants consistant à :
a) déterminer la quantité d'espèces de ladite au moins 1,3-dibromo-5,5-dialkylhydantoïne et de la N,N'-bromochloro-5,5-diméthylhydantoïne qui sont recensées respectivement comme « chlore total » en utilisant la méthode de Hach 8167 (copyright 1997, au nom de Hach Company) ;
b) déterminer la quantité d'espèces de ladite au moins 1,3-dibromo-5,5-dialkylhydantoïne et de la N,N'-bromochloro-5,5-diméthylhydantoïne qui sont recensées respectivement comme « chlore libre » en utilisant la méthode de Hach 8021 (copyright 1997, au nom de Hach Company) ; et
c) déterminer respectivement pour ladite au moins 1,3-dibromo-5,5-dialkylhydantoïne et pour la N,N'-bromochloro-5,5-diméthylhydantoïne l'importance relative de l'hydrolyse en espèces recensées comme « chlore libre ».

67. Procédé selon la revendication 66, dans lequel ladite au moins une 1,3-dibromo-5,5-dialkylhydantoïne est la 1,3-dibromo-5-isobutyl-5-méthylhydantoïne.

68. Procédé selon la revendication 66, dans lequel ladite au moins une 1,3-dibromo-5,5-dialkylhydantoïne est la 1,3-dibromo-5-n-propyl-5-méthylhydantoïne.

69. Procédé selon la revendication 66, dans lequel ladite au moins une 1,3-dibromo-5,5-dialkylhydantoïne est la 1,3-dibromo-5-éthyl-5-méthylhydantoïne.

70. Procédé selon la revendication 66, dans lequel ladite au moins une 1,3-dibromo-5,5-dialkylhydantoïne est un mélange de deux ou d'un nombre supérieur desdites 1,3-dibromo-5,5-dialkylhydantoïnes.

71. Procédé selon la revendication 66, dans lequel ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne.

72. Procédé selon la revendication 66, dans lequel ladite au moins une 1,3-dibromo-5,5-dialkylhydantoïne est la 1,3-dibromo-5,5-diméthylhydantoïne.

73. Composition étant de l'eau ayant un pH d'au moins environ 8,0 dans laquelle une activité microbiologique et/ou de type biofilm est diminuée voire stoppée en y ajoutant une quantité de « chlore libre » produite dans l'eau par un agent microbicide qui est choisi dans le groupe constitué par la 1,3-dibromo-5,5-diméthylhydantoïne, la 1,3-dibromo-5-éthyl-5-méthylhydantoïne, la 1,3-dibromo-5-n-propyl-5-méthylhydantoïne, la 1,3-dibromo-5-isopropyl-5-méthylhydantoïne, la 1,3-dibromo-5-n-butyl-5-méthylhydantoïne, la 1,3-dibromo-5-isobutyl-5-méthylhydantoïne, la 1,3-dibromo-5-sec-butyl-5-méthylhydantoïne, la 1,3-dibromo-5-tert-butyl-5-méthylhydantoïne, et les mélanges de deux quelconques ou d'un nombre supérieur de celles-ci, à la condition de ne pas dissoudre la 1,3-dibromo-5,5-diméthylhydantoïne à titre d'unique ingrédient actif d'un point de vue microbiologique sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, dans laquelle la quantité de « chlore libre » effectivement présente dans l'eau est supérieure à celle qui peut être prédite à partir de la quantité de « chlore libre » qui serait procurée dans ladite eau par une quantité équimolaire de N,N'-bromochloro-5,5-diméthylhydantoïne (BCDMH), comme il est possible de la déterminer par les tests comparatifs suivants consistant à :
a) déterminer la quantité d'espèces de ladite au moins 1,3-dibromo-5,5-dialkylhydantoïne et de la BCDMH qui sont recensées respectivement comme « chlore total » en utilisant la méthode de Hach 8167 (copyright 1997, au nom de Hach Company) ;
b) déterminer la quantité d'espèces de la DBDAH et de la BCDMH qui sont recensées respectivement comme « chlore libre » en utilisant la méthode de Hach 8021 (copyright 1997, au nom de Hach Company) ; et
c) déterminer respectivement pour la DBDAH et la BCDMH l'importance relative de l'hydrolyse en espèces recensées comme « chlore libre ».

74. Composition selon la revendication 73, dans laquelle ledit agent microbicide est la 1,3-dibromo-5-isobutyl-5-méthylhydantoïne.

75. Composition selon la revendication 73, dans laquelle ledit agent microbicide est la 1,3-dibromo-5-n-propyl-5-méthylhydantoïne.

76. Composition selon la revendication 73, dans laquelle ledit agent microbicide est la 1,3-dibromo-5-éthyl-5-méthylhydantoïne.

77. Composition selon la revendication 73, dans laquelle ledit agent microbicide est un mélange de deux ou d'un nombre supérieur desdits agents microbicides.

78. Composition selon la revendication 73, dans laquelle ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne.

79. Composition selon la revendication 73, dans laquelle ladite au moins une 1,3-dibromo-5,5-dialkylhydantoïne est la 1,3-dibromo-5,5-diméthylhydantoïne.

80. Composition selon la revendication 73, dans laquelle ledit agent microbicide est choisi dans le groupe constitué par la 1,3-dibromo-5-isobutyl-5-méthylhydantoïne, la 1,3-dibromo-5-n-propyl-5-méthylhydantoïne, 1,3-dibromo-5-éthyl-5-méthylhydantoïne, la 1,3-dibromo-5,5-diméthylhydan-toïne, ou un mélange d'au moins deux quelconques de celles-ci.

81. Composition selon la revendication 73, dans laquelle ledit agent microbicide est la 1,3-dibromo-5,5-diméthylhydantoïne.

82. Article de la fabrication comprenant un matériau d'emballage et une composition biocide contenue dans ledit matériau d'emballage, dans lequel ladite composition biocide se compose (i) d'au moins une 1,3-dibromo-5,5-dialkylhydantoïne dans laquelle un des groupes alkyles en position 5 est un groupe méthyle et dans laquelle l'autre groupe alkyle en position 5 a dans la plage de 1 à 4 atomes de carbone, à titre d'unique ingrédient actif d'un point de vue biocide dans ladite composition et (ii) d'au moins un ingrédient inactif d'un point de vue biocide, dans lequel .ledit ingrédient inactif d'un point de vue biocide est choisi dans le groupe constitué par des liants, des charges, des excipients, des teintures ou colorants, des parfums, des stabilisateurs et/ou des sous-produits de fabrication ; **caractérisé en ce qu'**au moins 90 % en poids de ladite composition biocide représentent ladite au moins une 1,3-dibromo-5,5-dialkylhydantoïne ; et dans lequel ledit matériau d'emballage comprend au moins un label identifiant de manière convenable le nom du produit dans l'emballage, et au moins une étiquette identifiant les constituants comme étant un agent oxydant, dans lequel (a) la quantité molaire de ladite au moins une 1,3-dibromo-5,5-dialkylhydantoïne introduite dans un milieu aqueux, qui a un pH d'au moins environ 8,0, est inférieure à la quantité molaire de N,N'-bromochloro-5,5-diméthylhydantoïne qui serait nécessaire pour réaliser le même niveau de contrôle microbiologique dans ledit milieu aqueux, (b) la quantité de ladite au moins une 1,3-dibromo-5,5-dialkylhydantoïne introduite dans ledit milieux aqueux libère une quantité de « chlore libre » qui est supérieure à la quantité de « chlore libre » qui serait libérée dans ledit milieu par une quantité équimolaire de N,N'-bromochloro- 5,5-diméthylhydantoïne, et (c) la quantité de « chlore libre » libérée par la quantité de ladite au moins une 1,3-dibromo-5,5-dialkyl-hydantoïne introduite dans le milieux aqueux est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux aqueux par une quantité équimolaire de N,N'-bromochloro-5,5-diméthylhydantoïne.

83. Article de la fabrication selon la revendication 82, dans lequel ledit label, ou autre label, associé audit matériau d'emballage indique les dangers associés à la manipulation et à l'utilisation de la composition emballée.

84. Article de la fabrication selon la revendication 83, **caractérisé en ce** ledit au moins un ingrédient inactif d'un point de vue biocide comprend un liant ou un sous-produit de fabrication, ou les deux.

85. Article de la fabrication selon la revendication 84, dans lequel ledit label, ou autre label, associé-audit matériau d'emballage-indique que l'ingrédient actif de ladite composition biocide qui est contenue dans ledit matériau d'emballage consiste en une ou plusieurs desdites 1,3-dibromo-5,5-dialkylhydantoïnes effectivement contenues dans celles-ci.

86. Article de la fabrication selon la revendication 85, dans lequel ledit label, ou autre label, associé audit matériau d'emballage indique la proportion ou le pourcentage d'une ou de plusieurs desdites 1,3-dibromo-5,5-dialkylhydantoïnes dans ladite composition biocide contenue dans la composition emballée.

87. Article de la fabrication selon la revendication 86, dans lequel ledit label, ou autre label, associé audit matériau d'emballage indique la proportion ou le pourcentage des constituants inactifs dans la composition contenue dans ledit matériau d'emballage.

88. Article de la fabrication selon la revendication 86, dans lequel ledit label, ou autre label, associé audit matériau d'emballage inclut au moins l'un des suivants :
a) une description des dangers pour l'environnement associés au rejet de la composition dans l'environnement ;
b) une description des dangers physiques et chimiques et les instructions quant à la manière de les éviter ou au moins de réduire de tels dangers au moment de l'utilisation ;
c) des conseils pour conserver le produit et pour détruire le produit et les conteneurs ;
d) des conseils relatifs au traitement pratique et aux premiers secours à apporter en cas de contact de la composition avec les yeux ou la peau, ou dans le cas où la composition est ingérée (avalée) ou inhalée ;
e) des instructions d'utilisation, incluant, mais sans s'y limiter, les débits de doses associés aux modes d'utilisation spécifiés ; et
f) un numéro d'enregistrement EPA, un numéro EPA de l'établissement industriel et le nom et l'adresse du déposant.

89. Article de la fabrication selon la revendication 82, dans lequel ladite au moins une 1,3-dibromo-5,5-dialkylhydantoïne est la 1,3-dibromo-5-isobutyl-5-méthylhydantoïne, la 1,3-dibromo-5-n-propyl-5-méthylhydantoïne, ou la 1,3-dibromo-5-éthyl-5-méthylhydantoïne, et dans lequel ledit au moins un ingrédient inactif d'un point de vue biocide comprend un liant ou un sous-produit de fabrication, ou les deux.

90. Article de la fabrication selon la revendication 82, dans lequel ladite au moins une 1,3-dibromo-5,5-dialkylhydantoïne est un mélange d'au moins deux desdites 1,3-dibromo-5,5-diméthylhydantoïnes, et dans lequel ledit au moins un ingrédient inactif d'un point de vue biocide comprend un liant ou un sous-produit de fabrication, ou les deux.

91. Article de la fabrication selon la revendication 82, dans lequel ladite au moins une 1,3-dibromo-5,5-dialkylhydantoïne est un mélange de la 1,3-dibromo-5,5-diméthylhydantoïne et de la 1,3-dibromo-5-éthyl-5-méthylhydantoïne, et dans lequel ledit au moins un ingrédient inactif d'un point de vue biocide comprend un liant ou un sous-produit de fabrication, ou les deux.

92. Article de la fabrication selon la revendication 82, dans lequel ladite au moins une 1,3-dibromo-5,5-dialkylhydantoïne est la 1,3-dibromo-5,5-diméthylhydantoïne, et dans lequel ledit au moins un ingrédient inactif d'un point de vue biocide comprend un liant ou un sous-produit de fabrication, ou les deux.

93. Article de la fabrication selon l'une quelconque des revendications 89, 90, 91 ou 92, dans lequel ledit label, ou autre label, associé audit matériau d'emballage indique les dangers associés à la manipulation et à l'utilisation de la composition emballée.

94. Article de la fabrication selon l'une quelconque des revendications 89, 90, 91 ou 92, dans lequel ledit label, ou autre label, associé audit matériau d'emballage indique la proportion ou le pourcentage de la, ou des, 1,3-dibromo-5,5-dialkylhydantoïnes dans la composition biocide contenue dans la composition emballée et la proportion ou le pourcentage des ingrédients inactifs d'un point de vue biocide dans la composition contenue dans ledit matériau d'emballage.

95. Article de la fabrication comprenant un matériau d'emballage et une composition biocide qui est contenue dans ledit matériau d'emballage, dans lequel ladite composition biocide est formée d'au moins 95 % en poids d'une ou d'un nombre supérieur de 1,3-dibromo-5,5-dialkylhydantoïnes dans lesquelles un des groupes alkyles en position 5 est un groupe méthyle et dans lesquelles l'autre groupe alkyle en position 5 a dans la plage de 1 à 4 atomes de carbone, à titre d'unique ingrédient actif d'un point de vue biocide dans ladite composition, avec, lorsqu'il est présent, en quantité suffisante pour 100 en poids d'ingrédient(s) inactif(s), dans lequel ledit ingrédient inactif est choisi dans le groupe constitué par des liants, des charges, des excipients, des teintures ou colorants, des parfums, des stabilisateurs et/ou des sous-produits de fabrication, dans lequel ledit matériau d'emballage comprend un label qui indique que le produit peut être utilisé en tant que biocide pour les eaux usées, les systèmes de recyclage de refroidissement d'eau, les systèmes de refroidissement d'eau à passage unique, les appareils de pasteurisation en brasserie, les systèmes de broyage des pâtes à papier, les systèmes du type installations de lavage de l'air, les systèmes du type épurateurs d'air et de gaz, ou des fontaines décoratives, ou pour deux ou un nombre supérieur de ceux-ci, et dans lequel ledit label, ou autre label, associé audit matériau d'emballage indique que le débit de dose pour l'une des huit utilisations ou modes d'utilisation suivants est de nature à maintenir un niveau de brome de 0,5 à 5 ppm ou selon le besoin pour maintenir un contrôle biologique, et dans lequel (a) la quantité molaire de ladite au moins une 1,3-dibromo-5,5-dialkylhydantoïne introduite dans un milieu aqueux, qui a un pH d'au moins environ 8,0, est inférieure à la quantité molaire de N,N'-bromochloro-5,5-diméthylhydantoïne qui serait nécessaire pour réaliser le même niveau de contrôle microbiologique dans ledit milieu aqueux, (b) la quantité de ladite au moins une 1,3-dibromo-5,5-dialkylhy-dantoïne introduite dans le milieux aqueux libère une quantité de « chlore libre » qui est supérieure à la quantité de « chlore libre » qui serait libérée dans le milieu par une quantité équimolaire de N,N'-bromochloro- 5,5-diméthylhydantoïne, et (c) la quantité de « chlore libre » libérée par la quantité de ladite au moins une 1,3-dibromo-5,5-dialkylhydantoïne introduite dans le milieu aqueux est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux aqueux par une quantité équimolaire de N,N'-bromochloro-5,5-diméthylhydantoïne.

96. Article de la fabrication selon la revendication 95, dans lequel ladite composition biocide est formée d'au moins 95 % en poids de ladite une 1,3-dibromo-5,5-dialkylhydantoïne ou d'un nombre supérieur desdites 1,3-dibromo-5,5-dialkylhydantoïnes, dans lequel ledit ingrédient inactif ou lesdits ingrédients inactifs comprennent au moins un liant ou un sous-produit de fabrication, ou les deux, et dans lequel ledit matériau d'emballage comprend en outre une étiquette identifiant les constituants comme agent oxydant.

97. Article de la fabrication selon la revendication 95, dans lequel ladite au moins une 1,3-dibromo-5,5-dialkylhydantoïne ou plusieurs 1,3-dibromo-5,5-dialkylhydantoïnes sont choisies dans le groupe constitué par la 1,3-dibromo-5-isobutyl-5-méthylhydantoïne, la 1,3-dibromo-5-n-propyl-5-méthylhydantoïne, la 1,3-dibromo-5-éthyl-5-méthylhydantoïne, et les mélanges de deux quelconques ou de l'ensemble des trois de celles-ci, et dans lequel ledit ou lesdits ingrédients inactifs comprennent au moins un liant ou un sous-produit de fabrication, ou les deux, et dans lequel ledit matériau d'emballage comprend en outre une étiquette identifiant les constituants comme agent oxydant.

98. Article de la fabrication selon la revendication 95, dans lequel une ou plusieurs 1,3-dibromo-5,5-dialkylhydantoïnes sont des 1,3-dibromo-5,5-diméthylhydantoïnes, et dans lequel ledit ingrédient inactif ou lesdits ingrédients inactifs comprennent au moins un liant ou un sous-produit de fabrication, ou les deux, et dans lequel ledit matériau d'emballage comprend en outre une étiquette identifiant les constituants comme agents oxydants.

99. Article de la fabrication comprenant un matériau d'emballage et une composition biocide qui est contenue dans ledit matériau d'emballage, dans lequel ladite composition biocide est formée d'au moins 95 % en poids d'une 1,3-dibromo-5,5-dialkylhydantoïne ou d'un nombre supérieur de 1,3-dibromo-5,5-dialkylhydantoïnes dans lesquelles un des groupes alkyles en position 5 est un groupe méthyle et dans lesquelles l'autre groupe alkyle en position 5 a dans la plage de 1 à 4 atomes de carbone, à titre d'unique ingrédient actif d'un point de vue biocide dans ladite composition, avec, lorsqu'il est présent, en quantité suffisante pour 100 en poids d'ingrédient(s) inactif(s), dans lequel ledit ingrédient inactif est choisi dans le groupe constitué par des liants, des charges, des excipients, des teintures ou colorants, des parfums, des stabilisateurs et/ou des sous-produits de fabrication, dans lequel ledit matériau d'emballage comprend un label qui indique que le produit peut être utilisé par des fabricants dans la formulation de biocides pour les eaux usées, les systèmes de recyclage de refroidissement d'eau, les systèmes de refroidissement d'eau à passage unique, les appareils de pasteurisation en brasserie, les eaux pour activités récréatives, les systèmes de broyage des pâtes à papier, les systèmes du type installations de lavage de l'air, les systèmes du type épurateurs d'air et de gaz, les fontaines décoratives, ou les appareils de nettoyage de surfaces dures, ou pour deux ou un nombre supérieur de ceux-ci, ladite eau pour activité récréative provenant d'une ou de plusieurs piscines, bains à remous, et spas, et dans lequel ledit label, ou autre label, associé audit matériau d'emballage indique que les formulateurs utilisant le produit doivent se charger de l'enregistrement EPA pour leurs produits formulés, et dans lequel (a) la quantité molaire de ladite au moins une 1,3-dibromo-5,5-dialkylhydantoïne introduite dans un milieu aqueux, qui a un pH d'au moins environ 8,0, est inférieure à la quantité molaire de N,N'-bromochloro-5,5-diméthylhydantoïne qui serait nécessaire pour réaliser le même niveau de contrôle microbiologique dans ledit milieu aqueux, (b) la quantité de ladite au moins une 1,3-dibromo-5,5-dialkylhydantoïne introduite dans le milieux aqueux libère une quantité de «chlore libre» qui est supérieure à la quantité de « chlore libre » qui serait libérée dans ledit milieu par une quantité équimolaire de N,N'-bromochloro- 5,5-diméthylhydantoïne, et (c) la quantité de « chlore libre » libérée par la quantité de ladite au moins une 1,3-dibromo-5,5-dialkyl-hydantoïne introduite dans le milieux aqueux est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux aqueux par une quantité équimolaire de N,N'-bromochloro-5,5-diméthylhydantoïne.

100. Article de la fabrication selon la revendication 99, dans lequel ladite composition biocide est formée d'au moins 97 % en poids de ladite 1,3-dibromo-5,5-dialkylhydantoïne ou d'un nombre supérieur desdites 1,3-dibromo-5,5-dialkylhydantoïnes, dans lequel ledit ingrédient inactif ou lesdits ingrédients inactifs comprennent au moins un liant ou un sous-produit de fabrication, ou les deux, et dans lequel ledit matériau d'emballage comprend en outre une étiquette identifiant les constituants comme agents oxydant.

101. Article de la fabrication selon la revendication 99, dans lequel ladite 1,3-dibromo-5,5-dialkylhydantoïne ou plusieurs 1,3-dibromo-5,5-dialkylhydantoïnes sont choisies dans le groupe constitué par la 1,3-dibromo-5-isobutyl-5-méthylhydantoïne, la 1,3-dibromo-5-n-propyl-5-méthylhydantoïne, la 1,3-dibromo-5-éthyl-5-méthylhydantoïne, et les mélanges de deux quelconques ou de l'ensemble des trois de celles-ci, et dans lequel ledit ou lesdits ingrédients inactifs comprennent au moins un liant ou un sous-produit de fabrication, ou les deux, et dans lequel ledit matériau d'emballage comprend en outre une étiquette identifiant les constituants comme agent oxydant.

102. Article de la fabrication selon la revendication 99, dans lequel ladite 1,3-dibromo-5,5-dialkylhydantoïne ou plusieurs 1,3-dibromo-5,5-dialkylhydantoïnes sont des 1,3-dibromo-5,5-diméthylhydantoïnes, et dans lequel ledit ingrédient inactif ou lesdits ingrédients inactifs comprennent au moins un liant ou un sous-produit de fabrication, ou les deux, et dans lequel ledit matériau d'emballage comprend en outre une étiquette identifiant les constituants comme agent oxydant.

103. Article de la fabrication comprenant un matériau d'emballage et une composition biocide qui est contenue dans ledit matériau d'emballage, dans lequel ladite composition biocide comprend en tant qu'ingrédient actif de la composition au moins 95 % en poids d'une 1,3-dibromo-5,5-dialkylhydantoïne ou d'un nombre supérieur de 1,3-dibromo-5,5-dialkylhydantoïnes dans lesquelles un des groupes alkyles en position 5 est un groupe méthyle et dans lesquelles l'autre groupe alkyle en position 5 a dans la plage de 1 à 4 atomes de carbone, à titre d'unique ingrédient actif d'un point de vue biocide dans ladite composition, avec, lorsqu'il est présent, en quantité suffisante pour 100 en poids d'ingrédient(s) inactif(s), dans lequel ledit ingrédient inactif est choisi dans le groupe constitué par des liants, des charges, des excipients, des teintures ou colorants, des parfums, des stabilisateurs et/ou des sous-produits de fabrication, dans lequel ledit matériau d'emballage comprend un label qui indique que le produit peut être utilisé en tant qu'agent biocide ou désinfectant pour piscines, spas, et/ou bains à remous et dans lequel ledit label, ou autre label, associé audit matériau d'emballage indique que (1) le niveau de brome actif doit être maintenu entre 2 et 4 ppm dans les spas ou bains à remous résidentielles, le pH de l'eau étant ajusté à 7,2 - 7,6 avant de commencer le traitement avec la composition biocide ; et/ou (2) le niveau de brome actif doit être maintenu entre 1 et 4 ppm dans les piscines, le pH étant ajusté à 7,2 - 7,6 avant de commencer le traitement avec la composition biocide, et dans lequel (a) la quantité molaire de ladite au moins une 1,3-dibromo-5,5-dialkylhydantoïne, introduite dans un milieu aqueux, est inférieure à la quantité molaire de N,N'-bromochloro-5,5-diméthylhydantoïne qui serait nécessaire pour réaliser le même niveau de contrôle microbiologique dans ledit milieu aqueux, (b) la quantité de ladite au moins une 1,3-dibromo-5,5-dialkylhydantoïne introduite dans le milieux aqueux libère une quantité de « chlore libre » qui est supérieure à la quantité de « chlore libre » qui serait libérée dans ledit milieu par une quantité équimolaire de N,N'-bromochloro- 5,5-diméthylhydantoïne, et (c) la quantité de « chlore libre » libérée par la quantité de ladite au moins une 1,3-dibromo-5,5-dialkyl-hydantoïne introduite dans le milieux aqueux est supérieure à la quantité de « chlore libre » qu'on s'attend à voir libérer par cette quantité de ladite au moins une 1,3-dibromo par rapport à la quantité de « chlore libre » qui serait libérée dans ledit milieux aqueux par une quantité équimolaire de N,N'-bromochloro-5,5-diméthylhydantoïne.

104. Procédé pour procurer un agent de contrôle microbiologique à utiliser dans le traitement des eaux, ledit procédé comprenant la fourniture d'un article selon l'une quelconque des revendications 82, 85, 87, 88, 95, 96, 97, 98, 99, 100, 101, 102, ou 103.

105. Utilisation d'un agent microbicide produit en introduisant dans de l'eau ayant un pH d'au moins environ 8,0 au moins une 1,3-dibromo-5,5-dialkylhydantoïne dans laquelle un des groupes alkyles en position 5 est un groupe méthyle et dans laquelle l'autre groupe alkyle en position 5 a dans la plage de 1 à 4 atomes de carbone, pour procurer une quantité de « chlore libre » dans ladite eau qui est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux aqueux par une quantité équimolaire de N,N'-bromochloro-5,5-diméthylhydantoïne, à la condition de ne pas dissoudre la 1,3-dibromo-5,5-diméthylhydantoïne à titre d'unique ingrédient actif d'un point de vue microbiologique sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l.

106. Procédé pour procurer une quantité de « chlore libre » dans de l'eau qui est supérieure à la quantité de « chlore libre » qu'on s'attend à voir libérer par cette quantité de ladite au moins une 1,3-dibromo-5,5-dialkylhydantoïne par rapport à la quantité de « chlore libre » qui serait libérée dans ledit milieux par une quantité équimolaire de N,N'-bromochloro-5,5-diméthylhydantoïne, **caractérisé par** une étape consistant à introduire dans l'eau ayant un pH d'au moins environ 8,0 au moins une 1,3-dibromo-5,5-dialkylhy-dantoïne dans laquelle un des groupes alkyles en position 5 est un groupe méthyle et dans laquelle l'autre groupe alkyle en position 5 a dans la plage de 1 à 4 atomes de carbone, à la condition de ne pas dissoudre la 1,3-dibromo-5,5-diméthylhydantoïne à titre d'unique ingrédient actif d'un point de vue microbiologique sous forme de granulés dans le cas où le milieu aqueux est une tour de refroidissement d'eau ayant une température de 32,8 °C (conduite de retour) ou de 28,3 °C (vers le traitement), une conductivité de 1,22 mS/cm, un pH d'environ 9,1 ou 9,2, une alcalinité de 480 mg/l en équivalent de CaCO₃, une dureté totale de 1 mg/l en équivalent de CaCO₃ et un taux de silice de 100 mg/l, et une eau d'appoint ayant une conductivité de 0,32 mS/cm, un pH de 8,7, une alcalinité de 145 mg/l en équivalent de CaCO₃, une dureté totale de 3 mg/l en équivalent de CaCO₃, et un taux de silice de 28 mg/l, dans lequel (i) la quantité molaire de ladite au moins une 1,3-dibromo-5,5-dialkylhydantoïne, introduite dans ledit milieu aqueux, est inférieure à la quantité molaire de N,N'-bromochloro-5,5-diméthylhydantoïne qui serait nécessaire pour réaliser le même niveau de contrôle microbiologique dans ledit milieu, et (ii) la quantité de ladite au moins une 1,3-dibromo-5,5-dialkylhydantoïne introduite dans ledit milieux aqueux libère une quantité de « chlore libre » qui est supérieure à la quantité de « chlore libre » qui serait libérée dans ledit milieu par une quantité équimolaire de N,N'-bromochloro- 5,5-diméthylhydantoïne.
